(19) Europäisches Patentamt
European Patent Office
Office européen des brevets

(11) **EP 4 559 948 A1**

(12) **EUROPEAN PATENT APPLICATION**
published in accordance with Art. 153(4) EPC

(43) Date of publication:
**28.05.2025 Bulletin 2025/22**

(21) Application number: **23857589.8**

(22) Date of filing: **25.07.2023**

(51) International Patent Classification (IPC):
***C08G 18/48*** *(2006.01)* ***C08G 65/26*** *(2006.01)*
***H01M 8/2475*** *(2016.01)* ***C08G 65/30*** *(2006.01)*
***C08G 101/00*** *(2006.01)*

(52) Cooperative Patent Classification (CPC):
**C08G 18/7671; C08G 18/2063; C08G 18/3275; C08G 18/4841; C08G 18/4883; C08G 18/6688; C08G 65/26; C08G 65/30; H01M 8/2475;**
C08G 2110/0083

(86) International application number:
**PCT/KR2023/010766**

(87) International publication number:
**WO 2024/043553 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
**22.08.2022 KR 20220105088**
**28.03.2023 KR 20230040582**
**28.03.2023 KR 20230040583**
**04.04.2023 KR 20230043941**
**10.04.2023 KR 20230047087**
**14.04.2023 KR 20230049465**
**30.05.2023 KR 20230069206**

(71) Applicant: **PUcore co., ltd.**
**Ulsan 44782 (KR)**

(72) Inventors:
- **LEE, Byeong Uk**
  **Seoul 03142 (KR)**
- **SHIM, Jae Woo**
  **Seoul 03142 (KR)**
- **AHN, Jun Tae**
  **Seoul 03142 (KR)**
- **LEE, Joon Mo**
  **Seoul 03142 (KR)**
- **KWON, Soo Mi**
  **Seoul 03142 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **POLYOL COMPOSITION AND PREPARATION METHOD THEREFOR, COMPOSITION FOR POLYURETHANE PREPARATION COMPRISING POLYOL COMPOSITION, AND BATTERY MODULE**

(57) A polyol composition, a composition for polyurethane preparation comprising the polyol composition, and a battery module according to the present invention comprise a compound represented by chemical formula 1 (see the description of the invention). In addition, the polyol composition according to the present invention comprises a first unit derived from at least one type of 1,4:3,6-dianhydrohexitol and a second unit derived from an alkylene oxide, and has a degree of unsaturation of 0.02 meq/g or less according to the following measurement method (see the description of the invention).

【FIG. 1】

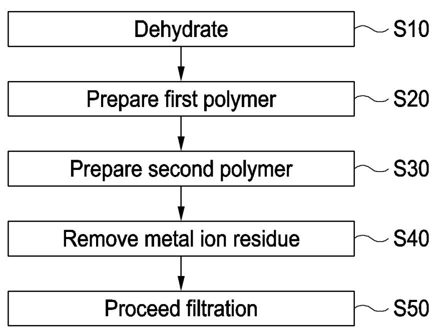


EP 4 559 948 A1

## Description

[Technical Field]

The present invention relates to a polyol composition, a method of preparing the same, a composition for preparing polyurethane including the polyol composition and a battery module including the polyol composition.

[Background Art]

Polyurethane foam has excellent insulation properties and flame retardancy. This polyurethane foam is used in various fields such as packaging boxes, building panels, home appliances, packaging materials, building interior materials, and insulation materials. Polyurethane foam can be manufactured by foaming polyurethane, and polyurethane can be manufactured by polyaddition reaction of polyol and isocyanate.

Polyol is a liquid polymer substance with two or more alcohol groups (-OH) bonded to the end of its hydrocarbon chain. Polyol is usually manufactured from petroleum-based raw materials. However, the demand for eco-friendly and renewable materials is increasing due to recent issues such as the depletion of petroleum resources and the reduction of greenhouse gas emissions related to environmental protection. Anhydrous alcohol is an environmentally friendly substance derived from renewable natural resources, and much research has been conducted on its ability to improve the properties of polyurethane. Among anhydrous alcohols, 1,4:3,6-dianhydrohexitol, which is derived from biomass such as corn, wheat, and sugar and contains polysaccharides as its constituent, is widely used as a raw material for polyol.

[Disclosure]

[Technical Problem]

Therefore, the present invention has been made in view of the above problems, and it is one object of the present invention to provide a polyol composition having excellent reactivity with isocyanate and allowing excellent hardness and appearance quality of polyurethane foam manufactured therefrom, a method of preparing the polyol composition, a composition for preparing polyurethane including the polyol composition and a battery module including the polyol composition.

[Technical Solution]

In accordance with another aspect of the present invention, provided is

In accordance with an aspect of the present invention, the above and other objects can be accomplished by the provision of a polyol composition, including a compound represented by Formula 1 below:

[Formula 1]

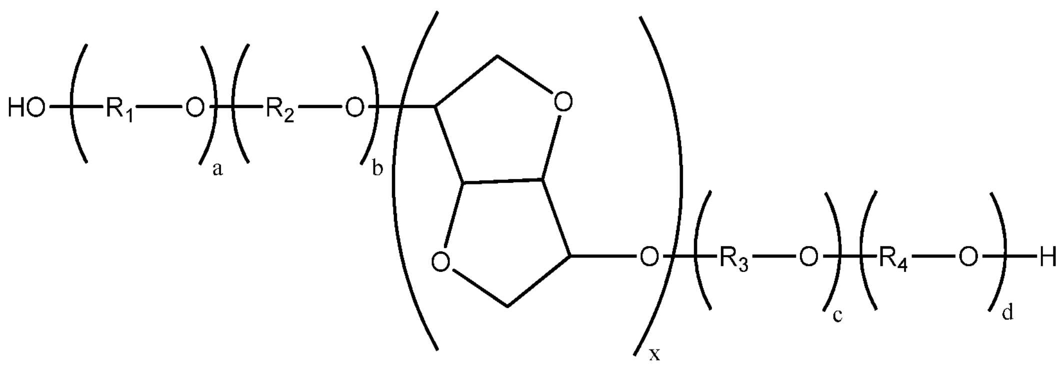

where $R_1$ and $R_4$ are each independently a substituted or unsubstituted linear alkylene group having 2 to 10 carbon atoms, $R_2$ and $R_3$ are each independently a substituted or unsubstituted branched alkylene group having 3 to 10 carbon atoms, x is an integer of 1 to 10, a and d are each independently an integer of 1 to 6, b and c are each independently an integer of 0 to 30, and b+c is an integer of 1 to 60.

In an embodiment of the present invention, the compound represented by Formula 1 may include a unit derived from at least one 1,4:3,6-dianhydrohexitol.

In an embodiment of the present invention, $R_1$ and $R_4$ may be each independently a substituted or unsubstituted ethylene group.

In an embodiment of the present invention, $R_2$ and $R_3$ may be each independently a substituted or unsubstituted propylene group.

In an embodiment of the present invention, a ratio of (a+d):(b+c) may be 1:1.5 to 1:6.

In an embodiment of the present invention, the compound represented by Formula 1 may be a compound represented by Formula 2 below:

[Formula 2]

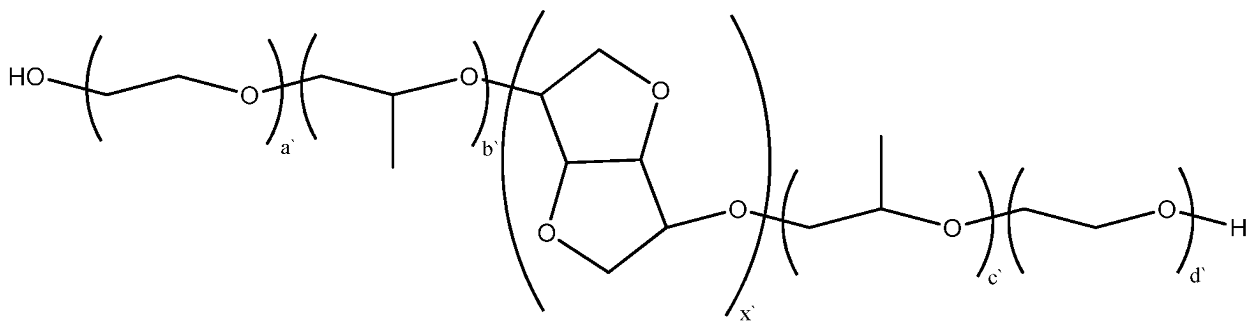

where x' is an integer of 1 to 5, a' and d' are each independently an integer of 1 to 3, and b' and c' are each independently an integer of 1 to 18.

In an embodiment of the present invention, the polyol composition may have an acid value of 0.0005 mgKOH/g to 0.0100 mgKOH/g.

In an embodiment of the present invention, the polyol composition may have a number average molecular weight (Mn) of 300 g/mol to 12,000 g/mol.

In an embodiment of the present invention, the polyol composition may have a polydispersity index (PDI) of 1.0 to 1.3.

In accordance with another aspect of the present invention, provided is a polyol composition, including; a first unit derived from at least one 1,4:3,6-dianhydrohexitol; and a second unit derived from alkylene oxide, wherein a degree of unsaturation according to a measurement method below is 0.02 meq/g or less:

<Measurement method>

1) A first flask containing 30 g of the polyol composition and a second flask without the polyol composition are prepared, and 50 ml of mercuric acetate is fed into each of the first flask and the second flask, followed by stirring for 30 minutes.
2) 9 g of sodium bromide (NaBr) is added to each of the first flask and the second flask, followed by stirring for 30 minutes.
3) 0.5 ml of a 1% phenolphthalein indicator is added to each of the first flask and the second flask, followed by titrating with 0.1 N potassium hydroxide (KOH).
4) A degree of unsaturation is calculated according to Equation 1 below:

[Equation 1]

$$\text{Degree of unsaturation (meq/g)} = (V_s \times V_b \times 0.1 \times F) / M$$

where $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

In an embodiment of the present invention, the 1,4:3,6-dianhydrohexitol may include isosorbide.

In an embodiment of the present invention, the second unit derived from alkylene oxide may include a substituted or unsubstituted linear alkylene group having 2 to 10 carbon atoms.

In an embodiment of the present invention, the polyol composition may include a compound represented by Formula 3 below:

[Formula 3]

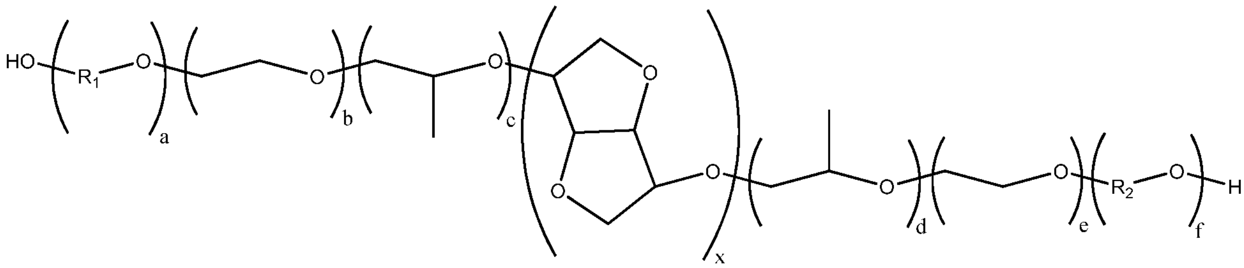

where $R_1$ and $R_2$ are each independently a substituted or unsubstituted alkylene group having 2 to 10 carbon atoms, a and f are each independently an integer of 1 to 60, b and e are each independently an integer of 1 to 6, c and d are each independently an integer of 1 to 30, and x is an integer of 1 to 5.

In an embodiment of the present invention, $R_1$ and $R_2$ in Formula 3 may be each independently a substituted or unsubstituted branched alkylene group having 3 to 10 carbon atoms.

In an embodiment of the present invention, $R_1$ and $R_2$ in Formula 3 may be each independently a polymer where a substituted or unsubstituted linear alkylene group having 2 to 10 carbon atoms, and a substituted or unsubstituted branched alkylene group having 3 to 10 carbon atoms are randomly polymerized.

[Advantageous effects]

Since a polyol composition according to the present invention includes a compound that can be prepared from renewable natural resources, it is eco-friendly and has an energy-saving effect.

Since the polyol composition according to the present invention includes a compound including a linear alkylene group and branched alkylene group in a block copolymer shape, the content of hydroxyl group (-OH) in primary alcohol is high, compared to existing polyols, thereby having excellent reactivity with isocyanate. Accordingly, polyurethane foam produced from the polyol composition can have mechanical properties and processability equivalent to or higher than a polyurethane foam manufactured from an existing petroleum-based polyol composition.

Since the polyol composition according to the present invention has a low APHA color value, it can be applied to industries that require product transparency.

Color change in the polyol composition according to the present invention can be minimized even when exposed to a high-temperature environment, so that the product reliability regarding color can be secured when storing or transporting the polyol composition.

The polyol composition according to the present invention exhibits a low acid value, so that the activity of a catalyst used in the production of polyurethane foam is not reduced, and the reactivity between the polyol composition and an isocyanate-based composition is improved.

The polyol composition according to the present invention has excellent reactivity with isocyanate due to the greatly reduced content of monol. Accordingly, when manufacturing a polyurethane resin from the polyol composition, crosslinking and high-molecular-weight formation are smoothly performed, thereby improving the physical properties of the polyurethane resin.

The polyol composition according to the present invention includes a compound in which a ratio of a linear

alkylene group to a branched alkylene group is controlled, so that the surface appearance of polyurethane foam produced from the polyol composition is excellent.

A method of preparing polyether polyol according to the present invention has the effect of greatly reducing the content of monol that is a product, thereby achieving excellent reactivity with isocyanate. Accordingly, when manufacturing polyurethane resin, crosslinking and high-molecular-weight formation are smoothly performed, which has the effect of improving the physical properties of polyurethane resin.

The polyether polyol according to the present invention has a high primary alcohol content compared to existing polyols, thereby having excellent reactivity with isocyanate. Therefore, crosslinking and high-molecular-weight formation are smoothly performed when producing polyurethane foam from the polyether polyol, thereby improving the physical properties of the polyurethane foam.

[Description of Drawings]

FIG. 1 is a flowchart briefly illustrating a process of preparing a polyol composition according to a first example.
FIG. 2 is a sectional view briefly illustrating a battery module according to the first example.
FIG. 3 illustrates the $^{13}C$ NMR spectrum of a compound prepared in Preparation Example 1-1.
FIG. 4 illustrates the $^{13}C$ NMR spectrum of a compound prepared in Preparation Example 1-6.
FIG. 5 is a flowchart briefly illustrating a process of preparing a polyol composition according to a third example.
FIG. 6 is a flowchart briefly illustrating a process of preparing a polyol composition according to a fourth example.
FIG. 7 is a flowchart briefly illustrating a process of preparing polyether polyol according to a fifth example.
FIG. 8 is a flowchart specifically illustrating steps for preparing a first polymer of the fifth example.
FIG. 9 is a flowchart briefly illustrating a process of preparing polyether polyol of a sixth example.
FIG. 10 illustrates the $^{13}C$ NMR spectrum of polyether polyol produced in Manufacturing Example 6-1.
FIG. 11 illustrates the $^{13}C$ NMR spectrum of polyether polyol produced in Comparative Manufacturing Example 6-1.

[Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term ’about’ in all cases unless otherwise specified.

<Polyol composition according to first example>

A polyol composition according to the present invention may include a compound represented by Formula 1 below:

[Formula 1]

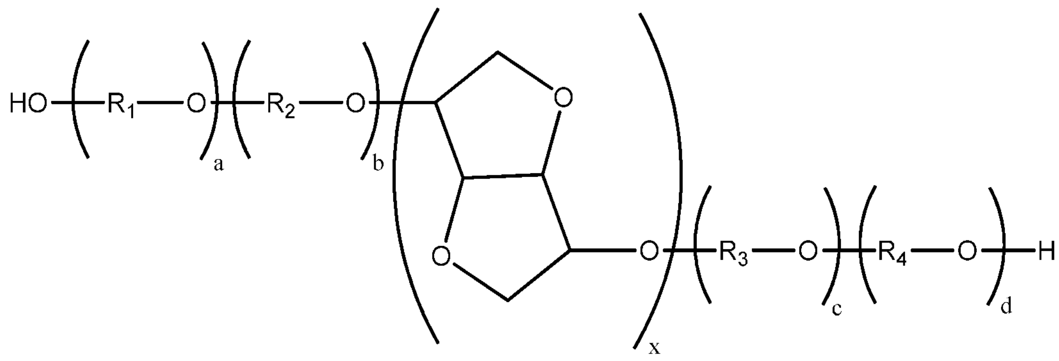

In Formula 1, $R_1$ and $R_4$ are each independently a substituted or unsubstituted linear alkylene group having 2 to 10 carbon atoms, $R_2$ and $R_3$ are each independently a substituted or unsubstituted branched alkylene group having 3 to 10 carbon atoms, x is an integer of 1 to 10, a and d are each independently an integer of 1 to 6, b and c are each independently an integer of 0 to 30, and b+c is an integer of 1 to 60.

The compound represented by Formula 1 may include a parent structure that is a unit derived from at least one 1,4:3,6-dianhydrohexitol. The 1,4:3,6-dianhydrohexitol may include isosorbide.

The isosorbide may be obtained by the dehydration reaction of D-sorbitol that is a renewable natural resource. Since the polyol composition of the present invention includes the compound, it is eco-friendly and has an energy-saving effect.

$R_1$ and $R_4$ may be each independently a substituted or unsubstituted ethylene group. $R_1$ and $R_4$ may be derived from a substituted or unsubstituted linear alkylene group oxide having 2 to 10 carbon atoms. Preferably, $R_1$ and $R_4$ may be each independently an ethylene group

$R_2$ and $R_3$ may be each independently a substituted or unsubstituted propylene group.
$R_2$ and $R_3$ may be derived from a substituted or unsubstituted branched alkylene group oxide having 3 to 10 carbon atoms. Preferably, $R_2$ and $R_3$ may be each independently a propylene group.

The compound represented by Formula 1 may have a block copolymer shape wherein a propylene group derived from the branched alkylene group is polymerized to a parent structure derived from at least one 1,4:3,6-dianhydrohexitol to form a block, and an ethylene group derived from the linear alkylene group is polymerized to the propylene group to form a block.

In this way, a block having an ethylene group polymerized thereto is formed at both ends of the compound represented by Formula 1, so that the content of hydroxyl groups (-OH) of the primary alcohol is higher than that of existing polyol compounds, thereby having excellent reactivity with isocyanate. In addition, a polyurethane foam containing the compound may implement mechanical properties and processability equivalent to or higher than a polyurethane foam manufactured from an existing petroleum-based polyol composition.

A ratio of (a+d):(b+c) may be 1:1.5 to 1:6. Preferably, the ratio of (a+d):(b+c) may be 1:2 to 1:6, 1:2.5 to 1:6, or 1:3 to 1:6. The (a+b) and (c+d) are each independently 3 to 50. Preferably, the (a+b) and (c+d) are each independently 3 to 30, 3 to 20, 5 to 20, 5 to 10, or 5 to 9.

When the range is satisfied, the polyurethane foam containing the compound may have improved hardness, reduced permanent compression set, and excellent appearance due to a smooth surface.

In addition, when an appropriate level of Compression Force Deformation (CFD) is achieved and thus polyurethane foam is applied to a battery module, a volume change due to the expansion of battery cells may be buffered so that a volume constant may be maintained, thereby improving product stability. The CFD is a parameter that represents a repulsive force when a measurement target is compressed.

The CFD may be evaluated by measuring a repulsive force when polyurethane foam is cut into 5 cm $\times$ 5 cm sizes at room temperature and compressed using a device such as a Universal Testing Machine (UTM). For example, the repulsive force when the polyurethane foam is compressed by 25% may be evaluated by a CFD 25% value, and a desirable CFD 25% value may have a range of about more than 0.06 $kg/cm^2$ to less than 0.15 $kg/cm^2$. In addition, the repulsive force when the polyurethane foam is compressed by 50% may be evaluated by a CFD 50% value, and a desirable CFD 50% value may have a range of more than about 0.10 $kg/cm^2$ and less than about 0.20 $kg/cm^2$.

The compound represented by Formula 1 may be a compound represented by Formula 2 below:

[Formula 2]

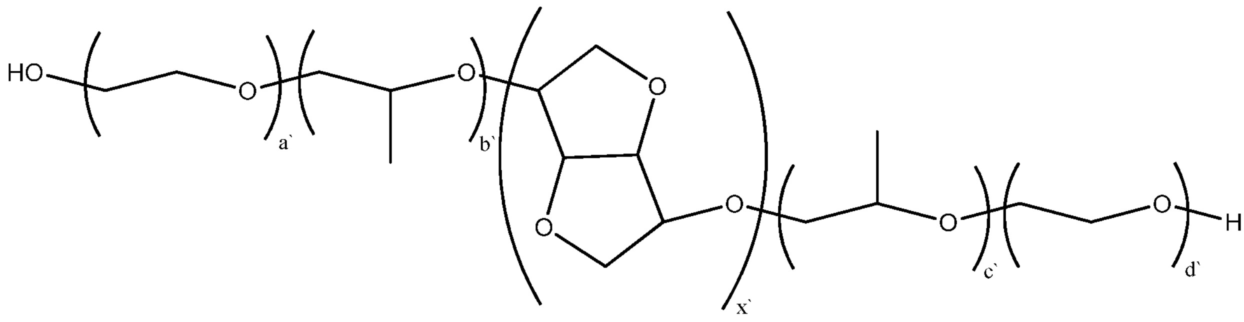

In Formula 2, x' is an integer of 1 to 5, a' and d' are each independently an integer of 1 to 3, and b' and c' are each independently an integer of 1 to 18.

Specifically, compound types represented by Formula 2 below may be represented by compounds of Formulas A to I below:

[Formula A]

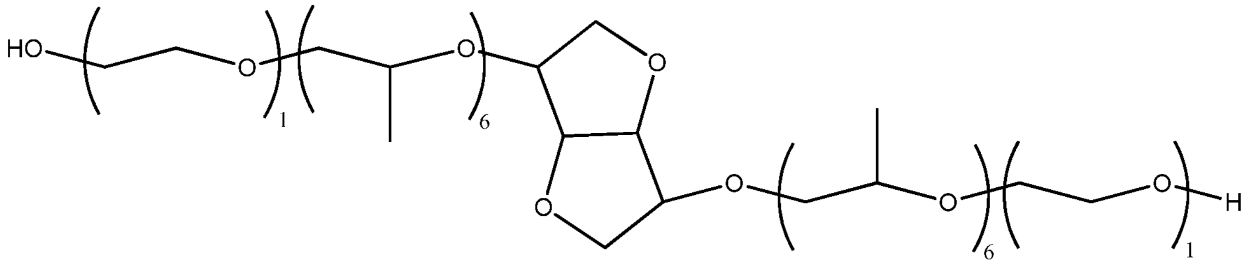

[Formula B]

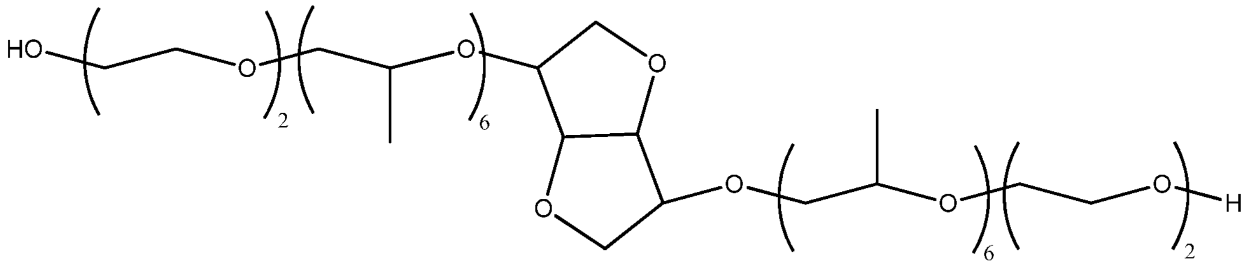

[Formula C]

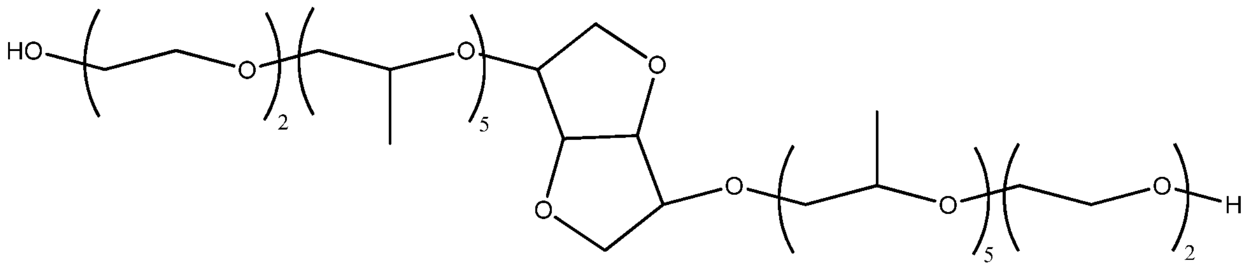

[Formula D]

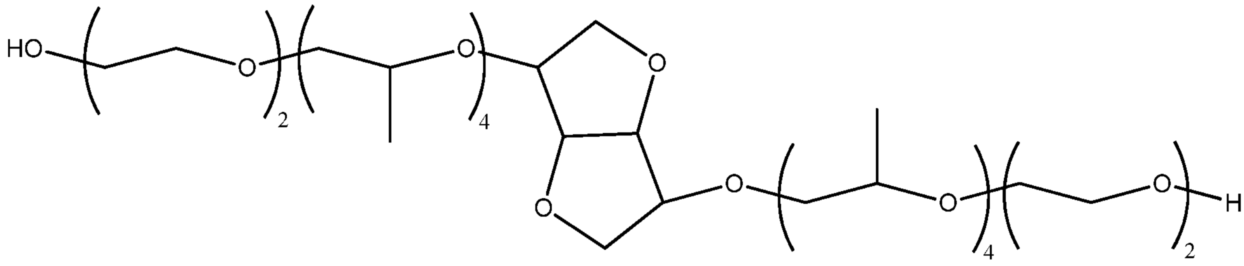

[Formula E]

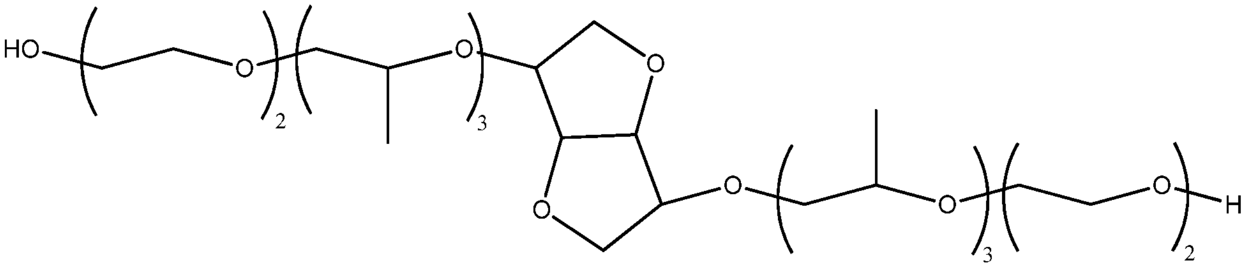

[Formula F]

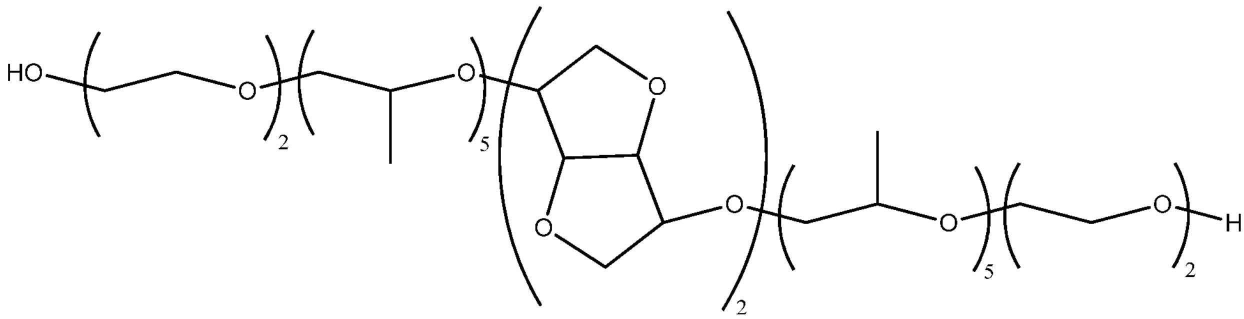

[Formula G]

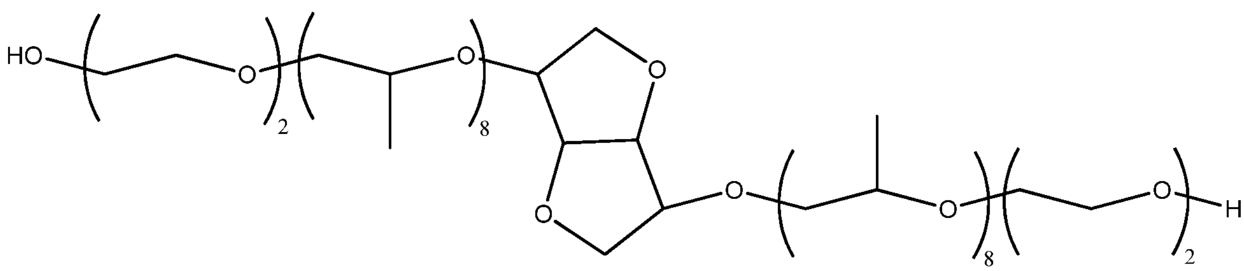

[Formula H]

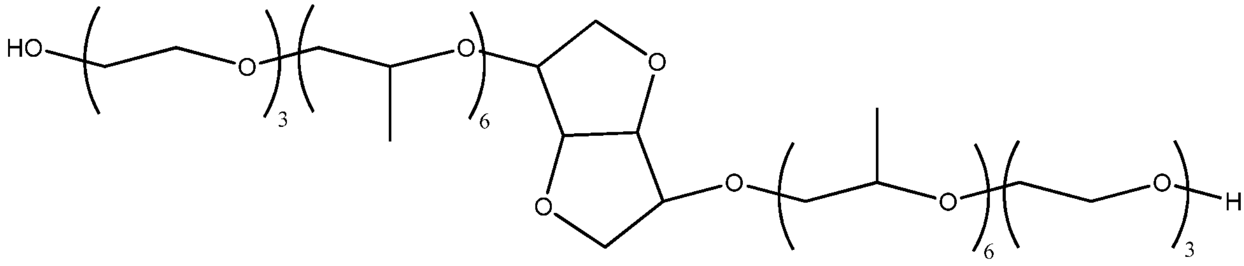

[Formula I]

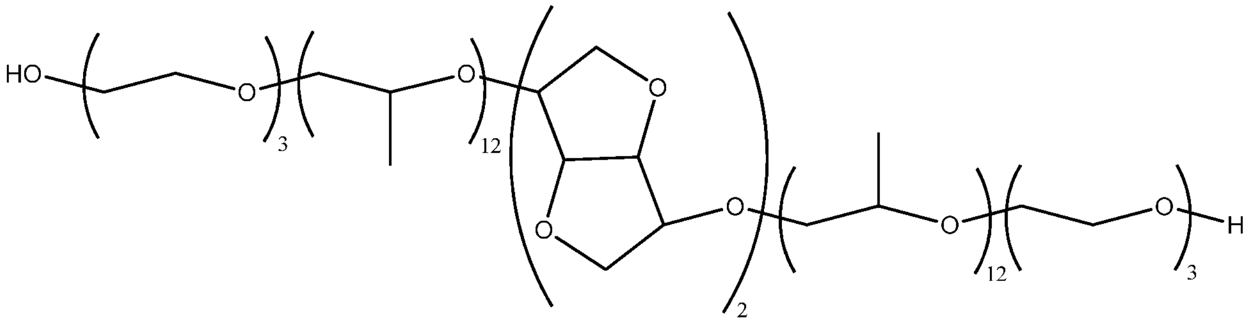

[Formula J]

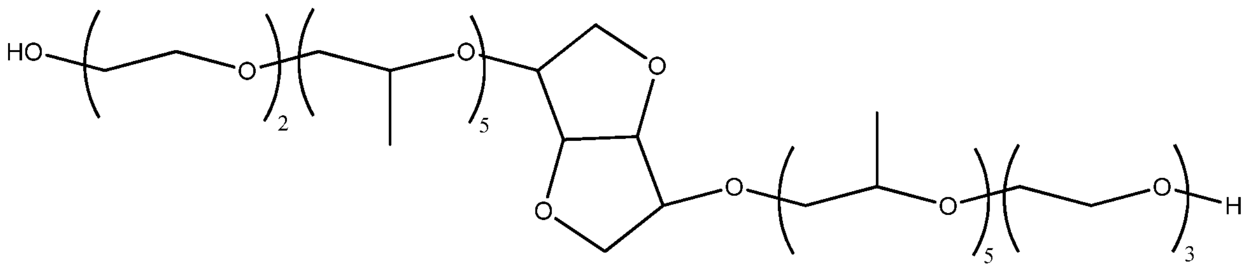

[Formula K]

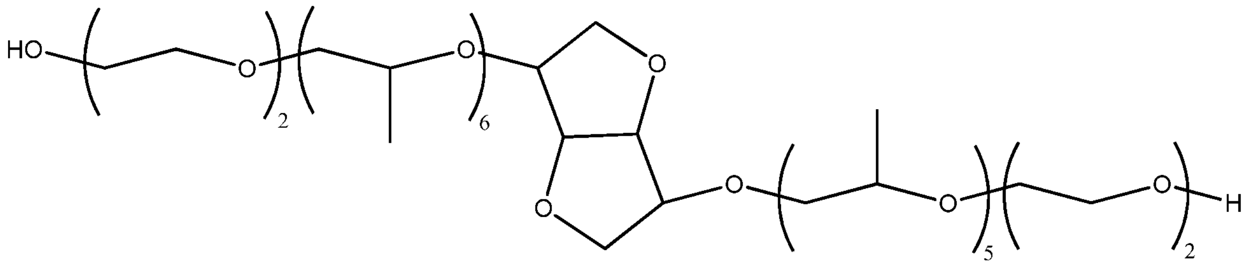

[Formula L]

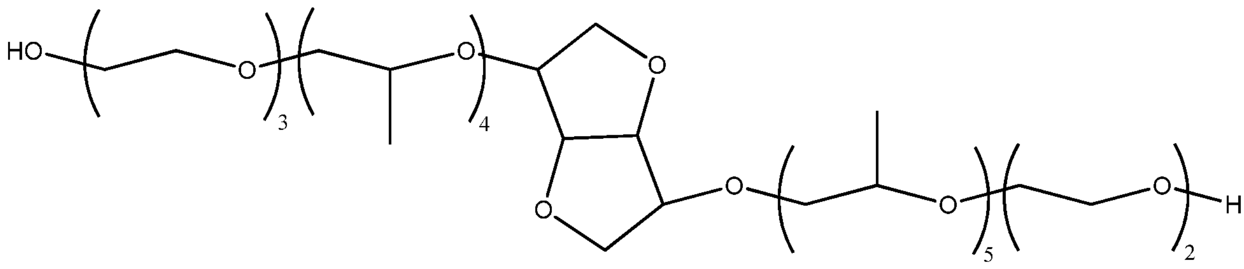

The content of the compound represented by Formula 1 may be 50 % by weight to 99 % by weight based on the total weight of the polyol composition. Preferably, the content of the compound represented by Formula 1 may be 60 % by weight to 99 % by weight, 70 % by weight to 99 % by weight, 75 % by weight to 99 % by weight, 77 % by weight to 99 % by weight, or 80 % by weight to 99 % by weight based on the total weight of the polyol composition. When the range is satisfied, the viscosity of the composition increases when manufacturing polyurethane foam from the polyol composition, which does not cause the problem of foaming not being smooth. In addition, the molding density and hardness of the manufactured polyurethane foam may be improved.

The polyol composition may include an antioxidant. The antioxidant may improve the heat stability of the polyurethane foam obtained from the polyol composition. The antioxidant may be one or more selected from the group consisting of a phenol-based antioxidant (e.g., dibutylhydroxytoluene), a sulfur-based antioxidant (e.g., a mercaptopropionic acid derivative, etc.) and a phosphorus-based antioxidant (e.g., 9,10-dihydro-9-oxa-10-phosphaphenanthrene-10-oxide, etc.). The content of the antioxidant may be 0.01 % by weight to 3 % by weight, 0.01 % by weight to 2 % by weight, 0.02 % by weight to 2 % by weight, 0.02 % by weight to 1 % by weight, or 0.03 % by weight to 1 % by weight based on the total weight of the polyol composition.

The Controlled Polymerization Rate (CPR) of the polyol composition may be 0.1 to 5, 0.1 to 4, 0.1 to 3, 0.1 to 2, 0.1 to 1.5, 0.1 to 1, or 0.2 to 1. The CRP is an indicator of the amount of alkaline substances in a polyol composition, and may be measured by quantifying the amount of hydrochloric acid (concentration: 0.001 N) that is neutralized and titrated by mixing 30 g of the polyol composition with 50 ml of methanol according to the experimental method of ASTM D6437. When the range is satisfied, it is easy to control the reactivity during a product manufacturing process, and the product may meet the specifications.

The Degree Of Unsaturation (DOU) of the polyol composition may be 0.001 meq/g to 0.015 meq/g, 0.001 meq/g to 0.010 meq/g, 0.001 meq/g to 0.009 meq/g, 0.001 meq/g to 0.008 meq/g, or 0.001 meq/g to 0.005 meq/g. The DOU is an indicator of the degree of multiple bonds included in a chemical structure, and may be measured by mixing 30 g of the polyol composition with 50 ml of mercuric acetate and titrating it. When the range is satisfied, open cells may be sufficiently formed during polyurethane manufacturing to prevent shrinkage and improve physical properties.

The acid value of the polyol composition may be 0.0005 mgKOH/g to 0.0100 mgKOH/g, 0.0005 mgKOH/g to 0.0050 mgKOH/g, 0.0005 mgKOH/g to 0.0030 mgKOH/g, or 0.0005 mgKOH/g to 0.0020 mgKOH/g. The acid value is an indicator of the amount of base (KOH) required to neutralize an acid component of 1g of sample. When the range is satisfied, the acid resistance of polyurethane foam manufactured from the polyol composition may be enhanced.

The number average molecular weight (Mn) of the polyol composition may be 100 g/mol to 15,000 g/mol, 100 g/mol to 14,000 g/mol, 100 g/mol to 13,000 g/mol, 300 g/mol to 12,000 g/mol, 300 g/mol to 2,000 g/mol, 300 g/mol to 1,000 g/mol, or 400 g/mol to 600 g/mol. The polydispersity index (PDI) of the polyol composition may be 0.8 to 2.0, 0.8 to 1.9, 0.8 to 1.8, 0.8 to 1.6, 0.8 to 1.5, or 1.0 to 1.3. When the range is satisfied, the reactivity between the polyol composition and isocyanate may be improved.

The American Public Health Association (APHA) color value of the polyol composition may be 0.1 to 40, 0.1 to 30, 0.1 to 25, 0.1 to 20, or 0.1 to 18. The APHA color value may be measured using ColorQuest XE (HUNTERLAB Co.) according to the test method of ASTM D-1209, and the lower the color value, the clearer and more transparent it can be evaluated. When the range is satisfied, by-products such as unreacted ethylene oxide and unreacted propylene oxide are hardly generated in the polyol composition, so product reliability may be improved.

An active oxygen content in the polyol composition may be 100 ppm or less, 90 ppm or less, 80 ppm or less, 50 ppm or less, 40 ppm or less, or 10 ppm or less. The measurement of the active oxygen may be done using a known method, for example, using a calibration curve showing a change in absorbance according to the content of active oxygen with a spectrophotometer. When the range is satisfied, side reactions may be reduced, storage stability may be improved, and color change may not occur.

The viscosity of the polyol composition at room temperature may be 200 cPs to 800 cPs, 300 cPs to 800 cPs, 350 cPs to 800 cPs, 400 cPs to 800 cPs, or 450 cPs to 700 cPs. The viscosity may be measured using a known method, for

example, a non-contact viscometer. When the range is satisfied, the generation of bubbles during the production of polyurethane foam may be prevented, uneven curing may be prevented, and workability may be improved.

A method of preparing the polyol composition according to the present invention includes a step (a) of performing a dehydration process by mixing at least one 1,4:3,6-dianhydrohexitol and a catalyst, a step (b) of producing a first polymer by reacting the dehydrated 1,4:3,6-dianhydrohexitol with a substituted or unsubstituted branched alkylene oxide having 3 to 10 carbon atoms, and a step (c) of producing a second polymer by reacting the first polymer with a substituted or unsubstituted linear alkylene oxide having 2 to 10 carbon atoms after the production of the first polymer according to the step (b) is completed, wherein the polyol composition includes a compound represented by Formula 1 below:

[Formula 1]

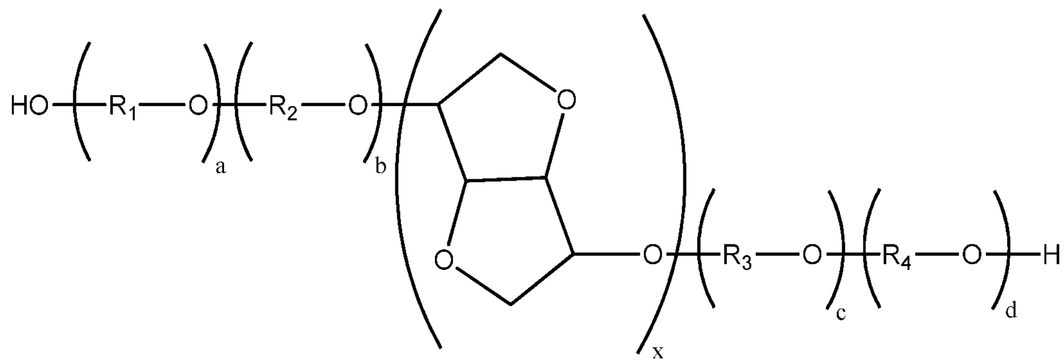

In Formula 1, $R_1$ and $R_4$ are each independently a substituted or unsubstituted linear alkylene group having 2 to 10 carbon atoms, $R_2$ and $R_3$ are each independently a substituted or unsubstituted branched alkylene group having 3 to 10 carbon atoms, x is an integer of 1 to 10, a and d are each independently an integer of 1 to 6, b and c are each independently an integer of 0 to 30, and b+c is an integer of 1 to 60.

FIG. 1 is a flow chart briefly illustrating a preparation process of the polyol composition according to the present invention. Referring to FIG. 1, the preparation method of the present invention includes a dehydration step (S10). In S10, at least one 1,4:3,6-dianhydrohexitol is mixed with a catalyst to dehydrate the 1,4:3,6-dianhydrohexitol.

The 1,4:3,6-dianhydrohexitol may exist in three isomers: isomannide, isoidide, and isosorbide. The three isomers may be distinguished by a difference in the relative configurations of two hydroxyl groups (-OH) in each compound. The isomannide may be obtained by the dehydration reaction of D-mannitol. The isoidide may be obtained by the dehydration reaction of L-iditol. Considering the manufacturing process and efficiency, it is preferable to use isosorbide, among the three 1,4:3,6-dianhydrohexitol isomers, in S10.

The isosorbide may be obtained by the dehydration reaction of D-sorbitol. Specifically, the isosorbide may be obtained by the dehydration reaction of D-sorbitol in the presence of an acid catalyst under reduced pressure.

The acid catalyst serves to promote the dehydration reaction of D-sorbitol. The acid catalyst may be a soluble acid catalyst, a homogeneous acid catalyst, or an acid-treated heterogeneous acid catalyst. Specifically, the acid catalyst may be sulfuric acid, hydrochloric acid, phosphoric acid, nitric acid, para-toluene sulfonic acid, methanesulfonic acid, a sulfated metal oxide, or a heteropoly acid catalyst. Preferably, sulfuric acid may be used as an acid catalyst.

The acid catalyst may be added in an amount of 0.01 parts by weight to 15.00 parts by weight, 0.01 parts by weight to 10.00 parts by weight, or 0.01 parts by weight to 5.00 parts by weight relative to the D-sorbitol 100 parts by weight. When the range is satisfied, the dehydration reaction rate of D-sorbitol may be improved, and the amount of residual catalyst may be minimized.

The D-sorbitol may be in powder form, or in the form of an aqueous solution containing the D-sorbitol at a concentration of 50 wt% to 90 wt%. In addition, the D-sorbitol may be extracted from nature, or obtained through a synthetic process by reducing glucose.

the isosorbide may be obtained by a process in which one water molecule is removed from the D-sorbitol to form 1,4-sorbitan that is an intermediate product, and then one water molecule is additionally removed from the 1,4-sorbitan.

The 1,4-sorbitan may be formed by adding the acid catalyst to a reactor containing the D-sorbitol and dehydrating at 80°C to 140°C under normal pressure for 1 hour to 5 hours. When the temperature range is satisfied, the generation of impurities other than 1,4-sorbitan may be reduced, and the efficiency of the dehydration reaction in which D-sorbitol is converted into 1,4-sorbitan may be improved.

The isosorbide may be obtained by dehydrating at 110°C to 350°C under normal pressure for 1 hour to 10 hours after the formation of the 1,4-sorbitan. When the temperature range is satisfied, the generation of impurities other than isosorbide may be reduced, and the efficiency of the dehydration reaction in which 1,4-sorbitan is converted into isosorbide

may be improved.

The dehydration process in which the 1,4-sorbitan is formed may be performed at a lower temperature than the dehydration process in which the isosorbide is obtained. When the temperature of the dehydration process in which the 1,4-sorbitan is formed is controlled to be lower than the temperature of the dehydration process in which the isosorbide is obtained, isosorbide may be obtained in a high yield even without using an acid catalyst.

The isosorbide may be obtained by Reaction formula 1 below:

[Reaction formula 1]

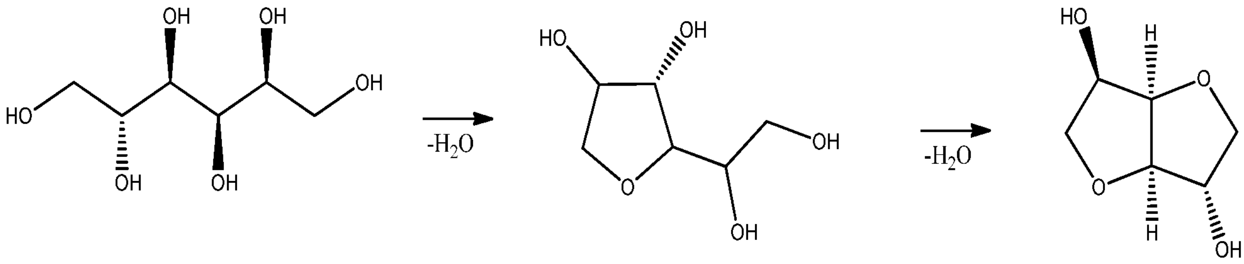


D-Sorbitol 1,4-Sorbitan Isosorbide

The 1,4:3,6-dianhydrohexitol may be mixed with a catalyst to produce an active 1,4:3,6-dianhydrohexitol. The 1,4:3,6-dianhydrohexitol may be fed into a batch reactor.

The 1,4:3,6-dianhydrohexitol may be fed into the batch reactor in a content of about 15 % by weight to about 50 % by weight, about 15 % by weight to about 40 % by weight, about 25 % by weight to about 40 % by weight, or about 25 % by weight to about 35 % by weight based on the total of raw materials fed into the batch reactor.

The 1,4:3,6-dianhydrohexitol may be introduced in a solid state into the batch reactor. The 1,4:3,6-dianhydrohexitol may be introduced in a powder form into the batch reactor.

The particles of the 1,4:3,6-dianhydrohexitol may have a sphere shape, a flake shape, or a rod shape.

The purity of the 1,4:3,6-dianhydrohexitol may be about 80% or more, about 90% or more, about 95% or more, or about 97% or more.

The average particle diameter of the 1,4:3,6-dianhydrohexitol may be about 10 $\mu$m to about 200 $\mu$m, about 10 $\mu$m to about 150 $\mu$m, about 10 $\mu$m to about 100 $\mu$m, or about 30 $\mu$m to about 100 $\mu$m. The average particle diameter is measured using a laser diffraction method, and may be defined as a particle diameter corresponding to 50% of a volume accumulation amount in a particle diameter distribution curve.

The moisture content of the 1,4:3,6-dianhydrohexitol may be about less than 5 % by weight, less than about 4 % by weight, less than about 3 % by weight, less than about 2 % by weight, or less than about 1 % by weight. The moisture content may be calculated by subtracting the weight of 1,4:3,6-dianhydrohexitol after drying from the weight of 1,4:3,6-dianhydrohexitol before drying, dividing the value by the weight of 1,4:3,6-dianhydrohexitol before drying, and then multi. The drying is performed by raising the temperature from room temperature to about 150°C and then maintaining 150°C, and the total drying time may be set to 20 minutes including 5 minutes of a temperature-raising step.

The 1,4:3,6-dianhydrohexitol may be introduced in an aqueous solution state into the batch reactor. The 1,4:3,6-dianhydrohexitol may be introduced at a concentration of about 70 % by weight to about 90 % by weight, about 75 % by weight to about 90 % by weight, or about 75 % by weight to about 85 % by weight into the batch reactor.

The 1,4:3,6-dianhydrohexitol may introduced into the batch reactor in batches. The 1,4:3,6-dianhydrohexitol may be introduced into the batch reactor for about 5 minutes to about 60 minutes, about 10 minutes to about 50 minutes, or about 20 minutes to about 40 minutes. The 1,4:3,6-dianhydrohexitol may be divisionally fed in equal portions into the batch reactor for about 5 minutes to about 60 minutes, about 10 minutes to about 50 minutes, or about 20 minutes to about 40 minutes.

The catalyst may be a basic catalyst. The basic catalyst may include one or more strong bases selected from the group consisting of potassium hydroxide, sodium hydroxide, potassium metal, and sodium metal.

The basic catalyst may include a double-metal cyanide. The double-metal cyanide may be prepared by reacting the aqueous solution of a metal salt with the aqueous solution of a metal cyanide salt in the presence of an organic complexing ligand.

The basic catalyst may include imidazole or an imidazole derivative. The imidazole derivative may be 1,2-dimethyimidazole or 1-isobutyl-2-methylimidazole.

The catalyst may be introduced into the batch reactor in an aqueous solution state. For example, an aqueous potassium hydroxide solution may be introduced into the batch reactor. The catalyst may be introduced into the batch reactor after the 1,4:3,6-dianhydrohexitol is introduced. The catalyst may introduced into the batch reactor in batches. The

catalyst may be introduced into the batch reactor for about 1 minute to about 20 minutes, about 3 minutes to about 15 minutes, or about 8 minutes to about 12 minutes. The 1,4:3,6-dianhydrohexitol may be divisionally introduced in equal portions into the batch reactor for about 1 minute to about 20 minutes, about 3 minutes to about 15 minutes, or about 8 minutes to about 12 minutes.

In S10, 0.1 parts by weight to 5.0 parts by weight, 0.5 parts by weight to 4.0 parts by weight, or 1.0 parts by weight to 3.0 parts by weight of the catalyst, based on 100 parts by weight of the 1,4:3,6-dianhydrohexitol, may be mixed to perform the dehydration process of the 1,4:3,6-dianhydrohexitol. When the range is satisfied, the dehydration reaction rate of 1,4:3,6-dianhydrohexitol may be improved, and the amount of residual catalyst may be minimized.

The dehydration process of the 1,4:3,6-dianhydrohexitol may be performed at about 80°C to about 120°C, about 90°C to about 120°C, or about 100°C to about 120°C.

The dehydration process of the 1,4:3,6-dianhydrohexitol may be performed under a pressure condition of about 0.1 torr to about 100.0 torr, about 0.1 torr to about 80.0 torr, or about 0.1 torr to about 20.0 torr.

The dehydration process of the 1,4:3,6-dianhydrohexitol may be performed for about 1 hour to about 6 hours, about 1 hour to about 5 hours, or about 2 hours to about 4 hours.

The dehydration process of the 1,4:3,6-dianhydrohexitol may be performed at about 80°C to about 120°C for about 1 hour to about 5 hours. Preferably, the dehydration process of the 1,4:3,6-dianhydrohexitol may be performed at about 80°C to about 120°C under a pressure condition of about 0.1 torr to about 20.0 torr for about 2 hours to about 4 hours.

After S10, a moisture content in the 1,4:3,6-dianhydrohexitol may be less than about 2,000 ppm, less than about 1,000 ppm, less than about 500 ppm or about 300 ppm or less. The 1,4:3,6-dianhydrohexitol may improve the yield of the polyol composition due to its low moisture content.

The preparation method of the present invention may include a step (S20) of preparing a first polymer. In S20, the first polymer is prepared by reacting the dehydrated 1,4:3,6-dianhydrohexitol with a substituted or unsubstituted branched alkylene oxide having 3 to 10 carbon atoms.

The substituted or unsubstituted branched alkylene oxide having 3 to 10 carbon atoms may be propylene oxide. The propylene oxide may be introduced into the batch reactor.

The introduction process of the propylene oxide may be performed under a temperature condition of about 80°C to about 130°C, about 90°C to about 130°C, or about 100°C to about 120°C.

The introduction process of the propylene oxide may be performed under a pressure condition of about 0.1 torr to about 100.0 torr, about 0.1 torr to about 50.0 torr, or about 0.1 torr to about 30.0 torr.

The introduction process of the propylene oxide may be performed for about 3 hours to about 10 hours, about 5 hours to about 10 hours, or about 6 hours to about 9 hours. Preferably, the introduction process of the propylene oxide may be performed at about 80°C to about 120°C under a pressure condition of about 2 torr to about 8 torr for about 6 hours to about 9 hours.

The introduction rate of the propylene oxide may be about 100 kg/hr to about 1,000 kg/hr, about 300 kg/hr to about 1,000 kg/hr, or about 500 kg/hr to about 900 kg/hr.

About 100 parts by weight to about 500 parts by weight, about 150 parts by weight to about 500 parts by weight, or about 150 parts by weight to about 450 parts by weight of the propylene oxide, based on 100 parts by weight of the 1,4:3,6-dianhydrohexitol, may be introduced into the batch reactor.

The propylene oxide may undergo an addition reaction with the dehydrated 1,4:3,6-dianhydrohexitol in the batch reactor. A first polymer wherein the propylene oxide-derived repeating unit is included in the parent structure of the 1,4:3,6-dianhydrohexitol may be prepared by the addition reaction. The propylene oxide-derived repeating unit may refer to a component or structure derived from propylene oxide, or propylene oxide itself.

The addition reaction between the 1,4:3,6-dianhydrohexitol and the propylene oxide may be performed at about 80°C to about 150°C, about 90°C to about 150°C, or about 100°C to about 140°C.

The addition reaction between the 1,4:3,6-dianhydrohexitol and the propylene oxide may be performed for about 1 hour to about 4 hours, about 1 hour to about 3 hours, or about 1 hour to about 2 hours. Preferably, the addition reaction between the 1,4:3,6-dianhydrohexitol and the propylene oxide may be performed at about 100°C to about 140°C for about 1 hour to about 2 hours.

The step (S20) may further include a process of removing a branched alkylene oxide residue after preparing the first polymer. The branched alkylene oxide residue may be propylene oxide. By removing the branched alkylene oxide residue, the reactivity with isocyanate may be improved, the hardness and appearance of the polyurethane foam may be improved, and the manufacturing economy may be improved.

The process of removing the propylene oxide residue may be performed at about 80°C to about 150°C, about 90°C to about 150°C, or about 100°C to about 140°C.

The process of removing the propylene oxide residue may be performed under a pressure condition of about 0.1 torr to about 100.0 torr, about 0.1 torr to about 80.0 torr, or about 0.1 torr to about 20.0 torr.

The process of removing the propylene oxide residue may be performed for about 10 minutes to about 120 minutes, about 10 minutes to about 60 minutes, or about 20 minutes to about 40 minutes. Preferably, the process of

removing the propylene oxide residue may be performed at about 100°C to about 140°C under a pressure condition of about 0.1 torr to about 20.0 torr for about 20 minutes to about 40 minutes.

The preparation method of the present invention may include a step (S30) of preparing a second polymer. In S30, the second polymer may be prepared by reacting the first polymer with a substituted or unsubstituted linear alkylene oxide having 2 to 10 carbon atoms.

A weight ratio of the branched alkylene oxide of S20 to the linear alkylene oxide of S30 may be 2:1 to 8:1, 3:1 to 7.5:1, 3.5:1 to 7.5:1, 3:1 to 7.5:1, 4.5:1 to 7.5:1, 5:1 to 7.5:1, or 5:1 to 7:1. When the range is satisfied, the reactivity with isocyanate may increase, and the hardness and appearance quality of the polyurethane foam manufactured from the polyol composition may be improved.

The substituted or unsubstituted linear alkylene oxide having 2 to 10 carbon atoms may be ethylene oxide. The ethylene oxide may be introduced into the batch reactor in which the first polymer has been prepared.

The introduction process of the ethylene oxide may be performed about 80°C to about 140°C, about 90°C to about 140°C, or about 120°C to about 130°C.

The introduction process of the ethylene oxide may be performed under a pressure condition of about 0.1 torr to about 100.0 torr, about 0.1 torr to about 50.0 torr, or about 0.1 torr to about 30.0 torr.

The introduction process of the ethylene oxide may be performed for about 1 hour to about 5 hours, about 1 hour to about 3 hours, or about 2 hours to about 3 hours. Preferably, the introduction process of the ethylene oxide may be performed at about 120°C to about 130°C under a pressure condition of about 0.1 torr to about 30.0 torr for about 2 hours to about 3 hours.

The introduction rate of the ethylene oxide may be about 100 kg/hr to about 1,000 kg/hr, about 200 kg/hr to about 700 kg/hr, or about 300 kg/hr to about 600 kg/hr.

About 10 parts by weight to about 100 parts by weight, about 20 parts by weight to about 100 parts by weight, about 20 parts by weight to about 80 parts by weight, or about 20 parts by weight to about 60 parts by weight of the ethylene oxide, based on 100 parts by weight of the 1,4:3,6-dianhydrohexitol, may be introduced into the batch reactor.

The ethylene oxide may undergo an addition reaction with the first polymer in the batch reactor. A second polymer in which the ethylene oxide-derived repeating unit is included in the first polymer may be prepared by the addition reaction. In addition, a second polymer in which the propylene oxide-derived repeating unit and the ethylene oxide-derived repeating unit are included as a block copolymer may be prepared. The ethylene oxide-derived repeating unit may refer to a component or structure derived from ethylene oxide, or ethylene oxide itself.

The addition reaction between the 1,4:3,6-dianhydrohexitol and the ethylene oxide may be performed at about 80°C to about 150°C, about 90°C to about 150°C, or about 100°C to about 140°C.

The addition reaction between the 1,4:3,6-dianhydrohexitol and the ethylene oxide may be performed for about 1 hour to about 4 hours, about 1 hour to about 3 hours, or about 1 hour to about 2 hours. Preferably, the addition reaction between the 1,4:3,6-dianhydrohexitol and the ethylene oxide may be performed at about 100°C to about 140°C for about 1 hour to about 2 hours.

In S30, a process of removing a linear alkylene oxide residue may be further included after preparing the second polymer. The linear alkylene oxide residue may be ethylene oxide.

The process of removing the ethylene oxide residue may be performed at about 80°C to about 150°C, about 90°C to about 150°C, or about 100°C to about 140°C.

The process of removing the propylene oxide residue may be performed under a pressure condition of about 0.1 torr to about 100.0 torr, about 0.1 torr to about 80.0 torr, or about 0.1 torr to about 20.0 torr.

The process of removing the ethylene oxide residue may be performed for about 30 minutes to about 200 minutes, about 30 minutes to about 100 minutes, or about 40 minutes to about 80 minutes. Preferably, the process of removing the ethylene oxide residue may be performed under a temperature condition of about 100°C to about 140°C and a pressure condition of about 0.1 torr to about 20.0 torr for about 40 minutes to about 80 minutes.

The preparation method of the present invention may further include a step (S40) of removing a metal ion residue and a filtering step (S50). In S40, a metal ion residue in the polyol composition may be removed, and in S50, a process of filtering the polyol composition from which the metal ion residue has been removed may be performed.

In S40, an additive may be introduced into the polyol composition, which has undergone the reaction, to remove the metal ion residue. The additive may be one or more selected from the group consisting of diatomaceous earth, alumina, MAGNESOL, CELITE, AMBOSOL, and silica gel.

The additive may be introduced in the form of an aqueous dispersion into the polyol composition that has undergone the reaction. The additive may be introduced in a content of 1 part by weight to 10 parts by weight, 1 part by weight to 8 parts by weight, 2 parts by weight to 8 parts by weight, 3 parts by weight to 8 parts by weight, or 3 parts by weight to 6 parts by weight based on 100 parts by weight of the 1,4:3,6-dianhydrohexitol into the polyol composition that has undergone the reaction.

Next, in S40, a process of neutralizing the polyol composition with the additive added may be performed. The neutralization process may be performed for about 1 hour to about 4 hours, about 1 hour to about 3 hours, or about 1 hour to

about 2 hours. Next, a process of removing moisture from the polyol composition that has undergone the neutralization process may be performed. The moisture removal process may be performed for about 90°C to about 130°C, about 95°C to about 130°C, or about 100°C to about 130°C. As needed, a process of detecting the metal ion residue may be performed in S40, and, when the metal ion residue is not detected, the polyol composition may be performed at about 50°C to about 90°C, about 50°C to about 80°C, or about 60°C to about 80°C. In S50, the polyol composition where moisture has been removed may be filtered. The additive and by-products may be filtered by the filtering.

A polyol composition prepared according to the preparation method may include a compound represented by Formula 1 below:

[Formula 1]

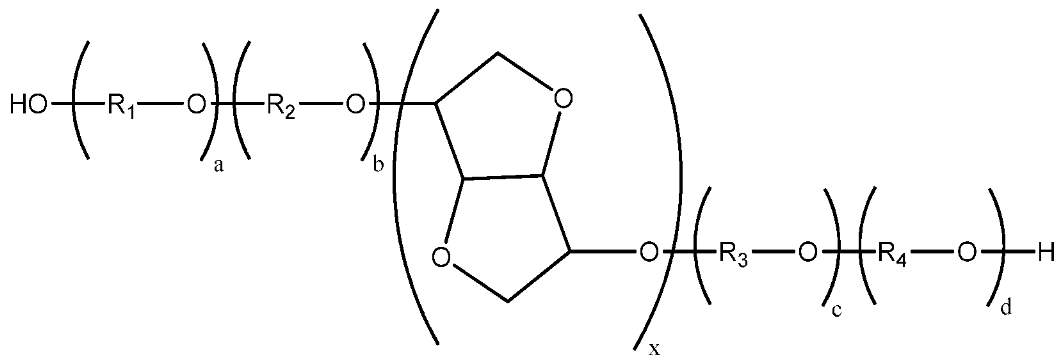

In Formula 1, $R_1$ and $R_4$ are each independently a substituted or unsubstituted linear alkylene group having 2 to 10 carbon atoms, $R_2$ and $R_3$ are each independently a substituted or unsubstituted branched alkylene group having 3 to 10 carbon atoms, x is an integer of 1 to 10, a and d are each independently an integer of 1 to 6, b and c are each independently an integer of 0 to 30, and b+c is an integer of 1 to 60.

The compound represented by Formula 1 may be the same as the aforementioned compound.

The composition for preparing polyurethane according to the present invention may include a polyol composition and an isocyanate-based composition, and the polyol composition may include the compound represented by Formula 1 described above.

The isocyanate composition may include at least one selected from the group consisting of aliphatic polyisocyanate, cycloaliphatic polyisocyanate, araliphatic polyisocyanate, aromatic polyisocyanate and heterocyclic polyisocyanate.

The isocyanate composition may include unmodified polyisocyanate or modified polyisocyanate.

The polyisocyanate may include at least one selected from the group consisting of methylene diisocyanate, ethylene diisocyanate, 1,4-tetramethylene diisocyanate, 1,6-hexamethylene diisocyanate, 1-12-dodecane diisocyanate, cyclobutane-1,3-diisocyanate, cyclohexane-1,3-diisocyanate, cyclohexane-1,4-diisocyanate, isophorone diisocyanate, 2-4-hexahydrotoluene diisocyanate, 2.6-hexahydrotoluene diisocyanate, dicyclohexylmethane-4,4'-diisocyanate (HMDI), 1,3-phenylene diisocyanate, 1,4-phenylene diisocyanate, 2,4-toluene diisocyanate, 2,6-toluene diisocyanate, diphenylmethane-2,4'-diisocyanate, diphenylmethane-4,4'-diisocyanate, polymeric methylene diphenyl diisocyanate (PMDI) and naphthalene-1,5-diisocyanate.

As the polyisocyanate, toluene diisocyanate (2,4-/2,6-isomeric ratio=80/20) prepared by mixing 2,4-toluene diisocyanate with 2,6-toluene diisocyanate, or polymeric methylene diphenyl diisocyanate may be used.

An appropriate use amount of the polyisocyanate may be 70 to 130, 80 to 120, preferably 100 to 120 in terms of isocyanate index (NCO index).

The isocyanate index refers to a ratio of the equivalent number of a hydroxyl group (-OH) present in polyol to the equivalent number of isocyanate, among polyurethane reactants, and means the amount of isocyanate used relative to a theoretical equivalent.

If the isocyanate index is less than 100, it means that an excessive amount of polyol is present, and if the isocyanate index is more than 100, it means that an excessive amount of isocyanate is present.

If the isocyanate index is less than 70, reactivity is low, a gelling reaction is delayed, and curing may not occur, and if the isocyanate index is more than 130, the amount of hard segments may increase excessively, and the problem of shrinkage may occur.

The composition for preparing polyurethane may include a curing catalyst. The curing catalyst is not specifically limited, and may be an amine catalyst, an organometallic catalyst or a mixture thereof. The curing catalyst may play a role in promoting a reaction between the polyol composition and the isocyanate composition.

The type of the amine catalyst is not specifically limited, and, preferably one or a mixture of two or more selected from among tertiary amine catalysts may be used as the amine catalyst. For example, at least one selected from the group consisting of triethylene diamine, triethylamine, N-methyl morpholine and N-ethylmorpholine may be used.

As the organic metal catalyst, an organic metal catalyst commonly used in the production of polyurethane foam may be used. For example, at least one selected from the group consisting of tin octylate, dibutyltin dilaurate (DBTDL) and tin bis[2-ethylhexanoate] may be used.

The curing catalyst may be included in a content of about 0.01 parts by weight to about 5 parts by weight, 0.01 parts by weight to about 4 parts by weight, 0.01 parts by weight to about 3 parts by weight, 0.1 parts by weight to about 3 parts by weight, or 0.1 parts by weight to about 2.5 parts by weight based on 100 parts by weight of the polyol composition. When the range is satisfied, poor curing, or shrinkage, or settling during the formation of the polyurethane foam may be reduced.

The composition for preparing polyurethane may include a foam stabilizer. The foam stabilizer may prevent cells formed inside a polyurethane foam from being merged or destroyed, and may play a role in adjusting the formation of cells having a uniform shape and size.

The foam stabilizer is not particularly limited so long as it is commonly used in the production of polyurethane foam, and for example, a silicone-based foam stabilizer may be used. The silicone-based foam stabilizer may be one or more selected from among silicone oil and its derivatives, and specifically may be a polyalkylene oxide methylsiloxane copolymer.

The content of the foam stabilizer may be about 0.01 parts by weight to 10 parts by weight, about 0.1 parts by weight to 10 parts by weight, about 0.2 parts by weight to 10 parts by weight, about 0.3 parts by weight to 10 parts by weight, about 0.4 parts by weight to 10 parts by weight, or about 0.5 parts by weight to 8 parts by weight based on 100 parts by weight of the polyol composition. When the range is satisfied, the shrinkage of a manufactured foam may be prevented, and uniform moldability may be exhibited.

The composition for preparing polyurethane may include a foaming agent. A representative example of the foaming agent is water, and in addition to water, at least one selected from the group consisting of methylene chloride, n-butane, isobutane, n-pentane, isopentane, dimethyl ether, acetone, carbon dioxide, and 1,1-dichloro1-fluoroethane may be used. The foaming agent may be used according to general usage methods, and may be appropriately used according to the required density of a foam or its other characteristics.

The foaming agent may be used in a content of about 0.1 parts by weight to about 60 parts by weight, about 0.2 parts by weight to about 60 parts by weight, about 0.3 parts by weight to about 60 parts by weight, about 0.3 parts by weight to about 50 parts by weight, or about 1 part by weight to about 30 parts by weight based on 100 parts by weight of the polyol composition.

The composition for preparing polyurethane may not include the foaming agent. That is, in the process of preparing polyurethane foam using the composition for preparing polyurethane, a gaseous foaming agent such as nitrogen gas may be directly injected into the composition for preparing polyurethane, thereby forming fine cells.

The composition for preparing polyurethane may further include an auxiliary additive selected from the group consisting of a flame retardant, a colorant, a UV stabilizer, a thickener, a foam stabilizer, a filler and a combination thereof.

The composition for preparing polyurethane may be a one-component type or a two-component type. When the composition for preparing polyurethane is a two-component type, it may be divided and stored into two components and the two components may be mixed immediately before the production process of the polyurethane resin.

When the composition for preparing polyurethane is a two-component type, the composition for preparing polyurethane may include a first component mainly composed of the polyol composition and a second component mainly composed of the isocyanate composition.

The first component may include the polyol composition, the curing catalyst, the foam stabilizer, the foaming agent and the other additives.

The second component may include the isocyanate composition.

Polyurethane foam may be produced from the composition for preparing polyurethane. A method of producing the polyurethane foam may include a step (a) of supplying the second component through an isocyanate supplier, a gas supply step (b) of supplying a gas for foaming through a gas supplier, a step (c) of supplying the first component through a polyol supplier, a step (d) of mixing the first component, the second component and the gas for foaming by a mixer to prepare a polyurethane foam composition, and a step (e) of curing the polyurethane foam composition.

The gas for foaming of the step (b) may include nitrogen or carbon dioxide.

The first component of the step (c) may further include a curing catalyst, a foam stabilizer, a foaming agent and other additives.

When the first component supplied in the step (c) is included in the foaming agent, the gas supply step of the step (b) may be omitted.

The produced polyurethane foam may include micro-closed cells thereinside. For example, the polyurethane foam may include micro-closed pores.

The average diameter of the micro-closed cells may be about 1 $\mu$m to about 200 $\mu$m, about 5 $\mu$m to about 200 $\mu$m, about 10 $\mu$m to about 200 $\mu$m, about 20 $\mu$m to about 200 $\mu$m, about 50 $\mu$m to about 200 $\mu$m, or about 50 $\mu$m to about 100 $\mu$m.

A battery module according to the present invention may include a housing, a plurality of battery cells accommodated inside the housing, and polyurethane foam arranged between the plural battery cells, the polyurethane foam includes a composition for preparing polyurethane including a polyol composition and an isocyanate-based composition, and the polyol composition may include the compound represented by Formula 1 described above.

FIG. 2 is a sectional view briefly illustrating the battery module according to the present invention. Referring to FIG. 2, a battery module 100 according to the present invention includes a housing 101. The housing 101 may be a structure designed to accommodate the plural battery cells 102 thereinside and protect them from external impacts, etc. The housing 101 may be made of a metal material with high mechanical strength. However, the material of the housing 101 is not limited to a metal material, and may be made of a non-metal material to ensure insulation.

The battery module 100 may include a thermally conductive adhesive 104. The thermally conductive adhesive 104 may fix the plural battery cells 102 into the housing 101, and may allow the heat of the plural battery cells 102 to be well transferred to the housing 101. As the thermally conductive adhesive 104, various organic or inorganic resins such as a thermally conductive epoxy adhesive, a thermally conductive silicone adhesive, a thermally conductive urethane adhesive may be used.

The plural battery cells 102 may be provided in a pouch shape in which the number of stacks per unit area can be maximized. The plural battery cells 102 provided in the pouch shape may be manufactured by housing an electrode assembly including a positive electrode, a negative electrode, and a separator into a cell case of a laminate sheet, and then heat-melting a sealing portion of the cell case. However, the plural battery cells 102 are not necessarily provided in a pouch shape, and may be provided in a square, cylindrical or other various shapes, so long as the storage capacity required by a device to be mounted in the future is achieved.

The battery module 100 includes the plural battery cells 102 accommodated within a housing 101 and a polyurethane foam 103 arranged between the plural battery cells 102. The polyurethane foam 103 has excellent vibration absorption, and excellent repulsive force by compression, so that dimensional stability may be maintained even if swelling occurs in the plural battery cells 102. In addition, damage to a battery module 100 due to the expansion of the plural battery cells 102 may be prevented. The plural battery cells 102 may have different degrees of expansion depending on chemical properties and usage environments. Taking this into consideration, the maximally compressible thickness range of the polyurethane foam 103 may be selected within a range that can accommodate the expansion thickness of the plural battery cells 102, etc.

< Polyol composition according to second example >

The polyol composition according to the present invention may include a first unit derived from at least one 1,4:3,6-dianhydrohexitol, and a second unit derived from alkylene oxide, and may have an American Public Health Association (APHA) color value of 20 or less according to ASTM-D1209.

The 1,4:3,6-dianhydrohexitol and the isosorbide may be the same as the 1,4:3,6-dianhydrohexitol and isosorbide described above.

The polyol composition may include the first unit derived from the 1,4:3,6-dianhydrohexitol in a content of 5 % by weight to 50 % by weight, 10 % by weight to 50 % by weight, 10 % by weight to 45 % by weight, 15 % by weight to 45 % by weight, or 20 % by weight to 45 % by weight based on the total weight of the polyol composition. When the range is satisfied, the viscosity of the composition increases when manufacturing polyurethane foam from the polyol composition, which does not cause the problem of foaming not being smooth. In addition, the molding density and hardness of the manufactured polyurethane foam may be improved.

The alkylene oxide may be the same as the alkylene oxide described above.

In general, a polyol composition prepared from a petroleum-based raw material exhibits a high APHA color value, making it difficult to apply to industries that require product transparency. In addition, there was a problem that the color value of APHA increased rapidly under a high-temperature condition, resulting in a color increase during storage or transportation of a polyol composition.

Accordingly, the polyol composition according to the present invention may be manufactured from renewable natural resources, and exhibits a lower APHA color value compared to a polyol composition manufactured from a petroleum-based raw material, making it eco-friendly and applicable to industries that require product transparency. In addition, the color change may be minimized even when exposed to a high-temperature environment, so product reliability regarding color may be secured when storing or transporting a polyol composition.

The polyol composition according to the present invention has an American Public Health Association (APHA) color value of 25 or less, 24 or less, 23 or less, 22 or less, 21 or less, 20 or less, 19 or less, 18 or less, or 17 or less according to ASTM-D1209.

Specifically, the color of the polyol composition may be measured using ColorQuest XE (HunterLab Co.), and an American Public Health Association (APHA) color value (platinum-cobalt system) may be measured from the color number of the polyol composition according to ASTM-D1209.

When the range is satisfied, the polyol composition may be colorless and transparent, and a polyurethane foam with low yellowness may be produced using the polyol. In addition, by-products such as unreacted ethylene oxide and unreacted propylene oxide are hardly generated in the polyol composition, so product reliability may be improved.

The content of residual metals in the polyol composition may be 10 ppm or less, 7 ppm or less, 5 ppm or less, 4 ppm or less, 3 ppm or less, or 1 ppm or less based on the total weight of the polyol composition. The metal may include potassium. When the range is satisfied, the color change depending on metal ions may be minimized even when the polyol composition is exposed to a high-temperature environment.

A difference between the second APHA color value and the first APHA color value of the polyol composition according to the following measurement method may be 10 or less, 8 or less, or 5 or less:

<Measurement method>

1) The first APHA color value of the polyol composition is measured according to ASTM-D1209.
2) The polyol composition is stored in a 75°C oven for 10 minutes.
3) The polyol composition is taken out of the oven, and then exposed to the atmosphere for 24 hours.
4) According to ASTM-D1209, the second APHA color value of the polyol composition is measured.

When the range is satisfied, product reliability regarding color may be secured when storing or transporting the polyol composition.

The viscosity of the polyol composition at 25 °C may be 200 cPs to 800 cPs, 300 cPs to 800 cPs, 350 cPs to 800 cPs, 350 cPs to 700 cPs, or 350 cPs to 600 cPs. The viscosity may be measured using a known method, for example, a non-contact viscometer. The storage stability of the polyol composition may be improved when the range is satisfied, the generation of bubbles may be prevented when polyurethane foam is produced, and uneven curing may be prevented, so workability may be improved.

The number average molecular weight (Mn) of the polyol composition may be 300 g/mol to 20,000 g/mol, 300 g/mol to 18,000 g/mol, 300 g/mol to 15,000 g/mol, 300 g/mol to 12,000 g/mol, 500 g/mol to 12,000 g/mol, 500 g/mol to 10,000 g/mol, or 500 g/mol to 3,000 g/mol. The polydispersity index (PDI) of the polyol composition may be 0.8 to 2.0, 0.8 to 1.9, 0.8 to 1.8, 0.8 to 1.6, 0.8 to 1.5, or 1.0 to 1.3. When the range is satisfied, the reactivity between the polyol composition and isocyanate may be improved.

The polyol composition may further include the antioxidant described above.

The polyol composition may have the Controlled Polymerization Rate (CPR) value described above.

The polyol composition may have the acid value described above.

The polyol composition may have the active oxygen content value described above.

The polyol composition may include the compound represented by Formula 1 described above.

A method of preparing the polyol composition according to the present invention may include a step (a) of performing a dehydration process by mixing at least one 1,4:3,6-dianhydrohexitol and a catalyst, a step (b) of producing a first polymer by reacting the dehydrated 1,4:3,6-dianhydrohexitol with a substituted or unsubstituted branched alkylene oxide having 3 to 10 carbon atoms, and a step (c) of producing a second polymer by reacting the first polymer with a substituted or unsubstituted linear alkylene oxide having 2 to 10 carbon atoms after the production of the first polymer according to the step (b) is completed, wherein the polyol composition may have an American Public Health Association (APHA) color value of 20 or less according to ASTM-D1209.

The method of preparing the polyol composition according to the present invention may be carried out in the same manner as the contents of FIG. 1 described above.

A polyol composition prepared according to the preparation method may have an American Public Health Association (APHA) color value of 25 or less, 24 or less, 23 or less, 22 or less, 21 or less, 20 or less, 19 or less, 18 or less, or 17 or less according to ASTM-D1209.

Specifically, the color of the polyol composition may be measured using ColorQuest XE (HunterLab Co.), and an American Public Health Association (APHA) color value (platinum-cobalt system) may be determined from the color number of the polyol composition according to ASTM-D1209.

When the range is satisfied, the prepared polyol composition may be colorless and transparent, and polyurethane foam having low yellowness may be produced by using the polyol. In addition, by-products such as unreacted ethylene oxide and unreacted propylene oxide are hardly generated in the polyol composition, so product reliability may be improved.

The composition for preparing polyurethane according to the present invention includes a first unit derived from at least one 1,4:3,6-dianhydrohexitol, and a second unit derived from alkylene oxide, and includes a polyol composition having an American Public Health Association (APHA) color value of 20 or less according to ASTM-D1209, and an isocyanate-based composition.

The polyol composition and the isocyanate-based composition may be the same as the polyol composition and isocyanate-based composition described above.

Polyurethane foam may be produced from the composition for preparing polyurethane. The composition for preparing polyurethane may be the same as the above-described composition for preparing polyurethane.

The battery module according to the present invention is a battery module including a housing, a plurality of battery cells accommodated inside the housing, and polyurethane foam arranged between the plural battery cells, the polyurethane foam includes a composition for preparing polyurethane including a polyol composition and an isocyanate-based composition, and the polyol composition includes a first unit derived from at least one 1,4:3,6-dianhydrohexitol, and a second unit derived from alkylene oxide and has an American Public Health Association (APHA) color value of 20 or less according to ASTM-D1209.

The battery module according to the present invention may refer to the same contents as those of FIG. 3 described above.

< Polyol composition according to third example >

A polyol composition according to the present invention may include a first unit derived from at least one 1,4:3,6-dianhydrohexitol, and a second unit derived from alkylene oxide and may have an acid value of less than 0.02 mgKOH/g according to the following measurement method.

<Measurement method>

1) A first flask containing the polyol composition and a second flask without the polyol composition are prepared, 50 ml of methanol is added to each of the first flask and the second flask, followed by stirring for 30 minutes.
2) 0.5 ml of a 1% phenolphthalein indicator is added to each of the first flask and the second flask, followed by titrating with 0.02 N potassium hydroxide (KOH) until the compositions of the first flask and the second flask turn pink for 30 seconds.
3) Acid values are calculated using Equation 1 below:

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

The 1,4:3,6-dianhydrohexitol and isosorbide may be the same as the 1,4:3,6-dianhydrohexitol and isosorbide described above.

The alkylene oxide may be the same as the alkylene oxide described above.

In general, a polyol composition manufactured from a petroleum-based raw material exhibits a high acid value, and the activity of a catalyst is reduced by the neutralization between an amine catalyst and the polyol composition used in the production of polyurethane foam, resulting in a problem of reduced reactivity between the polyol composition and an isocyanate-based composition. This is because the production process efficiency and moldability of polyurethane foam are reduced.

Accordingly, the polyol composition according to the present invention may be prepared from renewable natural resources, and may exhibit a lower acid value compared to a polyol composition prepared from petroleum-based raw materials, making it eco-friendly. In addition, the activity of a catalyst used in the production of polyurethane foam may not be reduced, and the reactivity between a polyol composition and an isocyanate-based composition may be improved. Accordingly, the production process efficiency and moldability of polyurethane foam may be improved.

The polyol composition according to the present invention has an acid value of less than 0.02 mgKOH/g according to the following measurement method:

<Measurement method>

1) A first flask containing the polyol composition and a second flask without the polyol composition are prepared, 50 ml of methanol is added to each of the first flask and the second flask, followed by stirring for 30 minutes.
2) 0.5 ml of a 1% phenolphthalein indicator is added to each of the first flask and the second flask, followed by titrating with 0.02 N potassium hydroxide (KOH) until the compositions of the first flask and the second flask turn pink for 30 seconds.
3) Acid values are calculated using Equation 1 below:

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

The polyol composition may have an acid value of less than 0.02 mgKOH/g, 0.019 mgKOH/g or less, 0.018 mgKOH/g or less, 0.015mgKOH/g or less, or 0.012 mgKOH/g or less according to the measurement method. In addition, there is no need to limit a lower limit of the acid value, but it may be more than 0 mgKOH/g, 0.005 mgKOH/g or more, or 0.010 mgKOH/g or more. When the range is satisfied, the acid resistance of polyurethane foam manufactured from the polyol composition may be enhanced, and the reactivity between the polyol composition and an isocyanate-based composition may be improved.

The content of residual metals in the polyol composition may be the same as the metal content described above.

The viscosity of the polyol composition may be the same as the viscosity described above.

The polyol composition according to the present invention may have the American Public Health Association (APHA) color value described above.

The polyol composition may have the number average molecular weight (Mn) and polydispersity index (PDI) described above.

The polyol composition may further include the antioxidant described above

The polyol composition may have the Controlled Polymerization Rate (CPR) value described above.

The polyol composition may have the active oxygen content value described above.

The polyol composition may include the compound represented by Formula 1 described above.

A method of preparing the polyol composition according to the present invention may include a step (a) of performing a dehydration process by mixing at least one 1,4:3,6-dianhydrohexitol and a catalyst, a step (b) of producing a first polymer by reacting the dehydrated 1,4:3,6-dianhydrohexitol with a substituted or unsubstituted branched alkylene oxide having 3 to 10 carbon atoms, and a step (c) of producing a second polymer by reacting the first polymer with a substituted or unsubstituted linear alkylene oxide having 2 to 10 carbon atoms after the production of the first polymer according to the step (b) is completed, wherein the polyol composition may have an acid value of less than 0.02 mgKOH/g according to the following measurement method:

<Measurement method>

1) A first flask containing the polyol composition and a second flask without the polyol composition are prepared, 50 ml of methanol is added to each of the first flask and the second flask, followed by stirring for 30 minutes.
2) 0.5 ml of a 1% phenolphthalein indicator is added to each of the first flask and the second flask, followed by titrating with 0.02 N potassium hydroxide (KOH) until the compositions of the first flask and the second flask turn pink for 30 seconds.
3) Acid values are calculated using Equation 1 below:

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

FIG. 5 is a flowchart briefly illustrating a process of preparing the polyol composition according to the present invention. Referring to FIG. 5, the preparation method of the present invention may include a dehydration step (S10-1). The step (S10-1) may be the same as the step (S10) described above.

The preparation method of the present invention may include a step (S20-1) of preparing the first polymer. The step (S20-1) may be the same as the step (S20) described above.

The preparation method of the present invention may include a step (S30-1) of preparing the second polymer. The step (S30-1) may be the same as the step (S30) described above.

The preparation method of the present invention may further include a step (S40-1) of removing and filtering a metal ion residue; and a step (S0-1) of adding an antioxidant. In step (S40-1), a metal ion residue in the polyol composition may be removed and filtered, and, in the step (S50-1), a process of adding an antioxidant to the polyol composition may be conducted.

In step (S40-1), an additive may be introduced into the polyol composition, which has undergone the reaction, to remove the metal ion residue. The additive may be one or more selected from the group consisting of diatomaceous earth, alumina, MAGNESOL, CELITE, AMBOSOL, and silica gel.

The additive may be introduced in the form of an aqueous dispersion into the polyol composition that has undergone the reaction. The additive may be introduced in a content of 1 part by weight to 10 parts by weight, 1 part by weight to 8 parts by weight, 2 parts by weight to 8 parts by weight, 3 parts by weight to 8 parts by weight, or 3 parts by weight to 6 parts by weight, based on 100 parts by weight of the 1,4:3,6-dianhydrohexitol, into the polyol composition that has undergone the reaction.

Next, in S40-1, a process of neutralizing the polyol composition with the additive added may be performed. The neutralization process may be performed for about 1 hour to about 4 hours, about 1 hour to about 3 hours, or about 1 hour to about 2 hours. Next, the polyol composition that has undergone the neutralization process may be subjected to the moisture removal process. The moisture removal process may be performed at about 90°C to about 130°C, about 95°C to about 130°C, or about 100°C to about 130°C. As needed, the step (S40-1) may include a process of detecting the metal ion residue, and when the metal ion residue is not detected, the polyol composition may be performed at about 50°C to about 90°C, about 50°C to about 80°C, or about 60°C to about 80°C. In S40, the polyol composition where moisture has been removed may be filtered. The additive and by-products may be filtered by the filtering.

In S50-1, an antioxidant including one or more selected from the group consisting of a phenol-based antioxidant (e.g., dibutylhydroxytoluene), a sulfur-based antioxidant (e.g., a mercaptopropionic acid derivative, etc.) and a phosphorus-based antioxidant (e.g., 9,10-dihydro-9-oxa-10-phosphaphenanthrene-10-oxide, etc.) may be added to the polyol composition. The antioxidant may be introduced in an amount of 0.01 % by weight to 3 % by weight, 0.01 % by weight to 2 % by weight, 0.02 % by weight to 2 % by weight, 0.02 % by weight to 1 % by weight, or 0.03 % by weight to 1 % by weight based on the total weight of the polyol composition. The heat stability of polyurethane foam obtained from the polyol composition may be improved by the antioxidant, and the odor generation may be reduced.

The polyol composition prepared according to the preparation method may have an acid value of less than 0.02 mgKOH/g, 0.019 mgKOH/g or less, 0.018 mgKOH/g or less, 0.015mgKOH/g or less, or 0.012 mgKOH/g or less according to the following measurement method, and there is no need to specifically limit a lower limit of the acid value, but the lower limit may be greater than 0 mgKOH/g, 0.005 mgKOH/g or more, or 0.010 mgKOH/g or more:

<Measurement method>

1) A first flask containing the polyol composition and a second flask without the polyol composition are prepared, 50 ml of methanol is added to each of the first flask and the second flask, followed by stirring for 30 minutes.
2) 0.5 ml of a 1% phenolphthalein indicator is added to each of the first flask and the second flask, followed by titrating with 0.02 N potassium hydroxide (KOH) until the compositions of the first flask and the second flask turn pink for 30 seconds.
3) Acid values are calculated using Equation 1 below:

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

When the range is satisfied, the acid resistance of polyurethane foam manufactured from the polyol composition may be enhanced, and the reactivity between the polyol composition and an isocyanate-based composition may be improved.

The composition for preparing polyurethane according to the present invention may include a first unit derived from at least one 1,4:3,6-dianhydrohexitol, and a second unit derived from alkylene oxide, and may include a polyol composition having an acid value of less than 0.02 mgKOH/g according to the following measurement method; and an isocyanate-based composition:

<Measurement method>

1) A first flask containing the polyol composition and a second flask without the polyol composition are prepared, 50 ml of methanol is added to each of the first flask and the second flask, followed by stirring for 30 minutes.
2) 0.5 ml of a 1% phenolphthalein indicator is added to each of the first flask and the second flask, followed by titrating with 0.02 N potassium hydroxide (KOH) until the compositions of the first flask and the second flask turn pink for 30 seconds.
3) Acid values are calculated using Equation 1 below:

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

The polyol composition and the isocyanate-based composition may be the same as the polyol composition and isocyanate-based composition described above.

Polyurethane foam may be produced from the composition for preparing polyurethane. The composition for preparing polyurethane may be the same as the above-described composition for preparing polyurethane.

The battery module according to the present invention is a battery module including a housing, a plurality of battery cells accommodated inside the housing, and polyurethane foam arranged between the plural battery cells, the polyurethane foam includes a composition for preparing polyurethane including a polyol composition and an isocyanate-based composition, and the polyol composition includes a first unit derived from at least one 1,4:3,6-dianhydrohexitol, and a second unit derived from alkylene oxide and has an acid value of less than 0.02 mgKOH/g according to the following measurement method:

<Measurement method>

1) A first flask containing the polyol composition and a second flask without the polyol composition are prepared, 50 ml of methanol is added to each of the first flask and the second flask, followed by stirring for 30 minutes.
2) 0.5 ml of a 1% phenolphthalein indicator is added to each of the first flask and the second flask, followed by titrating with 0.02 N potassium hydroxide (KOH) until the compositions of the first flask and the second flask turn pink for 30 seconds.
3) Acid values are calculated using Equation 1 below:

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

The battery module according to the present invention may refer to the same contents as those of FIG. 3 described above.

< Polyol composition according to fourth example >

A polyol composition according to the present invention may include a first unit derived from at least one 1,4:3,6-dianhydrohexitol, and a second unit derived from alkylene oxide, and may have a Degree Of Unsaturation (DOU) of 0.02 meq/g or less according to the following measurement method:

<Measurement method>

1) A first flask containing 30 g of the polyol composition and a second flask without the polyol composition were prepared, and 50 ml of mercuric acetate was fed into each of the first flask and the second flask, followed by stirring for 30 minutes.
2) 9 g of sodium bromide (NaBr) was added to each of the first flask and the second flask, followed by stirring for 30 minutes.
3) 0.5 ml of a 1% phenolphthalein indicator was added to each of the first flask and the second flask, followed by titrating with 0.1 N potassium hydroxide (KOH).
4) DOU was calculated according to Equation 1 below:

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

The 1,4:3,6-dianhydrohexitol and the isosorbide may be the same as the 1,4:3,6-dianhydrohexitol and isosorbide described above.

The alkylene oxide may be the same as the alkylene oxide described above.

The DOU of the polyol composition according to the following measurement method may be 0.02 meq/g or less:

<Measurement method>

1) A first flask containing 30 g of the polyol composition and a second flask without the polyol composition were prepared, and 50 ml of mercuric acetate was fed into each of the first flask and the second flask, followed by stirring for 30 minutes.
2) 9 g of sodium bromide (NaBr) was added to each of the first flask and the second flask, followed by stirring for 30 minutes.
3) 0.5 ml of a 1% phenolphthalein indicator was added to each of the first flask and the second flask, followed by titrating with 0.1 N potassium hydroxide (KOH).
4) DOU was calculated according to Equation 1 below:

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

The degree of unsaturation refers to the content of monol in the polyol composition. Specifically, the unsaturation degree may be expressed as mg unsaturation equivalent (meq/g) per 1 g of the polyol composition.

The monol may be produced in a process of addition-polymerizing propylene oxide to 1,4:3,6-dianhydrohexitol using a catalyst. Specifically, the monol may be generated in the process of the propylene oxide being rearranged to allyl alcohol.

The monol may cause a decrease in the functional group of the polyol composition, and may hinder crosslinking and high-molecular-weight formation during polyurethane production when the polyol composition is used, which may result in a decrease in the physical properties of the polyurethane resin.

The degree of unsaturation of the polyol composition may be 0.020 meq/g or less, 0.015 meq/g or less, 0.013 meq/g or less, 0.010 meq/g or less, 0.005 meq/g or less, 0.0045 meq/g or less, 0.0040 meq/g or less, 0.0038 meq/g or less, 0.0036 meq/g or less, 0.0034 meq/g or less, 0.0033 meq/g or less, 0.0032 meq/g or less, 0.0031 meq/g or less, or 0.0030 meq/g or less. When the range is satisfied, reactivity with isocyanate is excellent, and when manufacturing a polyurethane resin from the polyol composition, crosslinking and high-molecular-weight formation may proceed smoothly, so that the physical properties of the polyurethane resin may be improved.

The polyol composition may include a compound represented by Formula 3 below:

[Formula 3]

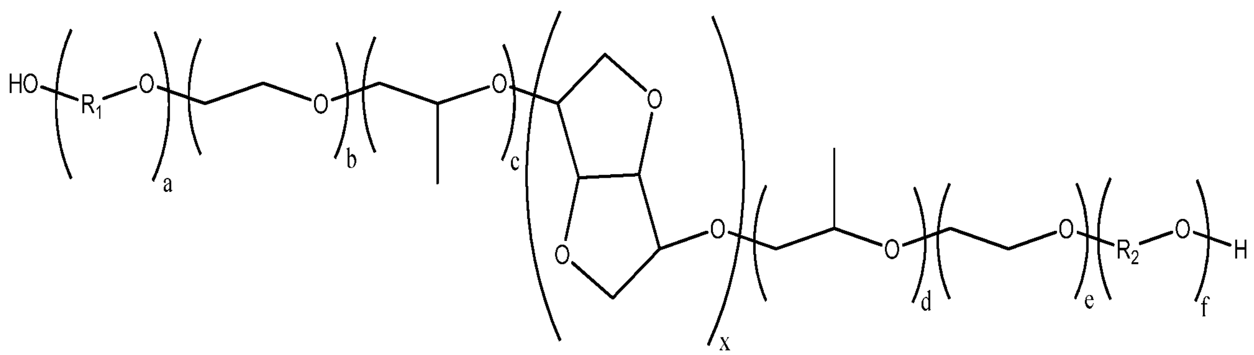

In Formula 3, $R_1$ and $R_2$ are each independently a substituted or unsubstituted alkylene group having 2 to 10 carbon atoms, a and f are each independently an integer of 1 to 60, b and e are each independently an integer of 1 to 6, c and d are each independently an integer of 1 to 30, and x is an integer of 1 to 5.

The compound represented by Formula 3 may include a parent structure derived from at least one 1,4:3,6-dianhydrohexitol. The 1,4:3,6-dianhydrohexitol may include isosorbide.

A ratio of (b+e):(c+d) may be 1:1.5 to 1:6. Preferably, the ratio of (b+e):(c+d) may be 1:2 to 1:6, 1:2.5 to 1:6, or 1:3 to 1:6. (b+c) and (d+e) may be each independently 3 to 50. Preferably, (b+c) and (d+e) may be each independently 3 to 30, 3 to 20, 5 to 20, 5 to 10, or 5 to 9. When the range is satisfied, a polyurethane foam containing the compound may have improved hardness, reduced permanent compression set, and excellent appearance due to its smooth surface.

In addition, when an appropriate level of Compression Force Deformation (CFD) is achieved and thus polyurethane foam is applied to a battery module, a volume change due to the expansion of battery cells may be buffered so

that a volume constant may be maintained, thereby improving product stability. The CFD is a parameter that represents a repulsive force when a measurement target is compressed.

The CFD may be evaluated by measuring a repulsive force when polyurethane foam is cut into 5 cm × 5 cm sizes at room temperature and compressed using a device such as a Universal Testing Machine (UTM). For example, the repulsive force when the polyurethane foam is compressed by 25% may be evaluated by a CFD 25% value, and a desirable CFD 25% value may have a range of about more than 0.06 kg/$cm^2$ to less than 0.15 kg/$cm^2$. In addition, the repulsive force when the polyurethane foam is compressed by 50% may be evaluated by a CFD 50% value, and a desirable CFD 50% value may have a range of more than about 0.09 kg/$cm^2$ and less than about 0.20 kg/$cm^2$.

In Formula 3, $R_1$ and $R_2$ may be each independently a substituted or unsubstituted branched alkylene group having 3 to 10 carbon atoms. The branched alkylene group may be propylene oxide.

In Formula 3, $R_1$ and $R_2$ may be each independently a polymer in which a substituted or unsubstituted linear alkylene group having 2 to 10 carbon atoms and a substituted or unsubstituted branched alkylene group having 3 to 10 carbon atoms are randomly polymerized. The linear alkylene group may be ethylene oxide.

In the compound represented by Formula 3, a first block where the branched alkylene group is polymerized to a parent structure derived from at least one 1,4:3,6-dianhydrohexitol; and a second block where the linear alkylene group is coupled to the first block may be formed. In addition, a third block where the branched alkylene group is coupled to the second block may be formed. In addition, a third block where the linear alkylene group and the branched alkylene group are randomly coupled to the second block may be formed.

The types of compounds represented by Formula 3 may be represented by the compounds of Formulas A to G below:

[Formula A]

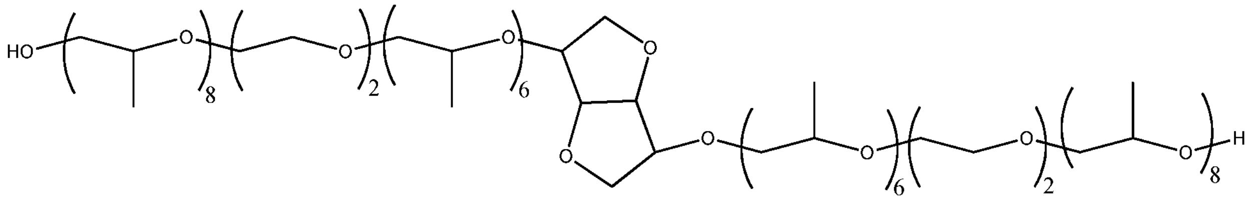

[Formula B]

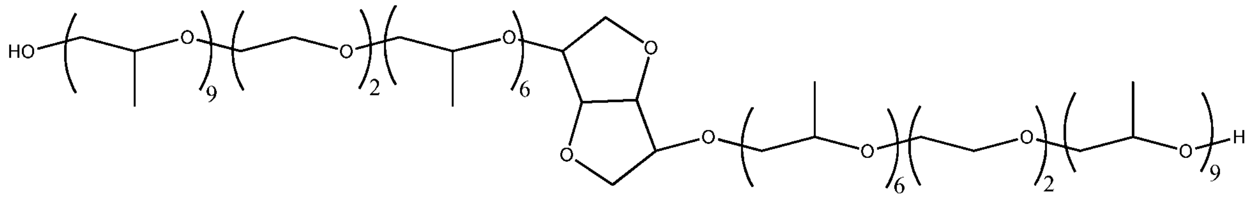

[Formula C]

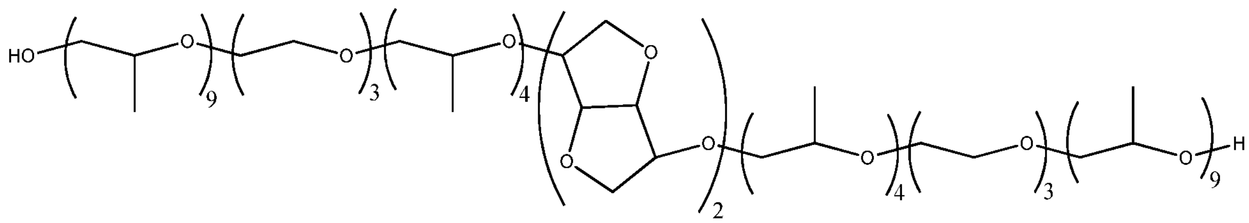

[Formula D]

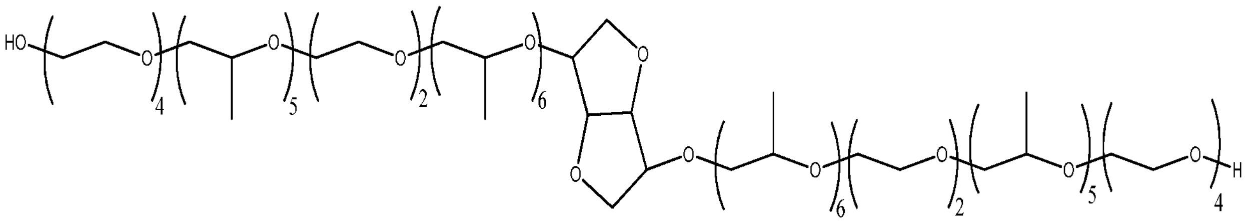

[Formula E]

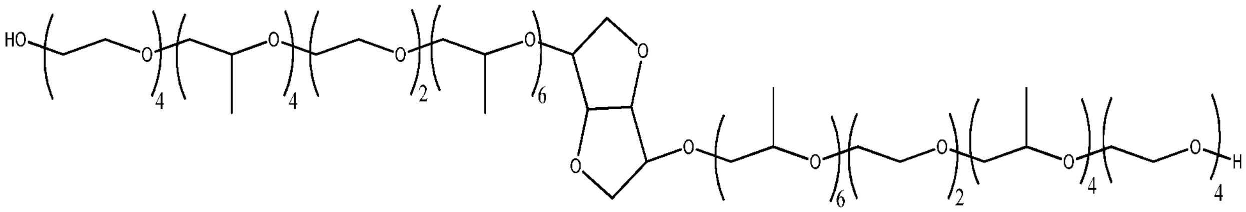

[Formula F]

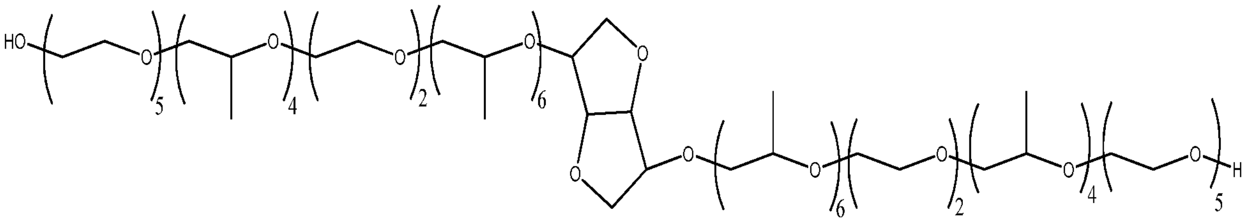

[Formula G]

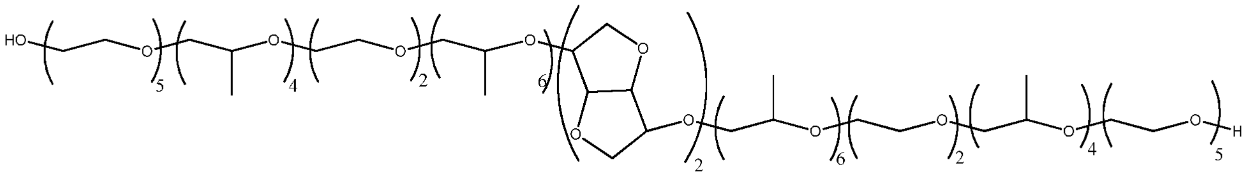

The polyol composition may further include the antioxidant described above.

The polyol composition may have the Controlled Polymerization Rate (CPR) value described above.

The polyol composition may have the acid value described above.

The polyol composition may have the number average molecular weight (Mn) and polydispersity index (PDI) described above.

The polyol composition may have the American Public Health Association (APHA) color value described above.

The polyol composition may have the active oxygen content value described above.

The viscosity of the polyol composition may be the same as the viscosity described above.

A method of preparing the polyol composition according to the present invention may include a step (a) of initiating a polymerization reaction by mixing at least one 1,4:3,6-dianhydrohexitol and an alkaline catalyst, a step (b) of reacting 1,4:3,6-dianhydrohexitol with alkylene oxide to prepare a prepolymer, and a step (c) of reacting the prepolymer, prepared in the step (b), with alkylene oxide in the presence of a double-metal cyanide catalyst to prepare a polyol composition, wherein the degree of unsaturation of the polyol composition according to the following measurement method is 0.02 meq/g or less:

<Measurement method>

1) A first flask containing 30 g of the polyol composition and a second flask without the polyol composition were prepared, and 50 ml of mercuric acetate was fed into each of the first flask and the second flask, followed by stirring for 30 minutes.
2) 9 g of sodium bromide (NaBr) was added to each of the first flask and the second flask, followed by stirring for 30 minutes.
3) 0.5 ml of a 1% phenolphthalein indicator was added to each of the first flask and the second flask, followed by titrating with 0.1 N potassium hydroxide (KOH).
4) DOU was calculated according to Equation 1 below:

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

FIG. 6 is a flow chart briefly illustrating a preparation process of a polyol composition according to the present invention. Referring to FIG. 6, the preparation method of the present invention may include a step (S10-2) of initiating a polymerization reaction. In the step (S10-2), at least one 1,4:3,6-dianhydrohexitol may be mixed with an alkali catalyst. The 1,4:3,6-dianhydrohexitol and the alkali catalyst may be the same as the 1,4:3,6-dianhydrohexitol and alkali catalyst described above.

The preparation method of the present invention may include a step (S20-2) of preparing a prepolymer. In the step (S20-2), a prepolymer may be prepared by reacting 1,4:3,6-dianhydrohexitol with alkylene oxide. The method of preparing the prepolymer may be the same as the method of preparing the second polymer described above.

The preparation method of the present invention may include a step (S30-2) of preparing a polyol composition. In the step (S30-2), a polyol composition may be prepared by reacting the prepolymer prepared in S20-2 with alkylene oxide in the presence of a double-metal cyanide catalyst.

The double-metal cyanide catalyst may be represented by Formula 4 below:

[Formula 4] $M_a[M'(CN)_6]_b L_c L'_d$

In Formula 4, M is a metal element selected from the group consisting of Zn(II), Fe(II), Ni(II), Mn(II), Co(II), Sn(II), Pb(II), Fe(III), Mo(IV), Mo(VI), Al(II), V(V), V(IV), Sr(II), W(IV), W(VI), Cu(II) and Cr(III), M' is a metal element selected from the group consisting of Fe(II), Fe(III), Co(II), Co(III), Cr(II), Cr(III), Mn(II), Mn(III), Ir(III), Ni(II), Rh(III), Ru(II), V(V) and V(IV), L is an alcohol ligand having 1 to 7 carbon atoms, L' is an ether having a number average molecular weight of less than 200 g/mol, and a, b, c and d are integers whose sum is equal to the sum of the charges of M and M'.

The double-metal cyanide catalyst may be prepared by reacting a metal salt and a metal cyanide with a complexing agent. The metal salt may be a water-soluble metal salt. The metal cyanide may be a water-soluble metal cyanide. Specifically, the water-soluble metal cyanide may be potassium(III) hexacyanocobaltate, potassium(II) hexacyanoferrate, potassium(III) hexacyanoferrate, calcium(II) hexacyanocobaltate, or lithium(II) hexacyanoferrate(lithium hexacyanoferrate).

When the double-metal cyanide catalyst is used in S30-2, the generation of monols may be reduced upon polymerizing a first prepolymer with propylene oxide. Accordingly, the degree of unsaturation in the polyol composition may be reduced, so that crosslinking and high-molecular-weight formation may be smoothly carried out when producing polyurethane resin, and the physical properties of polyurethane resin may be improved.

In S30-2, it is preferable not to use the double-metal cyanide catalyst and the alkali catalyst together. The amount of the alkali catalyst may increase depending on the selective activity of the double-metal cyanide catalyst, so that a large amount of an alkali catalyst may remain after producing a polyol composition. Accordingly, an additional process for removing the alkali catalyst is essentially required, which may lower the efficiency of the production process. In addition, the generation of monols may be increased by the alkali catalyst, so that crosslinking and high-molecular-weight formation may be hindered when producing polyurethane resin, and the physical properties of polyurethane resin may be decresed.

The polyol composition prepared according to the preparation method may include a compound represented by Formula 3 below:

[Formula 3]

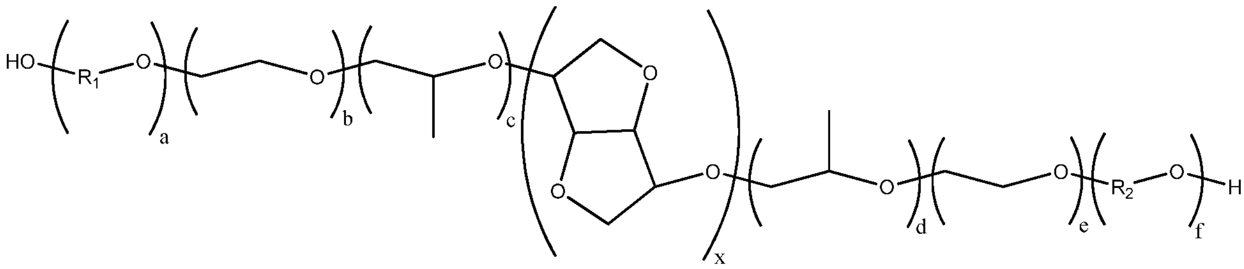

In Formula 3, $R_1$ and $R_2$ are each independently a substituted or unsubstituted alkylene group having 2 to 10 carbon atoms, a and f are each independently an integer of 1 to 60, b and e are each independently an integer of 1 to 6, c and d are each independently an integer of 1 to 30, and x is an integer of 1 to 5.

The composition for preparing polyurethane according to the present invention may include a first unit derived from at least one 1,4:3,6-dianhydrohexitol, and a second unit derived from alkylene oxide, and may include a polyol composition having a DOU of 0.02 meq/g or less according to the following measurement method, and an isocyanate-based composition.

<Measurement method>

1) A first flask containing 30 g of the polyol composition and a second flask without the polyol composition were prepared, and 50 ml of mercuric acetate was fed into each of the first flask and the second flask, followed by stirring for 30 minutes.
2) 9 g of sodium bromide (NaBr) was added to each of the first flask and the second flask, followed by stirring for 30 minutes.
3) 0.5 ml of a 1% phenolphthalein indicator was added to each of the first flask and the second flask, followed by titrating with 0.1 N potassium hydroxide (KOH).
4) DOU was calculated according to Equation 1 below:

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

The polyol composition and the isocyanate-based composition may be the same as the polyol composition and isocyanate-based composition described above.

Polyurethane foam may be produced from the composition for preparing polyurethane. The composition for preparing polyurethane may be the same as the above-described composition for preparing polyurethane.

The battery module according to the present invention is a battery module including a housing, a plurality of battery cells accommodated inside the housing, and polyurethane foam arranged between the plural battery cells, the polyurethane foam includes a composition for preparing polyurethane including a polyol composition and an isocyanate-based composition, and the polyol composition includes a first unit derived from at least one 1,4:3,6-dianhydrohexitol, and a second unit derived from alkylene oxide, and has a DOU of 0.02 meq/g or less according to the following measurement method:

<Measurement method>

1) A first flask containing 30 g of the polyol composition and a second flask without the polyol composition were prepared, and 50 ml of mercuric acetate was fed into each of the first flask and the second flask, followed by stirring for

30 minutes.

2) 9 g of sodium bromide (NaBr) was added to each of the first flask and the second flask, followed by stirring for 30 minutes.

3) 0.5 ml of a 1% phenolphthalein indicator was added to each of the first flask and the second flask, followed by titrating with 0.1 N potassium hydroxide (KOH).

4) DOU was calculated according to Equation 1 below:

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

The battery module according to the present invention may refer to the same contents as those of FIG. 3 described above.

< Polyol composition according to fifth example >

The polyether polyol according to the present invention may be included in a polyol composition.

A method of preparing polyether polyol according to the present invention may include a step (a) of reacting at least one 1,4:3,6-dianhydrohexitol with a first alkylene oxide in the presence of an alkali catalyst to prepare a first polymer, and a step (b) of reacting a first polymer with a second alkylene oxide in the presence of a double-metal cyanide catalyst to prepare a second polymer.

FIG. 7 is a flowchart briefly illustrating a process of preparing the polyether polyol according to the present invention. Referring to FIG. 7, the preparation method of the present invention may include a step (S10-3) of preparing the first polymer. In the step (S10-3), the first polymer may be prepared by reacting at least one 1,4:3,6-dianhydrohexitol with the first alkylene oxide in the presence of an alkali catalyst. The step (S10-3) may be the same as the step of preparing the prepolymer described above.

The 1,4:3,6-dianhydrohexitol and the isosorbide may be the same as the 1,4:3,6-dianhydrohexitol and isosorbide described above.

The alkylene oxide may be the same as the alkylene oxide described above.

Specifically, the step (a) may include a step (a-1) of mixing 1,4:3,6-dianhydrohexitol with the alkali catalyst to perform a dehydration process, a step (a-2) of, after the dehydration process, reacting 1,4:3,6-dianhydrohexitol with the substituted or unsubstituted branched alkylene oxide having 3 to 10 carbon atoms to prepare a 1-1 polymer, and a step (a-3) of, after completing the production of the 1-1 polymer, reacting the 1-1 polymer with the substituted or unsubstituted linear alkylene oxide having 2 to 10 carbon atoms to prepare a 1-2 polymer.

After the step (a-3), the step (a) may include a step (a-4) of removing a metal ion residue in the composition including the 1-2 polymer; and a step (a-5) of filtering the composition.

FIG. 8 is a flowchart specifically illustrating the step of preparing the first polymer. Referring to FIG. 8, the step (S10-3) may include a step (S11) of performing a dehydration process. In the step (S11), the dehydration process may be performed by mixing 1,4:3,6-dianhydrohexitol with the alkali catalyst.

The 1,4:3,6-dianhydrohexitol may be introduced into a batch reactor.

The 1,4:3,6-dianhydrohexitol may be introduced into the batch reactor in a content of about 15 % by weight to about 50 % by weight, about 15 % by weight to about 40 % by weight, about 25 % by weight to about 40 % by weight, or about 25 % by weight to about 35 % by weight based on the total of raw materials fed into the batch reactor.

The 1,4:3,6-dianhydrohexitol may be introduced in a solid state into the batch reactor. The 1,4:3,6-dianhydrohexitol may be introduced in a powder form into the batch reactor.

The particles of the 1,4:3,6-dianhydrohexitol may have a sphere shape, a flake shape, or a rod shape.

The purity of the 1,4:3,6-dianhydrohexitol may be about 80% or more, about 90% or more, about 95% or more, or about 97% or more.

The average particle diameter of the 1,4:3,6-dianhydrohexitol may be about 10 μm to about 200 μm about 10 μm to about 150 μm, about 10 μm to about 100 μm, or about 30 μm to about 100 μm. The average particle diameter is measured using a laser diffraction method, and may be defined as a particle diameter corresponding to 50% of a volume accumulation amount in a particle diameter distribution curve.

The moisture content of the 1,4:3,6-dianhydrohexitol may be about less than 5 % by weight, less than about 4 % by weight, less than about 3 % by weight, less than about 2 % by weight, or less than about 1 % by weight. The moisture

content may be calculated by subtracting the weight of 1,4:3,6-dianhydrohexitol after drying from the weight of 1,4:3,6-dianhydrohexitol before drying, dividing the value by the weight of 1,4:3,6-dianhydrohexitol before drying, and then multi. The drying is performed by raising the temperature from room temperature to about 150°C and then maintaining 150°C, and the total drying time may be set to 20 minutes including 5 minutes of a temperature-raising step.

The 1,4:3,6-dianhydrohexitol may be introduced in an aqueous solution state into the batch reactor. The 1,4:3,6-dianhydrohexitol may be introduced at a concentration of about 70 % by weight to about 90 % by weight, about 75 % by weight to about 90 % by weight, or about 75 % by weight to about 85 % by weight into the batch reactor.

The 1,4:3,6-dianhydrohexitol may introduced into the batch reactor in batches. The 1,4:3,6-dianhydrohexitol may be introduced into the batch reactor for about 5 minutes to about 60 minutes, about 10 minutes to about 50 minutes, or about 20 minutes to about 40 minutes. The 1,4:3,6-dianhydrohexitol may be divisionally fed in equal portions into the batch reactor for about 5 minutes to about 60 minutes, about 10 minutes to about 50 minutes, or about 20 minutes to about 40 minutes.

The alkali catalyst may include one or more strong bases selected from the group consisting of potassium hydroxide, sodium hydroxide, potassium metal, and sodium metal.

In S11, it is preferred not to use a double-metal cyanide catalyst (DMC). In general, the double-metal cyanide catalyst may essentially require a catalyst activation induction time of 1 hour or more, and since polymerization reaction occurs little or no until the catalyst is activated, the efficiency of the production process may be significantly reduced.

The alkali catalyst may be introduced into the batch reactor in an aqueous solution state. For example, an aqueous potassium hydroxide solution may be introduced into the batch reactor. The alkali catalyst may be introduced into the batch reactor after the 1,4:3,6-dianhydrohexitol is introduced. The alkali catalyst may be introduced into the batch reactor in batches. The alkali catalyst may be introduced into the batch reactor for about 1 minute to about 20 minutes, about 3 minutes to about 15 minutes, or about 8 minutes to about 12 minutes. The 1,4:3,6-dianhydrohexitol may be divisionally introduced in equal portions into the batch reactor for about 1 minute to about 20 minutes, about 3 minutes to about 15 minutes, or about 8 minutes to about 12 minutes.

In S11, the alkali catalyst and the 1,4:3,6-dianhydrohexitol may be mixed in a weight ratio of 1:10 to 1,000, 1:10 to 500, 1:10 to 300, 1:10 to 200, 1:10 to 100, 1:20 to 100, or 1:30 to 100 (the alkali catalyst: the 1,4:3,6-dianhydrohexitol) to perform the dehydration process of the 1,4:3,6-dianhydrohexitol. When the range is satisfied, the dehydration reaction rate of 1,4:3,6-dianhydrohexitol may be improved, and the amount of residual alkali catalyst may be minimized.

The dehydration process of the 1,4:3,6-dianhydrohexitol may be performed at about 80°C to about 120°C, about 90°C to about 120°C, or about 100°C to about 120°C.

The dehydration process of the 1,4:3,6-dianhydrohexitol may be performed under a pressure condition of about 0.1 torr to about 100.0 torr, about 0.1 torr to about 80.0 torr, or about 0.1 torr to about 20.0 torr.

The dehydration process of the 1,4:3,6-dianhydrohexitol may be performed for about 1 hour to about 6 hours, about 1 hour to about 5 hours, or about 2 hours to about 4 hours.

The dehydration process of the 1,4:3,6-dianhydrohexitol may be performed at about 80°C to about 120°C for about 1 hour to about 5 hours. Preferably, the dehydration process of the 1,4:3,6-dianhydrohexitol may be performed at about 80°C to about 120°C under a pressure condition of about 0.1 torr to about 20.0 torr for about 2 hours to about 4 hours.

After the dehydration process of S11, the content of remaining moisture may be less than 2,000 ppm, 1,000 ppm or less, 500 ppm or less or 300 ppm or less based on the total weight of the composition. The composition may mean the dehydrated 1,4:3,6-dianhydrohexitol. When the range is satisfied, the yield of polyether polyol may be improved, and the mechanical properties of polyurethane foam produced from the polyether polyol may be improved.

The step (S10-3) may include a step (S12) of preparing a 1-1 polymer. The step (S12) may include a step of reacting the 1,4:3,6-dianhydrohexitol with the substituted or unsubstituted branched alkylene oxide having 3 to 10 carbon atoms to prepare the 1-1 polymer, after the dehydration process.

In S12, the 1,4:3,6-dianhydrohexitol and the substituted or unsubstituted branched alkylene oxide having 3 to 10 carbon atoms may be reacted in a batch reactor, and the branched alkylene oxide may be introduced into the batch reactor at a rate of 3 g/min to 6 g/min, 3.5 g/min to 6 g/min, 3.5 g/min to 5.5 g/min, or 4 g/min to 5 g/min.

The branched alkylene oxide may be introduced into the batch reactor in an amount of about 100 parts by weight to about 500 parts by weight, about 150 parts by weight to about 500 parts by weight, or about 150 parts by weight to about 450 parts by weight based on 100 parts by weight of the 1,4:3,6-dianhydrohexitol.

The substituted or unsubstituted branched alkylene oxide having 3 to 10 carbon atoms may be propylene oxide.

The propylene oxide may be introduced into the batch reactor.

The introduction process of the propylene oxide may be performed under a temperature condition of about 80°C to about 130°C, about 90°C to about 130°C, or about 100°C to about 120°C.

The introduction process of the propylene oxide may be performed under a pressure condition of about 0.1 torr to about 100.0 torr, about 0.1 torr to about 50.0 torr, or about 0.1 torr to about 30.0 torr.

The introduction process of the propylene oxide may be performed for about 3 hours to about 10 hours, about 5 hours to about 10 hours, or about 6 hours to about 9 hours. Preferably, the introduction process of the propylene oxide may

be performed at about 80°C to about 120°C under a pressure condition of about 2 torr to about 8 torr for about 6 hours to about 9 hours.

The propylene oxide may undergo an addition reaction with the 1,4:3,6-dianhydrohexitol in the batch reactor. A 1-1 polymer wherein the propylene oxide-derived repeating unit is included in the parent structure of the 1,4:3,6-dianhydrohexitol may be prepared by the addition reaction. The propylene oxide-derived repeating unit may refer to a component or structure derived from propylene oxide, or propylene oxide itself.

The addition reaction between the 1,4:3,6-dianhydrohexitol and the propylene oxide may be performed at about 80°C to about 150°C, about 90°C to about 150°C, or about 100°C to about 140°C.

The addition reaction between the 1,4:3,6-dianhydrohexitol and the propylene oxide may be performed for about 1 hour to about 4 hours, about 1 hour to about 3 hours, or about 1 hour to about 2 hours. Preferably, the addition reaction between the 1,4:3,6-dianhydrohexitol and the propylene oxide may be performed at about 100°C to about 140°C for about 1 hour to about 2 hours.

S12 may further include a process of removing a branched alkylene oxide residue after preparing the 1-1 polymer. The branched alkylene oxide residue may be propylene oxide. By removing the branched alkylene oxide residue, the reactivity with isocyanate may be improved, the hardness and appearance of the polyurethane foam may be improved, and the manufacturing economy may be improved.

The process of removing the propylene oxide residue may be performed at about 80°C to about 150°C, about 90°C to about 150°C, or about 100°C to about 140°C.

The process of removing the propylene oxide residue may be performed under a pressure condition of about 0.1 torr to about 100.0 torr, about 0.1 torr to about 80.0 torr, or about 0.1 torr to about 20.0 torr.

The process of removing the propylene oxide residue may be performed for about 10 minutes to about 120 minutes, about 10 minutes to about 60 minutes, or about 20 minutes to about 40 minutes. Preferably, the process of removing the propylene oxide residue may be performed at about 100°C to about 140°C under a pressure condition of about 0.1 torr to about 20.0 torr for about 20 minutes to about 40 minutes.

The step (S10-3) may include a step (S13) of preparing a 1-2 polymer. The step (S13) may include a step of reacting the 1-1 polymer with the substituted or unsubstituted linear alkylene oxide having 2 to 10 carbon atoms to prepare the 1-2 polymer, after completing the production of the 1-1 polymer.

In S13, the 1-1 polymer and the substituted or unsubstituted linear alkylene oxide having 2 to 10 carbon atoms may be reacted in the batch reactor, and the linear alkylene oxide may be introduced into the batch reactor at a rate of 1.5 g/min to 3 g/min, 1.6 g/min to 3 g/min, 1.7 g/min to 3 g/min, 1.8 g/min to 3 g/min, or 2.0 g/min to 3 g/min.

The linear alkylene oxide may be introduced into the batch reactor in an amount of about 10 parts by weight to about 100 parts by weight, about 10 parts by weight to about 90 parts by weight, or about 20 parts by weight to about 80 parts by weight based on 100 parts by weight of the 1,4:3,6-dianhydrohexitol.

The amount of the linear alkylene oxide of the step (S13) may be about 10 parts by weight to about 100 parts by weight, about 10 parts by weight to about 90 parts by weight, about 10 parts by weight to about 80 parts by weight, about 10 parts by weight to about 70 parts by weight, or about 10 parts by weight to about 60 parts by weight, relative to 100 parts by weight of the branched alkylene oxide of the step (S12). When the range is satisfied, the reactivity with isocyanate may increase, and the hardness and appearance quality of polyurethane foam produced from the polyether polyol may be improved.

The substituted or unsubstituted linear alkylene oxide having 2 to 10 carbon atoms may be ethylene oxide.

The ethylene oxide may be introduced into the batch reactor in which the 1-1 polymer has been prepared.

The introduction process of the ethylene oxide may be performed about 80°C to about 140°C, about 90°C to about 140°C, or about 120°C to about 130°C.

The introduction process of the ethylene oxide may be performed under a pressure condition of about 0.1 torr to about 100.0 torr, about 0.1 torr to about 50.0 torr, or about 0.1 torr to about 30.0 torr.

The introduction process of the ethylene oxide may be performed for about 1 hour to about 5 hours, about 1 hour to about 3 hours, or about 2 hours to about 3 hours. Preferably, the introduction process of the ethylene oxide may be performed at about 120°C to about 130°C under a pressure condition of about 0.1 torr to about 30.0 torr for about 2 hours to about 3 hours.

The ethylene oxide may undergo an addition reaction with the 1-1 polymer in the batch reactor. A second polymer in which the ethylene oxide-derived repeating unit is included in the first polymer may be prepared by the addition reaction. In addition, a 1-2 polymer in which the propylene oxide-derived repeating unit and the ethylene oxide-derived repeating unit are included as a block copolymer may be prepared. The ethylene oxide-derived repeating unit may refer to a component or structure derived from ethylene oxide, or ethylene oxide itself.

An addition reaction between the 1-1 polymer and the ethylene oxide may be performed at about 80°C to about 150°C, about 90°C to about 150°C, or about 100°C to about 140°C.

The addition reaction between the 1-1 polymer and the ethylene oxide may be performed for about 1 hour to about 4 hours, about 1 hour to about 3 hours, or about 1 hour to about 2 hours. Preferably, the addition reaction between the 1-1

polymer and the ethylene oxide may be performed at about 100°C to about 140°C for about 1 hour to about 2 hours.

In S13, a process of removing a linear alkylene oxide residue may be further included after preparing the 1-2 polymer. The linear alkylene oxide residue may be ethylene oxide.

The process of removing the ethylene oxide residue may be performed at about 80°C to about 150°C, about 90°C to about 150°C, or about 100°C to about 140°C.

The process of removing the propylene oxide residue may be performed under a pressure condition of about 0.1 torr to about 100.0 torr, about 0.1 torr to about 80.0 torr, or about 0.1 torr to about 20.0 torr.

The process of removing the ethylene oxide residue may be performed for about 30 minutes to about 200 minutes, about 30 minutes to about 100 minutes, or about 40 minutes to about 80 minutes. Preferably, the process of removing the ethylene oxide residue may be performed under a temperature condition of about 100°C to about 140°C and a pressure condition about 0.1 torr to about 20.0 torr for about 40 minutes to about 80 minutes.

The step (S10-3) may include a step (S14) of removing a metal ion residue; and a filtration step (S15). The step (S14) may include a step of removing a metal ion residue in the composition containing the 1-2 polymer, after the step (S13). The step (S15) may include a step of filtering the composition.

In S14, the metal ions may be removed using a metal adsorbent and a filter aid.

The metal adsorbent may adsorb, for example, residual potassium ions. The filtering process of polyether polyol may be performed smoothly by the filter aid. When only the metal adsorbent is used, the filtering process of polyether polyol may not proceed smoothly, and when only the filter aid is used, the content of residual metal ions may increase, which may deteriorate the physical properties of a final product. Therefore, it is desirable to use both the metal adsorbent and the filter aid.

As the metal adsorbent, AMBOSOL may be used.

As the filter aid, diatomaceous earth may be used.

The metal adsorbent and the filter aid may be introduced in the form of an aqueous dispersion into the polyether polyol that has been reacted. The metal adsorbent and the filter aid may be introduced in 1 part by weight to 10 parts by weight, 1 part by weight to 8 parts by weight, 2 parts by weight to 8 parts by weight, 3 parts by weight to 8 parts by weight, or 3 parts by weight to 6 parts by weight based on 100 parts by weight of the 1,4:3,6-dianhydrohexitol into the polyether polyol that has been reacted.

After the step (S14), a process of neutralizing the polyether polyol may be performed. The neutralization process may be performed for about 1 hour to about 4 hours, about 1 hour to about 3 hours, or about 1 hour to about 2 hours. Next, the polyether polyol which has undergone the neutralization process may be subjected to the moisture removal process. The moisture removal process may be performed at about 90°C to about 130°C, about 95°C to about 130°C, or about 100°C to about 130°C. As needed, a process of detecting the metal ion residue may be performed, and when the metal ion residue is not detected, the polyether polyol may be performed at about 50°C to about 90°C, about 50°C to about 80°C, or about 60°C to about 80°C.

In S15, the polyether polyol where moisture has been removed may be filtered. The additive and by-products may be filtered by the filtering.

After the step (S15), the content of metal remaining in the polyether polyol may be 100 ppm or less, 80 ppm or less, 50 ppm or less, 30 ppm or less, 10 ppm or less, 5 ppm or less, 4 ppm or less, 3 ppm or less, 2 ppm or less, or 1 ppm or less. When the range is satisfied, the mechanical properties of polyurethane foam produced from the polyether polyol may be improved.

The preparation method of the present invention may include a step (S20-3) of preparing a second polymer. The step (S20) may include a step of reacting the first polymer with a second alkylene oxide in the presence of a double-metal cyanide catalyst to prepare a second polymer.

The second polymer may refer to polyether polyol.

A weight ratio of the double-metal cyanide catalyst: the first polymer may be 1:100 to 1:20,000, 1:500 to 1:10,000, 1:1,000 to 1:10,000, or 1:2,000 to 1:10,000. When the range is satisfied, an economical and efficient polymerization process may be performed.

The step (S20) may include a step of performing a dehydration process by heating the reactor containing the first polymer, and a step of reacting the first polymer with the second alkylene oxide in the presence of the double-metal cyanide catalyst to prepare a second polymer, after the dehydration process.

The second alkylene oxide may include a substituted or unsubstituted branched alkylene oxide having 3 to 10 carbon atoms; or a mixture of the substituted or unsubstituted branched alkylene oxide having 3 to 10 carbon atoms and a substituted or unsubstituted linear alkylene oxide having 2 to 10 carbon atoms.

The branched alkylene oxide may be propylene oxide.

The linear alkylene oxide may be ethylene oxide.

It is not desirable to react the first polymer only with the ethylene oxide in the presence of the double-metal cyanide catalyst. Since the double-metal cyanide catalyst has low reactivity with has low reactivity with ethylene oxide, it is desirable to react with a mixture of propylene oxide and ethylene oxide to add an ethylene group to the first polymer.

The double-metal cyanide catalyst may be the same as the double-metal cyanide catalyst described above.

When the double-metal cyanide catalyst is used in the step (S20-3), the generation of monols may be reduced when polymerizing the first polymer with the second alkylene oxide. Accordingly, the degree of unsaturation in the polyether polyol may be reduced, so that crosslinking and high-molecular-weight formation may be smoothly carried out when producing polyurethane resin, and the physical properties of polyurethane resin may be improved.

In the step (S20-3), it is desirable not to use the alkali catalyst. In addition, in the step (S20-3), it is desirable not to use the double-metal cyanide catalyst and the alkali catalyst together. Depending on the selective activity of the double-metal cyanide catalyst, the use amount of alkali catalyst may increase, so that a large amount of alkali catalyst may remain after the production of polyether polyol. Accordingly, an additional process is necessarily required to remove the alkali catalyst, which may reduce the efficiency of the production process. In addition, the generation of monols may be increased by the alkali catalyst, which may hinder crosslinking and high-molecular-weight formation when manufacturing polyurethane resin and may deteriorate the physical properties of polyurethane resin.

A polyether polyol composition prepared by the aforementioned method of preparing polyether polyol according to the present invention may include a first unit derived from at least one 1,4:3,6-dianhydrohexitol, and a second unit derived from alkylene oxide.

The 1,4:3,6-dianhydrohexitol and the isosorbide may be the same as the 1,4:3,6-dianhydrohexitol and isosorbide described above.

The alkylene oxide may be the same as the alkylene oxide described above.

The polyether polyol composition may have a DOU of 0.02 meq/g or less according to the following measurement method:

<Measurement method>

1) A first flask containing 30 g of the polyether polyol and a second flask without the polyether polyol are prepared, and 50 ml of mercuric acetate is added to each of the first flask and the second flask, followed by stirring for 30 minutes.
2) 9 g of sodium bromide (NaBr) was added to each of the first flask and the second flask, followed by stirring for 30 minutes.
3) 0.5 ml of a 1% phenolphthalein indicator was added to each of the first flask and the second flask, followed by titrating with 0.1 N potassium hydroxide (KOH).
4) DOU was calculated according to Equation 1 below:

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyether polyol fed to the first flask.

The degree of unsaturation refers to the content of monol in the polyether polyol. Specifically, the unsaturation degree may be expressed as mg unsaturation equivalent (meq/g) per 1 g of the polyether polyol.

The monol may be produced in a process of addition-polymerizing propylene oxide to 1,4:3,6-dianhydrohexitol using a catalyst. Specifically, the monol may be generated in the process of the propylene oxide being rearranged to allyl alcohol.

The monol may cause a decrease in the functional group of the polyether polyol, and may hinder crosslinking and high-molecular-weight formation during polyurethane production when the polyether polyol is used, which may result in a decrease in the physical properties of the polyurethane resin.

The degree of unsaturation of the polyether polyol composition may be 0.020 meq/g or less, 0.015 meq/g or less, 0.013 meq/g or less, 0.010 meq/g or less, 0.005 meq/g or less, 0.0045 meq/g or less, 0.0040 meq/g or less, 0.0038 meq/g or less, 0.0036 meq/g or less, 0.0034 meq/g or less, 0.0033 meq/g or less, 0.0032 meq/g or less, 0.0031 meq/g or less, or 0.0030 meq/g or less. When the range is satisfied, reactivity with isocyanate is excellent, and when manufacturing a polyurethane resin from the polyether polyol composition, crosslinking and high-molecular-weight formation may proceed smoothly, so that the physical properties of the polyurethane resin may be improved.

The polyether polyol composition may include the compound represented by Formula 3 described above.

The polyether polyol composition may include the compounds of Formulas A to G described above.

The polyether polyol composition may further include the antioxidant described above.

The polyether polyol composition may have the Controlled Polymerization Rate (CPR) value described above.
The polyether polyol composition may have the acid value described above.
The polyether polyol composition may have the number average molecular weight (Mn) and polydispersity index (PDI) described above.
The polyether polyol composition may have the American Public Health Association (APHA) color value described above.
The polyether polyol composition may have the active oxygen content value described above.
The viscosity of the polyether polyol composition may be the same as the viscosity described above.
The composition for preparing polyurethane according to the present invention may include the polyether polyol composition described above, and an isocyanate-based composition.
Polyurethane foam may be produced from the composition for preparing polyurethane. The composition for preparing polyurethane may be the same as the above-described composition for preparing polyurethane.
The battery module according to the present invention may be a battery module including a housing, a plurality of battery cells accommodated inside the housing, and polyurethane foam arranged between the plural battery cells. The polyurethane foam may include a composition for preparing polyurethane including a polyether polyol composition according to the aforementioned method of preparing a polyether polyol, and an isocyanate-based composition, and the polyether polyol composition may include a first unit derived from at least one 1,4:3,6-dianhydrohexitol, and a second unit derived from alkylene oxide.
The battery module according to the present invention may refer to the same contents as those of FIG. 3 described above.

< Polyol composition according to sixth example >

A polyether polyol according to the present invention may include a first unit derived from at least one 1,4:3,6-dianhydrohexitol, and a second unit derived from alkylene oxide, and may include primary alcohol in a content of 10 mol% to 90 mol%.
The 1,4:3,6-dianhydrohexitol and the isosorbide may be the same as the 1,4:3,6-dianhydrohexitol and isosorbide described above.
The alkylene oxide may be the same as the alkylene oxide described above.
The content of the primary alcohol in the polyether polyol may be 10 mol% to 90 mol%, 15 mol% to 90 mol%, 20 mol% to 90 mol%, 25 mol% to 90 mol%, or 30 mol% to 90 mol%. The content of the primary alcohol may be measured as a relative ratio of a peak of about 61 ppm appearing in the $^{13}C$ NMR spectrum of the polyether polyol. When the range is satisfied, reactivity with isocyanate may be excellent, and when producing polyurethane foam from the polyether polyol, crosslinking and high-molecular-weight formation may be smoothly performed, so that the physical properties of the polyurethane foam may be improved.
The degree of unsaturation of the polyether polyol may be 0.020 meq/g or less, 0.015 meq/g or less, 0.013 meq/g or less, 0.010 meq/g or less, 0.005 meq/g or less, 0.0045 meq/g or less, 0.0040 meq/g or less, 0.0038 meq/g or less, 0.0036 meq/g or less, 0.0034 meq/g or less, 0.0033 meq/g or less, 0.0032 meq/g or less, 0.0031 meq/g or less, or 0.0030 meq/g or less. When the range is satisfied, reactivity with isocyanate is excellent, and when manufacturing polyurethane foam from the polyether polyol, crosslinking and high-molecular-weight formation may be smoothly performed, so that the physical properties of the polyurethane foam may be improved.
The polyether polyol may include the compound represented by Formula 3 described above.
The polyether polyol composition may include the compounds of Formulas A to G described above.
The polyether polyol composition may further include the antioxidant described above.
The polyether polyol composition may have the acid value described above.
The polyether polyol composition may have the number average molecular weight (Mn) and polydispersity index (PDI) described above.
The polyether polyol composition may have the American Public Health Association (APHA) color value described above.
The polyether polyol composition may have the active oxygen content value described above.
The viscosity of the polyether polyol composition may be the same as the viscosity described above.
A method of preparing the polyether polyol according to the present invention may include a step (a) of preparing a first polymer including a unit derived from at least one 1,4:3,6-dianhydrohexitol; and a step (b) of reacting the first polymer with a mixture including ethylene oxide and propylene oxide in the presence of a double-metal cyanide catalyst to prepare a second polymer, wherein the content of primary alcohol in the polyether polyol is 10 mol% to 90 mol%.
FIG. 9 is a flowchart briefly illustrating a process of preparing polyether polyol according to the present invention. Referring to FIG. 9, the preparation method of the present invention may include a step (S10-4) of preparing the first polymer. The step (S10-4) may be performed in the same manner as in the step (S10-3) described above.

The preparation method of the present invention may include a step (S20-4) of preparing a second polymer. The step (S20-4) may be performed in the same manner as in the step (S20-3) described above.

The composition for preparing polyurethane according to the present invention may include a first unit derived from at least one 1,4:3,6-dianhydrohexitol, and a second unit derived from alkylene oxide, and may include a polyol composition including polyether polyol in which the content of primary alcohol is 10 mol% to 90 mol%, and an isocyanate-based composition.

Polyurethane foam may be produced from the composition for preparing polyurethane. The composition for preparing polyurethane may be the same as the above-described composition for preparing polyurethane.

The battery module according to the present invention is a battery module including a housing, a plurality of battery cells accommodated inside the housing, and polyurethane foam arranged between the plural battery cells, the polyurethane foam includes a composition for preparing polyurethane including a polyol composition and an isocyanate-based composition, and the polyol composition includes a first unit derived from at least one 1,4:3,6-dianhydrohexitol, and a second unit derived from alkylene oxide and may include polyether polyol in which the content of primary alcohol is 10 mol% to 90 mol%.

The battery module according to the present invention may refer to the same contents as those of FIG. 3 described above.

Hereinafter, the present invention is described in more detail based on Examples and Comparative Examples. However, the following Examples and Comparative Examples are only examples for explaining the present invention in more detail, and the present invention is not limited by the following Examples and Comparative Examples.

**<First preparation examples, first examples, and first experimental examples>**

**First preparation examples**

**Preparation Example 1-1 -Preparation of compound represented by Formula A**

803 g of isosorbide and 23 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out for 6 hours at a temperature of about 115°C while introducing 1,900 g of propylene oxide into the reactor at a constant rate. Here, the reactor temperature was controlled not to exceed 117°C.

The reactor was stirred until all propylene oxide residues in the reactor were reacted, and after the reaction was completed, the reactor temperature was heated to 123°C. Next, 310 g of ethylene oxide was added to the reactor at a constant rate, and the reaction was carried out for 1 hour and 30 minutes at about 120°C. Here, the reactor temperature was controlled not to exceed 125°C.

After the reaction was completed, the reactor temperature was lowered to 90°C, and then stirred at about 100°C for 3 hours while introducing 50 g of AMBOSOL and 5 g of diatomaceous earth into the reactor, thereby removing metal ions remaining in the product.

After confirming that residual metal ions were not detected in the product, the reactor temperature was lowered to 70°C, and then residual by-products were removed through a filter, thereby obtaining 3,013 g of a compound represented by Formula A below. The structure of the compound was confirmed by the $^{13}C$ NMR spectrum shown in FIG. 3.

[Formula A]

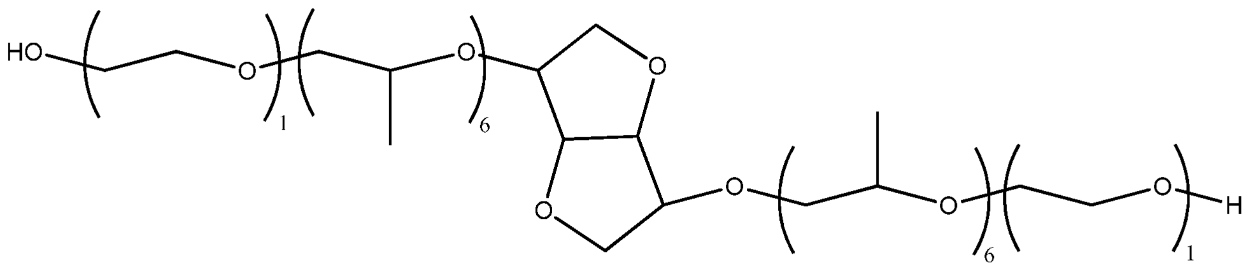

$^{13}C$ NMR: δ 61.31, 61.62, 65.95, 66.45, 66.58, 68.76, 70.38, 70.52, 70.70, 70.82, 70.94, 73.00, 73.23, 73.34, 73.96, 74.31, 75.05, 75.36, 75.82, 76.50 ppm.

**Preparation Example 1-2 - Preparation of compound represented by Formula B**

3,283 g of a compound represented by Formula B below was obtained in the same manner as in Preparation Example 1-1, except that 580 g of ethylene oxide was added instead of 310 g of ethylene oxide of Preparation Example 1-1, and the structure of the compound was confirmed by $^{13}C$ NMR spectrum.

[Formula B]

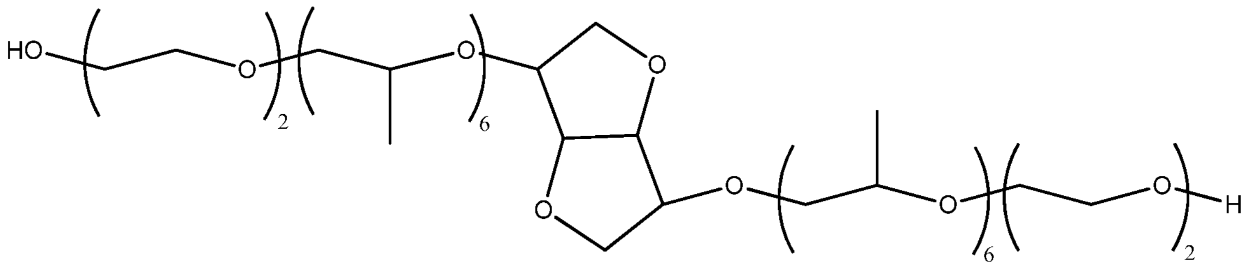

$^{13}C$ NMR: δ 61.21, 61.63, 65.96, 66.43, 66.57, 68.72, 70.11, 70.23, 70.70, 70.90, 70.96, 73.12, 73.43, 73.64, 73.96, 74.32, 75.15, 75.38, 75.92, 76.52 ppm.

**Preparation Example 1-3 - Preparation of compound represented by Formula C**

2,603 g of a compound represented by Formula C below was obtained in the same manner as in Preparation Example 1-1, except that 520 g of ethylene oxide was added instead of 310 g of ethylene oxide of Preparation Example 1-1, and 1,280 g of propylene oxide was added instead of 1,900 g of propylene oxide of Preparation Example 1-1, and the structure of the compound was confirmed by $^{13}C$ NMR spectrum.

[Formula C]

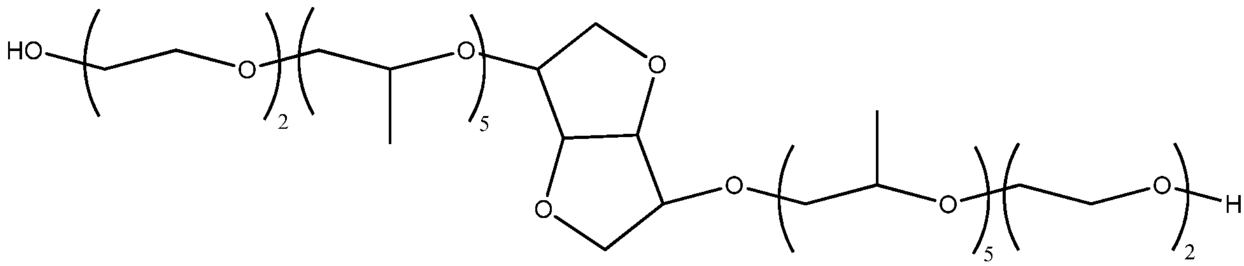

$^{13}C$ NMR: δ 61.22, 61.65, 64.86, 66.53, 66.58, 68.22, 69.12, 70.33, 70.81, 70.92, 70.96, 73.02, 73.13, 73.54, 73.96, 74.22, 75.25, 75.39, 75.92, 76.50 ppm.

**Preparation Example 1-4 - Preparation of compound represented by Formula D**

2,443 g of a compound represented by Formula D below was obtained in the same manner as in Preparation Example 1-1 except that 560 g of ethylene oxide was added instead of 310 g of ethylene oxide of Preparation Example 1-1, and 1,080 g of propylene oxide was added instead of 1,900 g of propylene oxide of Preparation Example 1-1, and the structure of the compound was confirmed by $^{13}C$ NMR spectrum.

[Formula D]

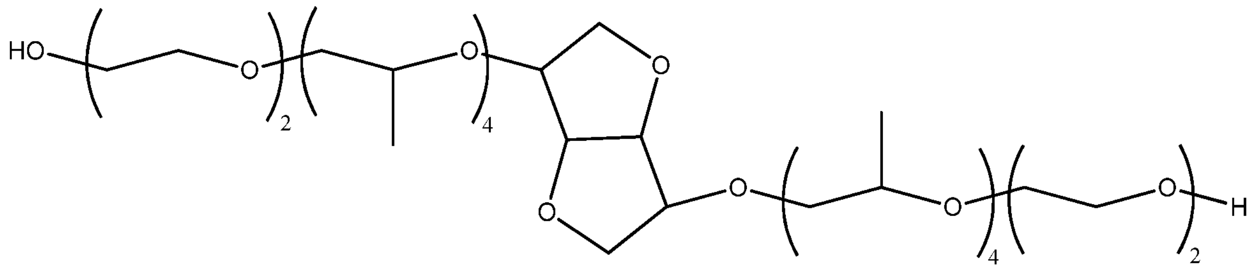

$^{13}C$ NMR: δ 61.23, 61.35, 64.67, 66.26, 66.37, 68.12, 69.32, 70.15, 70.71, 70.82, 70.96, 73.03, 73.12, 73.54, 73.97, 74.22, 75.15, 75.39, 75.93, 76.50 ppm.

**Preparation Example 1-5 - Preparation of compound represented by Formula E**

2,453 g of a compound represented by Formula E below was obtained in the same manner as in Preparation Example 1-1, except that 680 g of ethylene oxide was added instead of 310 g of ethylene oxide of Preparation Example 1-1, and 990 g of propylene oxide was added instead of 1,900 g of propylene oxide of Preparation Example 1-1, and the structure of the compound was confirmed by $^{13}C$ NMR spectrum.

[Formula E]

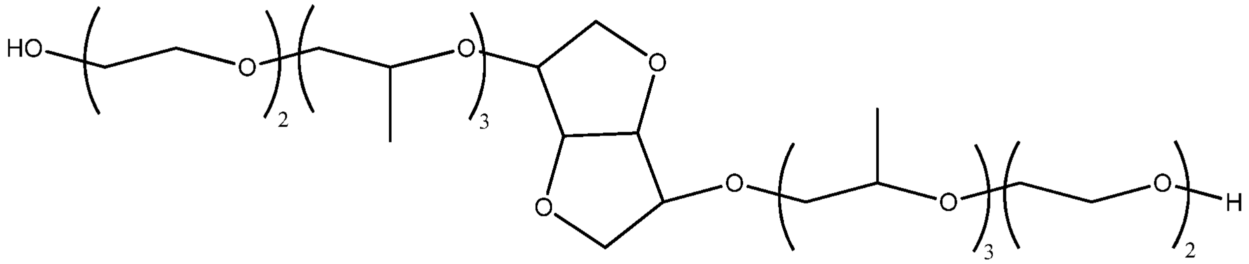

$^{13}C$ NMR: δ 61.22, 61.65, 63.75, 66.24, 66.49, 68.12, 69.15, 70.23, 70.83, 70.91, 70.93, 73.12, 73.15, 73.55, 73.97, 74.21, 75.30, 75.40, 75.82, 76.54 ppm.

**Preparation Example 1-6 - Preparation of compound represented by Formula M**

796 g of isosorbide and 22 g of potassium hydroxide were introduced into a pressurizable and heatable reactor. Next, the inside of the reactor was replaced with nitrogen and heated to 112°C, and then moisture inside the reactor was removed under vacuum and reduced pressure conditions.

The reactor was heated to 122°C while simultaneously adding 1,904 g of propylene oxide and 300 g of ethylene oxide into the reactor at a constant rate. Next, the reaction was carried out for 7 hours at about 120°C. Here, the reactor temperature was controlled not to exceed 125°C.

After the reaction was completed, the reactor temperature was lowered to 90°C, and then stirred at about 100°C for 3 hours while introducing 50 g of AMBOSOL and 5 g of diatomaceous earth into the reactor, thereby providing metal ions remaining in the product.

After confirming that residual metal ions were not detected in the product, the reactor temperature was lowered to

70°C, and then residual by-products were removed through a filter, thereby obtaining 3,000 g of a compound represented by Formula M below, and the structure of the compound was confirmed by the $^{13}C$ NMR spectrum shown in FIG. 4.

[Formula M]

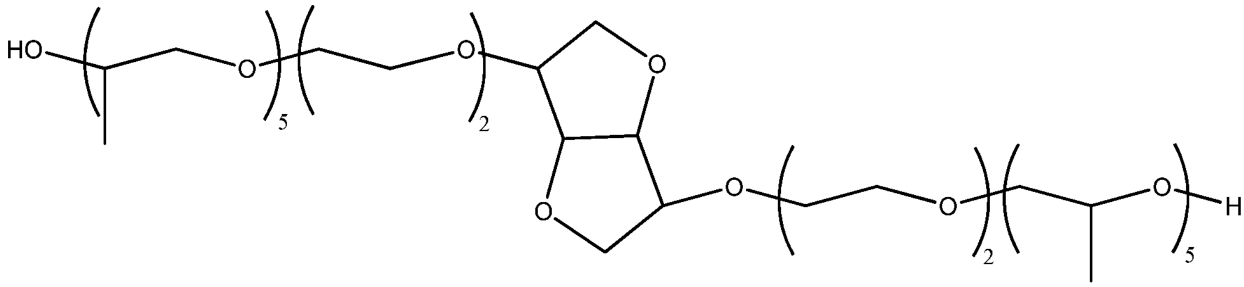

$^{13}C$ NMR: δ 65.91, 65.99, 66.74, 71.04, 72.27, 72.92, 73.17, 74.13, 74.46, 75.27, 75.39, 75.51, 75.61, 75.70, 76.11, 76.20, 76.42 ppm.

**Preparation Example 1-7 - Preparation of compound represented by Formula N**

2,086 g of a compound represented by Formula N below was obtained in the same manner as in Preparation Example 1-6, except that 980 g of ethylene oxide was added instead of 300 g of ethylene oxide of Preparation Example 1-6, and 310 g of propylene oxide was added instead of 1,904 g of propylene oxide of Preparation Example 1-6, and the structure of the compound was confirmed by $^{13}C$ NMR spectrum.

[Formula N]

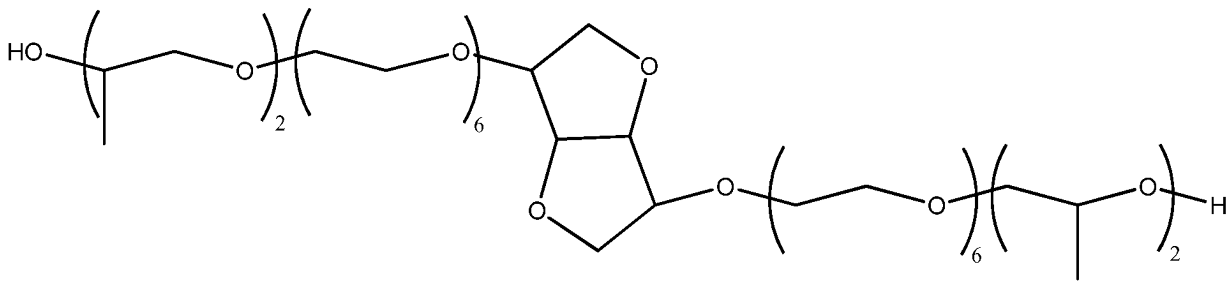

$^{13}C$ NMR: δ 65.82, 65.98, 66.75, 71.14, 72.37, 73.42, 73.57, 74.12, 74.56, 75.57, 75.69, 75.71, 75.91, 76.10, 76.13, 76.80, 76.88 ppm.

**Preparation Example 1-8 - Preparation of compound represented by Formula O**

810 g of isosorbide and 20 g of potassium hydroxide were introduced into a pressurizable and heatable reactor. Next, the inside of the reactor was replaced with nitrogen and heated to 112°C, and then moisture inside the reactor was removed under vacuum and reduced pressure conditions.

The reaction was carried out at 115°C for 2 hours while introducing 1,900 g of propylene oxide into the reactor at a constant rate. Next, the reactor was heated to 122°C while adding 300 g of ethylene oxide at a constant rate. Next, the reaction was carried out for 7 hours at about 120°C. Here, the reactor temperature was controlled not to exceed 125°C.

After the reaction was completed, the reactor temperature was lowered to 90°C, and then stirred at about 100°C for 3 hours while introducing 50 g of AMBOSOL and 5 g of diatomaceous earth into the reactor, thereby providing metal ions remaining in the product.

After confirming that residual metal ions were not detected in the product, the reactor temperature was lowered to 70°C, and then residual by-products were removed through a filter, thereby obtaining 3,010 g of a compound represented by Formula O below, and the structure of the compound was confirmed by $^{13}C$ NMR spectrum.

[Formula O]

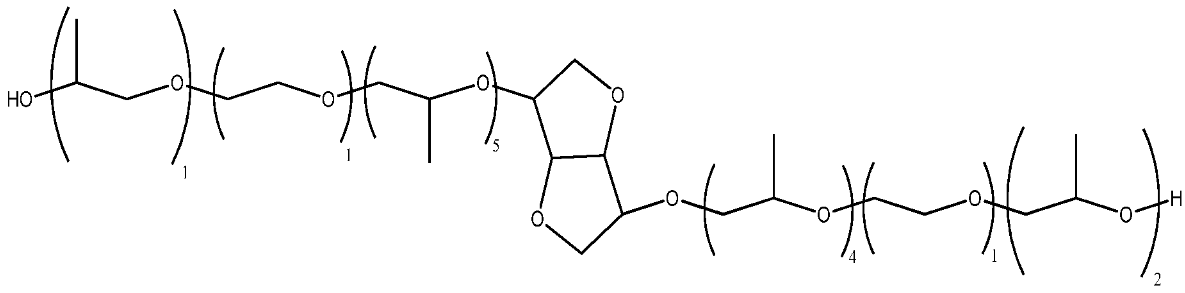

$^{13}C$ NMR: δ 65.90, 65.98, 66.75, 71.14, 72.28, 72.93, 73.15, 74.12, 74.46, 74.50, 74.55, 74.57, 75.37, 75.49, 75.58, 75.63, 75.78, 76.13, 76.21, 76.45 ppm.

## First examples - Production of polyurethane foam

### Example 1-1

30 g of the compound prepared in Preparation Example 1-1 was introduced into a plastic beaker. Next, 3.5 g of distilled water, 0.2 g of B-8629 (Evonik Co.) and 0.9 g of L-1501 (Momentive Co.) as a silicone foam stabilizer, 0.5 g of D-33LV (Air Products Co.) and 0.1 g of M-50 (Tosoh) as an amine catalyst, and 0.6 g of diethanolamine as a cross-linking agent were added to the beaker. Next, a mixture was obtained by mixing for 3 minutes at 4,000 rpm with a high-speed stirrer.

Next, 58 g of methylenediphenylisocyanate (CG-3701S, KUMHO Co.) was added to the mixture and foamed to produce polyurethane foam.

### Example 1-2

Polyurethane foam was produced by the same process as in Example 1-1, except that 30 g of the compound prepared in Preparation Example 1-2, instead of 30 g of the compound prepared in Preparation Example 1-1, was fed into a plastic beaker.

### Example 1-3

Polyurethane foam was produced by the same process as in Example 1-1, except that 30 g of the compound prepared in Preparation Example 1-3, instead of 30 g of the compound prepared in Preparation Example 1-1, was fed into a plastic beaker.

### Example 1-4

Polyurethane foam was produced by the same process as in Example 1-1, except that 30 g of the compound prepared in Preparation Example 1-4, instead of 30 g of the compound prepared in Preparation Example 1-1, was fed into a plastic beaker.

### Example 1-5

Polyurethane foam was produced by the same process as in Example 1-1, except that 30 g of the compound prepared in Preparation Example 1-5, instead of 30 g of the compound prepared in Preparation Example 1-1, was fed into a plastic beaker.

### Comparative Example 1-1

Polyurethane foam was produced by the same process as in Example 1-1, except that 30 g of the compound prepared in Preparation Example 1-6, instead of 30 g of the compound prepared in Preparation Example 1-1, was fed into a plastic beaker.

**Comparative Example 1-2**

Polyurethane foam was produced by the same process as in Example 1-1, except that 30 g of the compound prepared in Preparation Example 1-7, instead of 30 g of the compound prepared in Preparation Example 1-1, was fed into a plastic beaker.

**Comparative Example 1-3**

Polyurethane foam was produced by the same process as in Example 1-1, except that 30 g of the compound prepared in Preparation Example 1-8, instead of 30 g of the compound prepared in Preparation Example 1-1, was fed into a plastic beaker.

**First experimental examples**

**Experimental Example 1-1 - Acid value measurement**

Each container containing a phthalic anhydride solution was added with 2.75 g of each of the compounds prepared in Preparation Examples 1-1 to 1-8, and then reacted at 115°C for 30 minutes. Next, the pH was observed while titrating with a 0.5N sodium hydroxide (NaOH) solution, and the volume (ml) of sodium hydroxide (NaOH) required to reach the inflection point was measured.
Separately, a blank test was conducted, and the volume (ml) of sodium hydroxide (NaOH) required to reach the pH inflection point was measured in the same manner as in the process.
Next, the acid value of the compound was calculated based on the measured value, and results are shown in Table 1 below.

**Experimental Example 1-2 - Number average molecular weight measurement**

Using the acid value measured in Experimental Example 1-1 and the following Relational Expression 1, the number average molecular weights of the compounds prepared in Preparation Examples 1-1 to 1-8 were calculated, and results are shown in Table 1 below.

Number average molecular weight (g/mol) = (56,100 × number of equivalents)/measured acid value [Relational Expression 1]

**Experimental Example 1-3 - Polydispersity index measurement**

0.1g of each of the compounds prepared in Preparation Examples 1-1 to 1-8 was dissolved in 10 g of THF, and then the polydispersity index of a solution obtained by filtering insoluble components was measured using gel permeation chromatography (GPC). Results are shown in Table 1 below.

**Experimental Example 1-4 - Measurement of primary alcohol hydroxyl group (-OH) content**

After confirming each of the compounds prepared in Preparation Examples 1-1 to 1-8 by $^{13}C$ NMR spectrum, the peak at about 61 ppm appearing in the $^{13}C$ NMR spectrum was analyzed to calculate the content. Results are shown in Table 1 below.

**Experimental Example 1-5 - Evaluation of high-temperature storage stability**

Each of the compounds prepared in Preparation Examples 1-1 to 1-8 was fed into a 450 ml sample bottle, and then stored in a 45°C oven for 150 days, and then the high-temperature storage stability was evaluated according to the following criteria Results are shown in Table 1 below.
- ◦: No layer separation occurs
- ×: Layer separation occurs

[Table 1]

| | Prepar ation Exam ple 1 | Prepar ation Exam ple 2 | Manufa cturing Exampl e 3 | Manufa cturing Exampl e 4 | Manufa cturing Exampl e 5 | Manufa cturing Exampl e 6 | Manufa cturing Exampl e 7 | Manufa cturing Exampl e 8 |
|---|---|---|---|---|---|---|---|---|
| Acid value (mgKO H/g) | 0.003 | 0.003 | 0.002 | 0.003 | 0.003 | 0.005 | 0.004 | 0.015 |
| Number average molecul ar weight (g/mol) | 450 | 500 | 460 | 420 | 410 | 620 | 500 | 700 |
| Polydis persity index | 1.1 | 1.1 | 1.2 | 1.1 | 1.1 | 1.1 | 1.2 | 1.5 |
| Primary alcohol hydrox yl group content( % by weight) | 52 | 58 | 59 | 62 | 65 | 5 | 7 | 10 |
| Evaluat ion of high-tempera ture stability | ○ | ○ | ○ | ○ | ○ | ○ | × | ○ |

**Experimental Example 1-6 - Hardness evaluation**

Each polyurethane foam produced in Examples 1-1 to 1-5 and Comparative Examples 1-1 to 1-3 was cut into 5 cm × 5 cm sizes to manufacture a sample. Next, the repulsive force when the sample was compressed by 25% and the repulsive force when the sample was compressed by 50% were measured using a Universal Testing Machine (UTM) at room temperature, and results are shown in Table 2 below.

**Experimental Example 1-7 - Elongation evaluation**

Each polyurethane foam produced in Examples 1-1 to 1-5 and Comparative Examples 1-1 to 1-3 was cut into 5 cm × 5 cm sizes to manufacture a sample. Next, the elongation was measured using a Universal Testing Machine (UTM) according to ASTM D-3574-86, and results are shown in Table 2 below.

**Experimental Example 1-8 - Evaluation of pinhole generation**

The generation of pinholes in the polyurethane foam produced in each of Examples 1-1 to 1-5 and Comparative Examples 1-1 to 1-3 was evaluated according to the following criteria, and results are shown in Table 2 below.

- Satisfactory: No more than one pinhole with a diameter of 3 mm or less in a surface area of 800 mm × 800 mm of polyurethane foam
- Poor: Two or more pinholes with a diameter of 3 mm or less in a surface area of 800 mm × 800 mm of polyurethane foam

**Experimental Example 1-9 - Appearance evaluation**

The appearance of the polyurethane foam produced in each of Examples 1-1 to 1-5 and Comparative Examples 1-1 to 1-3 was evaluated according to the following criteria, and results are shown in Table 2 below.

- Satisfactory: When observed with the naked eye, the entire surface of the polyurethane foam is smooth.
- Poor: When observed with the naked eye, roughness occurs on at least part of the entire surface of the polyurethane foam

**Experimental Example 1-10 - Evaluation of foaming characteristics**

The uniformity of foamed cells on the surface and cross-section of the polyurethane foam produced in each of

Examples 1-1 to 1-5 and Comparative Examples 1-1 to 1-3 was observed with the naked eye, and the density of the polyurethane foam after forming was measured. The foaming characteristics were evaluated according to the following criteria, and results are shown in Table 2 below.

- ◎: Foamed cells are uniform and have a density range of 0.020 g/cm$^3$ to 0.030 g/cm$^3$
- ○: Uniformly foamed cells are observed, but outside a density range of 0.020 g/cm$^3$ to 0.030 g\cm$^3$.
- ×: Foamed cells are non-uniform, and outside a density range of 0.020 g/cm$^3$ to 0.030 g/cm$^3$.

**Experimental Example 1-11 - Color evaluation**

To evaluate the color of the polyurethane foam produced in each of Examples 1-1 to 1-5 and Comparative Examples 1-1 to 1-3, the yellowness was measured using MiniScan XE Plus (HUNTERLAB Co.) according to ASTM E313-96, and results are shown in Table 2 below. The larger the measurement value, the closer it is to yellow, and the smaller the measurement value, the clearer and more transparent it is.

[Table 2]

| | | Examp le 1-1 | Examp le 1-2 | Examp le 1-3 | Examp le 1-4 | Examp le 1-5 | Compa rative Examp le 1-1 | Compa rative Examp le 1-2 | Compa rative Examp le 1-3 |
|---|---|---|---|---|---|---|---|---|---|
| Hard ness | 25% compre ssion (kgf/c m$^2$) | 0.08 | 0.08 | 0.09 | 0.08 | 0.09 | 0.06 | 0.05 | 0.06 |
| | 50% compre ssion (kgf/c m$^2$) | 0.15 | 0.16 | 0.15 | 0.15 | 0.16 | 0.10 | 0.09 | 0.09 |
| Elongation (%) | | 65 | 63 | 68 | 65 | 66 | 47 | 65 | 48 |
| Pinhole generation evaluation | | Satisfa ctory | Satisfa ctory | Satisfa ctory | Satisfa ctory | Satisfa ctory | Satisfa ctory | Poor | Poor |
| Appearance evaluation | | Satisfa ctory | Satisfa ctory | Satisfa ctory | Satisfa ctory | Satisfa ctory | Satisfa ctory | Poor | Satisfa ctory |
| Foaming characteristics evaluation | | ◎ | ◎ | ◎ | ◎ | ◎ | ○ | × | ○ |
| Color evaluation (yellow index) | | 10.2 | 10.1 | 11.1 | 10.9 | 10.8 | 18.1 | 45.4 | 21.2 |

As shown in Tables 1 and 2, it can be confirmed that, since the polyol compositions of Examples 1-1 to 1-5 include the compound represented by Formula 1, they exhibit excellent mechanical properties and appearance characteristics compared to Comparative Examples 1-1 to 1-3. Specifically, since the polyol compositions of Examples 1-1 to 1-5 has a block copolymer shape wherein a branched alkylene group is bonded to a parent structure including a unit derived from 1,4:3,6-dianhydrohexitol and a linear alkylene group is bonded to the branched alkylene group and includes a primary alcohol hydroxyl group in a high content, they have excellent reactivity with isocyanate. Accordingly, the polyurethane foam produced from the polyol composition has improved mechanical properties. In addition, the appearance state of the polyurethane foam produced from the polyol composition can be improved by controlling a content ratio of a branched alkylene group to a linear alkylene group in the compounds contained in the polyol compositions of Examples 1-1 to 1-5.

**<Second manufacturing examples, second examples, and second experimental examples>**

**Second manufacturing examples - Preparation of polyol compositions**

**Preparation Example 2-1**

802 g of isosorbide and 23 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out for 6 hours at a temperature of about 115°C while introducing 1,900 g of propylene oxide into the reactor at a constant rate. Here, the reactor temperature was controlled not to exceed 115°C.

The reactor was stirred until all propylene oxide residues in the reactor were reacted, and after the reaction was completed, the reactor temperature was heated to 120°C. Next, 280 g of ethylene oxide was added to the reactor at a constant rate, and the reaction was carried out for 1 hour and 30 minutes at about 120°C. Here, the reactor temperature was controlled not to exceed 125°C.

After the reaction was completed, the reactor temperature was cooled to 90°C, 50 g of AMBOSOL and 5 g of diatomaceous earth was introduced into the reactor, and the reactor was stirred at about 100°C for 3 hours, thereby removing metal ions remaining in the product.

After confirming that residual metal ions were not detected in the product, the temperature of the reactor was lowered to 70°C, and then residual by-products were removed through a filter, thereby obtaining 3,000 g of a polyol composition.

**Preparation Example 2-2**

A polyol composition was obtained by the same process as in Preparation Example 2-1, except that 2,100 g of propylene oxide, instead of 1,900 g of propylene oxide of Preparation Example 2-1, was fed into a reactor.

**Preparation Example 2-3**

A polyol composition was obtained by the same process as in Preparation Example 2-1, except that 310 g of ethylene oxide, instead of 280 g of ethylene oxide of Preparation Example 2-1, was fed into a reactor.

**Preparation Example 2-4**

A polyol composition was obtained by the same process as in Preparation Example 2-1, except that 2,000 g of propylene oxide, instead of 1,900 g of propylene oxide of Preparation Example 2-1, and 300 g of ethylene oxide, instead of 280 g of ethylene oxide, were fed into a reactor.

**Preparation Example 2-5**

A polyol composition was obtained by the same process as in Preparation Example 2-1, except that 810 g of isosorbide and 25 g of potassium hydroxide, instead of 802 g of isosorbide and 23 g of potassium hydroxide of Preparation Example 2-1, were fed into a reactor.

**Preparation Example 2-6**

A polyol composition was obtained by the same process as in Preparation Example 2-1, except that 45 g of AMBOSOL and 6 g of diatomaceous earth, instead of 50 g of AMBOSOL and 5 g of diatomaceous earth of Preparation Example 2-1, were fed into a reactor.

**Preparation Example 2-7**

A polyol composition was obtained by the same process as in Preparation Example 2-1, except that metal ions remaining in reactants were removed by stirring for 1 hour instead of stirring for 3 hours as in Preparation Example 2-1.

**Preparation Example 2-8**

A polyol composition was obtained by the same process as in Preparation Example 2-1, except that 40 g of AMBOSOL and 5 g of diatomaceous earth, instead of 50 g of AMBOSOL and 5 g of diatomaceous earth of Preparation Example 2-1, were fed into a reactor, and metal ions remaining in reactants were removed by stirring for 1 hour instead of stirring for 3 hours as in Preparation Example 2-1.

**Comparative Preparation Example 2-1**

386 g of monopropylene glycol (MPG) and 17.5 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out for 6 hours and 30 minutes at about 110°C while feeding 2,132 g of propylene oxide into the reactor at a constant rate. Here, the reactor temperature was controlled not to exceed 115°C.

The reactor was stirred until all propylene oxide residues were reacted, and after the reaction was completed, the reactor was heated to about 122°C. Next, the reaction was carried out for 1 hour and 30 minutes at about 120°C while feeding 280 g of ethylene oxide into the reactor at a constant rate. Here, the reactor temperature was controlled not to exceed 125°C.

After completion of the reaction, the reactor temperature was cooled to 90°C, 50 g of AMBOSOL and 5 g of diatomaceous earth were fed into the reactor, and the reactor was stirred at about 115°C for 3 hours to remove metal ions remaining in reactants.

After confirming that residual metal ions were not detected in the product, the temperature of the reactor was lowered to 70°C, and then residual by-products were removed through a filter, thereby obtaining 2,800 g of a polyol composition.

**Comparative Preparation Example 2-2**

A polyol composition was obtained by the same process as in Comparative Preparation Example 2-1, except that 386 g of dipropylene glycol (DPG), instead of 386 g of monopropylene glycol (MPG) of Comparative Preparation Example 2-1, was fed into a reactor.

**Comparative Preparation Example 2-3**

A polyol composition was obtained by the same process as in Comparative Preparation Example 2-1, except that stirring for 1 hour, instead of stirring for 3 hours of Comparative Preparation Example 2-1, was carried out to remove metal ions remaining in reactants.

**Comparative Preparation Example 2-4**

A polyol composition was obtained by the same process as in Comparative Preparation Example 2-2, except that stirring for 1 hour, instead of stirring for 3 hours of Comparative Preparation Example 2-2 was carried out to remove metal ions remaining in reactants.

**Second examples - Preparation of polyurethane foam**

**Example 2-1**

30 g of the polyol composition prepared in Preparation Example 2-1 was introduced into a plastic beaker. Next, 4.0 g of distilled water, 0.3 g of B-8629 (Evonik Co.) and 1.2 g of L-1501 (Momentive Co.) as a silicone foam stabilizer, 0.5 g of D-33LV (Air Products Co.) and 0.2 g of M-50 (Tosoh) as an amine catalyst, and 0.6 g of diethanolamine as a cross-linking agent were added to the beaker. Next, a mixture was obtained by mixing for 3 minutes at 4,000 rpm with a high-speed stirrer.

Next, 58 g of methylenediphenylisocyanate (CG-3701S, KUMHO Co.) was added to the mixture and foamed to produce polyurethane foam.

**Examples 2-2 to 2-8 and Comparative Examples 2-1 to 2-4**

Polyurethane foam was produced by the same process as in Example 2-1, except that 30 g of a polyol composition shown in Table 3 below was added instead of 30 g of the polyol composition prepared in Preparation Example 2-1.

**Second experimental examples**

**Experimental Example 2-1 - Measurement of APHA color value**

The color of the polyol composition of each of Manufacturing Examples 2-1 to 2-8 and Comparative Manufacturing Examples 2-1 to 2-4 was measured using ColorQuest XE (HunterLab Co.). An American Public Health Association (APHA) color value (platinum-cobalt system) was measured from the color number of the polyol composition according to ASTM-D1209. Results are shown in Table 3 below.

**Experimental Example 2-2 - Measurement of residual metal content**

A residual metal content in the polyol composition of each of Manufacturing Examples 2-1 to 2-8 and Comparative Manufacturing Examples 2-1 to 2-4 was measured using atomic absorption spectrometry. Results are shown in Table 3 below.

**Experimental Example 2-3 - APHA color value measurement after processing at high temperature**

The polyol composition of each of Manufacturing Examples 2-1 to 2-8 and Comparative Manufacturing Examples 2-1 to 2-4 was stored in a 75 °C oven for 10 minutes. Next, the polyol composition was exposed to the atmosphere for 24 hours. Next, an American Public Health Association (APHA) color value was measured under the same conditions as in Experimental Example 2-1. Results are shown in Table 3 below.

**Experimental Example 2-4 - Measurement of number average molecular weight**

2.75 g of the polyol composition prepared in each of Manufacturing Examples 2-1 to 2-8 and Comparative Manufacturing Examples 2-1 to 2-4 was introduced into each container containing a phthalic anhydride solution, and then reacted at 115°C for 30 minutes. Next, the pH was observed while titrating with a 0.5N sodium hydroxide (NaOH) solution, and the volume (ml) of sodium hydroxide (NaOH) required to reach the inflection point was measured. Separately, a blank test was conducted, and the volume (ml) of sodium hydroxide (NaOH) required to reach the pH inflection point was measured in the same manner as in the process. Next, the acid value (mgKOH/g) of the polyol composition was calculated based on the measured values. Next, the number average molecular weight of the polyol composition prepared in each of Manufacturing Examples 2-1 to 2-8 and Comparative Manufacturing Examples 2-1 to 2-4 was calculated using the acid value and Relational Expression 1 below. Results are shown in Table 3 below.

Number average molecular weight (g/mol) = (56,100 × number of equivalents)/measured acid value [Relational Expression 1]

**Experimental Example 2-5 - Viscosity measurement**

The viscosity of the polyol composition of each of Manufacturing Examples 2-1 to 2-8 and Comparative Manufacturing Examples 2-1 to 2-4 was measured at 25 °C using DV-III manufactured by Brookfield Co. Results are shown in Table 3 below.

**Experimental Example 2-6 - Storage stability evaluation**

The polyol composition of each of Manufacturing Examples 2-1 to 2-8 and Comparative Manufacturing Examples 2-1 to 2-4 was fed into a 450 ml sample bottle, and then stored at a 30°C oven for 100 days. After 100 days, the storage stability of the polyol composition was evaluated according to the following criteria. Results are shown in Table 3 below.

- ◦: No layer separation occurs
- ×: Cloudy, or layer separation occurs

[Table 3]

| | Color | APHA | Residual metal content[1)] | APHA after processing at high temperature | Number average molecular weight | Viscosity | Storage stability |
|---|---|---|---|---|---|---|---|
| Unit | - | - | PPM | - | g/mol | cPs | - |
| Preparation Example 2-1 | Colorless and transparent | 16 | ≤ 1 | 18 | 450 | 400 | ○ |
| Preparation Example 2-2 | Colorless and transparent | 16 | ≤ 1 | 18 | 480 | 420 | ○ |
| Preparation Example 2-3 | Colorless and transparent | 17 | ≤ 1 | 18 | 470 | 390 | ○ |
| Preparation Example 2-4 | Colorless and transparent | 17 | ≤ 1 | 20 | 510 | 410 | O |
| Preparation Example 2-5 | Colorless and transparent | 15 | ≤ 1 | 19 | 455 | 400 | O |
| Preparation Example 2-6 | Colorless and transparent | 17 | ≤ 1 | 20 | 450 | 400 | O |
| Preparation Example 2-7 | Colorless and transparent | 19 | 15 | 28 | 450 | 410 | O |
| Preparation Example 2-8 | Colorless and transparent | 20 | 16 | 27 | 450 | 420 | O |
| Comparative Preparation Example 2-1 | Pale yellow | 30 | ≤ 1 | 33 | 510 | 780 | × |
| Comparative Preparation Example 2-2 | Pale yellow | 31 | ≤ 1 | 33 | 530 | 660 | × |
| Comparative Preparation Example 2-3 | Pale yellow | 41 | 18 | 52 | 510 | 800 | × |
| Comparative Preparation Example 2-4 | Pale yellow | 42 | 17 | 54 | 530 | 760 | × |
| 1) Residual metal content: Content of polyol based on the total weight of the composition potassium | | | | | | | |

**Experimental Example 2-7 - Polyurethane foam color evaluation**

The color of the polyurethane foam produced in each of Examples 2-1 to 2-8 and Comparative Examples 2-1 to 2-4 was evaluated with the naked eye. Results are shown in Table 4 below:

**Experimental Example 2-8 - Evaluation of physical properties of polyurethane foam**

Each polyurethane foam produced in Examples 2-1 to 2-8 and Comparative Examples 2-1 to 2-4 was cut into 5 cm × 5 cm sizes to manufacture a sample. Next, the compressive hardness, elongation, compression set, and repeated compression set of the sample were measured using a Universal Testing Machine (UTM) according to ASTM D3574-86. Results are shown in Table 4 below.

[Table 4]

| | Polyol compositi on | Color | Hardness at 25% compressi on1) | Hardness at 50% compressi on2) | Elongati on | Compress ion set | Repeated compress ion set |
|---|---|---|---|---|---|---|---|
| Unit | - | - | kgf/cm² | | % | | |
| Example 2-1 | Preparati on Example 2-1 | Whit e | 0.08 | 0.15 | 65 | 7 | 8 |
| Example 2-2 | Preparati on Example 2-2 | Whit e | 0.09 | 0.16 | 66 | 8 | 7 |
| Example 2-3 | Preparati on Example 2-3 | Whit e | 0.08 | 0.15 | 64 | 8 | 10 |
| Example 2-4 | Preparati on Example 2-4 | Whit e | 0.09 | 0.16 | 66 | 7 | 10 |
| Example 2-5 | Preparati on Example 2-5 | Whit e | 0.08 | 0.16 | 66 | 7 | 8 |
| Example 2-6 | Preparati on Example 2-6 | Whit e | 0.09 | 0.16 | 65 | 8 | 8 |
| Example 2-7 | Preparati on Example 2-7 | Whit e | 0.06 | 0.13 | 62 | 10 | 12 |
| Example 2-8 | Preparati on Example 2-8 | Whit e | 0.06 | 0.13 | 61 | 10 | 13 |
| Comparat ive Example 2-1 | Comparat ive Preparati on Example 2-1 | Pale yello w | 0.08 | 0.15 | 62 | 10 | 11 |
| Comparat ive Example 2-2 | Comparat ive Preparati on Example 2-2 | Pale yello w | 0.08 | 0.13 | 63 | 11 | 10 |
| Comparat ive Example 2-3 | Comparat ive Preparati on Example 2-3 | Yello w | 0.06 | 0.13 | 61 | 12 | 13 |
| Comparat ive Example 2-4 | Comparat ive Preparati on Example 2-4 | Yello w | 0.07 | 0.14 | 60 | 12 | 14 |

1) Hardness at 25% compression: Repulsive force when sample is compressed by 25%
2) Hardness at 50% compression: Repulsive force when sample is compressed by 50%

As shown in Tables 3 and 4, it was confirmed that the polyol compositions according to Manufacturing Examples 2-1 to 2-8 which can be prepared from renewable natural resources had transparent color, compared to the polyol compositions according to Comparative Manufacturing Examples 2-1 to 2-4. In particular, it was confirmed that since the contents of metal residues in the polyol compositions according to Manufacturing Examples 2-1 to 2-6 were 1 ppm or less, the color change depending on metal ions was minimized when exposed to high-temperature environments.

In addition, it was confirmed that the polyurethane foams of Examples 2-1 to 2-8 produced from the polyol compositions of Manufacturing Examples 2-1 to 2-8 exhibited mechanical properties equivalent to or greater than those of

Comparative Examples 2-1 to 2-4 produced from a petroleum-based raw material.

Accordingly, it was confirmed that the polyol composition according to the present invention and the polyurethane foam containing the polyol composition were eco-friendly, exhibited high transparency and excellent storage stability, and exhibited mechanical properties equivalent to or greater than the cases using a petroleum-based raw material because a petroleum-based raw material was not used.

**<Third preparation examples, third example, and third experimental examples>**

**Third preparation examples - Preparation of polyol composition**

**Manufacturing Example 3-1**

800 g of isosorbide and 22 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out for 6 hours at a temperature of about 115°C while introducing 1,880 g of propylene oxide into the reactor at a constant rate. Here, the reactor temperature was controlled not to exceed 115°C.

The reactor was stirred until all propylene oxide residues in the reactor were reacted, and after the reaction was completed, the reactor temperature was heated to 120°C. Next, 275 g of ethylene oxide was added to the reactor at a constant rate, and the reaction was carried out for 1 hour and 30 minutes at about 120°C. Here, the reactor temperature was controlled not to exceed 125°C.

After the reaction was completed, the reactor temperature was cooled to 90°C, 50 g of AMBOSOL and 5 g of diatomaceous earth was introduced into the reactor, and the reactor was stirred at about 100°C for 3 hours, thereby removing metal ions remaining in the product.

After confirming that residual metal ions were not detected in the product, the temperature of the reactor was lowered to 70°C, and then residual by-products were removed through a filter. 300 ppm of an antioxidant (SN-1076, SONGWON Co.), based on the total weight of the reactants, was added, and then reacted for 10 minutes, followed by obtaining 3,000 g of a polyol composition.

**Manufacturing Example 3-2**

A polyol composition was obtained by the same process as in Manufacturing Example 3-1 except that 2,0500 g of propylene oxide, instead of 1,880 g of propylene oxide of Manufacturing Example 3-1, was fed into a reactor.

**Manufacturing Example 3-3**

A polyol composition was obtained by the same process as in Manufacturing Example 3-1 except that 290 g of ethylene oxide, instead of 275 g of ethylene oxide of Manufacturing Example 3-1, was fed into a reactor.

**Manufacturing Example 3-4**

A polyol composition was obtained by the same process as in Manufacturing Example 3-1 except that 2,000 g of propylene oxide, instead of 1,880 g of propylene oxide of Manufacturing Example 3-1, and 300 g of ethylene oxide, instead of 275 g of ethylene oxide of Manufacturing Example 3-1, were fed into a reactor.

**Manufacturing Example 3-5**

A polyol composition was obtained by the same process as in Manufacturing Example 3-1 except that 820 g of isosorbide and 27 g of potassium hydroxide, instead of 800 g of isosorbide and 22 g of potassium hydroxide of Manufacturing Example 3-1, were fed into a reactor.

**Manufacturing Example 3-6**

A polyol composition was obtained by the same process as in Manufacturing Example 3-1 except that 810 g of isosorbide and 24 g of potassium hydroxide, instead of 800 g of isosorbide and 22 g of potassium hydroxide of Manufacturing Example 3-1, were fed into a reactor.

**Comparative Manufacturing Example 3-1**

388 g of monopropylene glycol (MPG) and 18 g of potassium hydroxide were fed into a pressurizable and heatable reactor. Next, the inside of the reactor was replaced with nitrogen and heated to 112°C, and then moisture inside the reactor was removed under vacuum and reduced pressure conditions.
The reaction was carried out for 7 hours at about 110°C while feeding 2,100 g of propylene oxide into the reactor at a constant rate. Here, the reactor temperature was controlled not to exceed 115°C.
The reactor was stirred until all propylene oxide residues were reacted, and after the reaction was completed, the reactor was heated to about 122°C. Next, the reaction was carried out for 1 hour and 30 minutes at about 120°C while feeding 270 g of ethylene oxide into the reactor at a constant rate. Here, the reactor temperature was controlled not to exceed 125°C.
After completion of the reaction, the reactor temperature was cooled to 90°C, 50 g of AMBOSOL and 5 g of diatomaceous earth were fed into the reactor, and the reactor was stirred at about 115°C for 3 hours to remove metal ions remaining in reactants.
After confirming that residual metal ions were not detected in the product, the temperature of the reactor was lowered to 70°C, and then residual by-products were removed through a filter, thereby obtaining 2,800 g of a polyol composition.

**Comparative Manufacturing Example 3-2**

A polyol composition was obtained by the same process as in Comparative Preparation Example 3-1, except that 388 g of dipropylene glycol (DPG), instead of 386 g of monopropylene glycol (MPG) of Comparative Preparation Example 3-1, was fed into a reactor.

**Comparative Manufacturing Example 3-3**

A polyol composition was obtained by the same process as in Comparative Preparation Example 3-1, except that 400 g of monopropylene glycol (MPG), instead of 388 g of monopropylene glycol (MPG) of Comparative Manufacturing Example 3-1, was fed into a reactor.

**Comparative Manufacturing Example 3-4**

A polyol composition was obtained by the same process as in Comparative Preparation Example 3-2, except that 388 g of dipropylene glycol (DPG), instead of 400 g of dipropylene glycol (DPG) of Comparative Manufacturing Example 3-2, was fed into a reactor.

**Third examples - Preparation of polyurethane foam**

**Example 3-1**

30 g of the polyol composition prepared in Preparation Example 3-1 was introduced into a plastic beaker. Next, 4.0 g of distilled water, 0.3 g of B-8629 (Evonik Co.) and 1.2 g of L-1501 (Momentive Co.) as a silicone foam stabilizer, 0.5 g of D-33LV (Air Products Co.) and 0.2 g of M-50 (Tosoh) as an amine catalyst, and 0.6 g of diethanolamine as a cross-linking agent were added to the beaker. Next, a mixture was obtained by mixing for 3 minutes at 4,000 rpm with a high-speed stirrer.
Next, 58 g of methylenediphenylisocyanate (CG-3701S, KUMHO Co.) was added to the mixture and foamed to produce polyurethane foam.

**Examples 3-2 to 3-6 and Comparative Examples 3-1 to 3-4**

Polyurethane foam was produced by the same process as in Example 3-1, except that 30 g of a polyol composition shown in Table 6 below was added instead of 30 g of the polyol composition prepared in Preparation Example 3-1.

**Third experimental examples**

**Experimental Example 3-1 - Acid value measurement**

15 g of the polyol composition prepared in each of Manufacturing Examples 3-1 to 3-6 and Comparative Manufacturing Examples 3-1 to 3-4 was fed into a 100 ml first flask. Separately, a second flask of 100 ml was prepared for a blank test. Next, 50 ml of methanol and a magnetic bar for removing impurities were fed into each of the first flask and the second flask, and the stoppers of the first flask and the second flask were sealed, followed by stirring for 30 minutes.
Next, 0.5 ml of a 1% phenolphthalein indicator was fed into each of the first flask and the second flask, and titration was carried out with 0.02 N (normality) potassium hydroxide (KOH) until a pink color at an endpoint was maintained for 30 seconds when observed with the naked eye. An acid value was calculated according to Equation 1 below, and results are shown in Table 5 below.

[Equation 1]

$$\text{Acid value (mgKOH/g)} = [(V_s - V_b) \times 56.1 \times N \times F] / M$$

In Equation 1, $V_s$ denotes the amount (ml) of the 0.02N potassium hydroxide (KOH) consumed to titrate the composition of the first flask, $V_b$ denotes the amount (ml) of the 0.02N potassium hydroxide (KOH) consumed to titrate the composition of the second flask, N denotes the normality of potassium hydroxide (KOH), F denotes the factor of 0.02N potassium hydroxide (KOH), and M denotes the weight (g) of the polyol composition added to the first flask.

**Experimental Example 3-2 - Measurement of number average molecular weight**

2.75 g of the polyol composition prepared in each of Manufacturing Examples 3-1 to 3-6 and Comparative Manufacturing Examples 3-1 to 3-4 was fed into each container containing a phthalic anhydride solution, and then reacted at 115°C for 30 minutes. Next, the pH was observed while titrating with a 0.5N sodium hydroxide (NaOH) solution, and the volume (ml) of sodium hydroxide (NaOH) required to reach the inflection point was measured. Separately, a blank test was conducted, and the volume (ml) of sodium hydroxide (NaOH) required to reach the pH inflection point was measured in the same manner as in the process. Next, the acid value (mgKOH/g) of the polyol composition was calculated based on the measured values. Next, the number average molecular weight of the polyol composition prepared in each of Manufacturing Examples 3-1 to 3-6 and Comparative Manufacturing Examples 3-1 to 3-4 was calculated using the acid value and Relational Expression 1 below, results are shown in Table 5 below.

Number average molecular weight (g/mol) = (56,100 × number of equivalents)/measured acid value [Relational Expression 1]

**Experimental Example 3 - Measurement of active oxygen content**

After purging a 25ml first flask with nitrogen for 2 minutes, 3 g of the polyol composition prepared in each of Preparation Examples 1 to 6 and Comparative Manufacturing Examples 3-1 to 3-4 was fed into the first flask, and then purged with nitrogen again. Separately, a 25ml second flask was prepared for a blank test.
Next, 20 ml of ferrous thiocyanate was added to each of the first flask and the second flask, diluted with methanol, and reacted for 5 minutes. Using a UV-Vis spectrophotometer (Cary50conc, Varian Co.) and a quartz cell (10 mm × 10 mm), the absorbance of distilled water at a wavelength of 500 nm, the absorbance of the substance added to the first flask, and the absorbance of the substance added to the second flask were measured, respectively. An actual absorbance was calculated from a difference between the absorbance of the substance added to the first flask and the absorbance of the substance added to the second flask. Next, the amount of active oxygen was calculated using a calibration curve, and results are shown in Table 5 below.

**Experimental Example 3-4 - Viscosity measurement**

The viscosity of the polyol composition of each of Manufacturing Examples 3-1 to 3-6 and Comparative Manufacturing Examples 3-1 to 3-4 was measured at 25 °C using DV-III manufactured by Brookfield Co. Results are shown in Table 3 below.

[Table 5]

| | Acid value | Number average molecular weight | Active oxygen content | Viscosity |
|---|---|---|---|---|
| Unit | mgKOH/g | g/mol | ppm | cPs |
| Manufacturing Example 3-1 | 0.010 | 445 | 7.9 | 395 |
| Manufacturing Example 3-2 | 0.010 | 477 | 10.3 | 415 |
| Manufacturing Example 3-3 | 0.012 | 470 | 8.3 | 395 |
| Manufacturing Example 3-4 | 0.010 | 515 | 9.1 | 410 |
| Manufacturing Example 3-5 | 0.012 | 450 | 13.3 | 400 |
| Manufacturing Example 3-6 | 0.012 | 450 | 12.3 | 400 |
| Comparative Manufacturing Example 3-1 | 0.020 | 515 | 310.4 | 785 |
| Comparative Manufacturing Example 3-2 | 0.040 | 535 | 380.5 | 660 |
| Comparative Manufacturing Example 3-3 | 0.023 | 515 | 300.6 | 800 |
| Comparative Manufacturing Example 3-4 | 0.045 | 535 | 399.5 | 755 |

**Experimental Example 3-5 - Process time**

The total process time taken to produce the polyurethane foam of each of Examples 3-1 to 3-6 and Comparative Examples 3-1 to 3-4 was measured. Results are shown in Table 6 below.

**Experimental Example 3-6 - Moldability evaluation**

When producing the polyurethane foam of each of Examples 3-1 to 3-6 and Comparative Examples 3-1 to 3-4, the time at which the polyurethane foam begins to swell (Cream Time; CT) and the time at which the polyurethane foam expands and swells (Rise Time; RT) were measured, respectively. When the CT of the polyurethane foam is 7 to 10 seconds and the RT thereof is 90 to 100 seconds, the moldability can be evaluated as good. Results are shown in Table 6 below.

**Experimental Example 3-7 - Evaluation of physical properties of polyurethane foam**

Each polyurethane foam produced in Examples 3-1 to 3-6 and Comparative Examples 3-1 to 3-4 was cut into 5 cm × 5 cm sizes to manufacture a sample. Next, the compressive hardness, elongation, compression set, and repeated compression set of the sample were measured using a Universal Testing Machine (UTM) according to ASTM D3574-86. Results are shown in Table 6 below.

[Table 6]

| Polyol composit | | Proc ess | Moldab ility | | Hardnes s at 25% | Hardnes s at 50% | Elonga tion | Compre ssion set | Repeate d |
|---|---|---|---|---|---|---|---|---|---|
| | ion | time | C T1) | R T2) | compres sion3) | compres sion4) | | | compre ssion set |
| Unit | - | Hou r | Sec | | kgf/$cm^2$ | | % | | |
| Exampl e 3-1 | Manufact uring Example 3-1 | 20 | 8 | 92 | 0.08 | 0.16 | 65 | 7 | 8 |
| Exampl e 3-2 | Manufact uring Example 3-2 | 20 | 8 | 92 | 0.09 | 0.16 | 66 | 8 | 7 |
| Exampl e 3-3 | Manufact uring Example 3-3 | 20 | 8 | 93 | 0.08 | 0.16 | 64 | 8 | 10 |

(continued)

| Polyol composit | ion | Proc ess time | Moldab ility CT[1)] | RT[2)] | Hardnes s at 25% compres sion[3)] | Hardnes s at 50% compres sion[4)] | Elonga tion | Compre ssion set | Repeate d compre ssion set |
|---|---|---|---|---|---|---|---|---|---|
| Unit | - | Hou r | Sec | | kgf/$cm^2$ | | % | | |
| Exampl e 3-4 | Manufact uring Example 3-4 | 20 | 8 | 92 | 0.09 | 0.16 | 66 | 7 | 10 |
| Exampl e 3-5 | Manufact uring Example 3-5 | 20 | 8 | 93 | 0.08 | 0.15 | 66 | 7 | 8 |
| Exampl e 3-6 | Manufact uring Example 3-6 | 20 | 8 | 93 | 0.09 | 0.16 | 65 | 8 | 8 |
| Compar ative Exampl e 3-1 | Compara tive Manufact uring Example 3-1 | 30 | 12 | 11 0 | 0.07 | 0.15 | 62 | 8 | 9 |
| Compar ative Exampl e 3-2 | Compara tive Manufact uring Example 3-2 | 31 | 14 | 12 5 | 0.06 | 0.13 | 63 | 10 | 12 |
| Comparative Exampl e 3-3 | Comparative Manufact uring Example 3-3 | 30 | 12 | 11 5 | 0.07 | 0.15 | 61 | 8 | 10 |
| Compar ative Exampl e 3-4 | Compara tive Manufact uring Example 3-4 | 31 | 14 | 12 4 | 0.06 | 0.14 | 62 | 10 | 12 |

1) CT: Cream Time
2) RT: Rise Time
3) Hardness at 25% compression: Repulsive force when sample is compressed by 25%
4) Hardness at 50% compression: Repulsive force when sample is compressed by 50%

As shown in Tables 5 and 6, it was confirmed that the polyol compositions according to Manufacturing Examples 3-1 to 3-6 which can be prepared from renewable natural resources exhibited a low acid value, compared to the polyol compositions according to Comparative Manufacturing Examples 3-1 to 3-4.

Accordingly, it was confirmed that the polyol compositions according to Manufacturing Examples 3-1 to 3-6 exhibited improved reactivity with the isocyanate-based composition, compared to the polyol compositions according to Comparative Manufacturing Examples 3-1 to 3-4, so that the process time for producing polyurethane foam was reduced and the moldability was improved.

In addition, it was confirmed that the polyurethane foams of Examples 3-1 to 3-6 produced from Manufacturing Examples 3-1 to 3-6 exhibited mechanical properties equivalent to or greater than those of the polyurethane foams of Comparative Examples 3-1 to 3-4 produced from a petroleum-based raw material.

Accordingly, it was confirmed that the polyol composition according to the present invention and the polyurethane foam containing the polyol composition were eco-friendly and exhibited a low acid value, improved process time efficiency and moldability, and mechanical properties equivalent to or greater than the case using a petroleum-based raw material because a petroleum-based raw material was not used.

**<Fourth preparation examples, fourth examples, and fourth experimental examples>**

## Fourth preparation examples - Preparation of polyol composition

### Manufacturing Example 4-1

Step (1) - Preparation of prepolymer

796 g of isosorbide and 22 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out for 6 hours at a temperature of about 115°C while introducing 1,904 g of propylene oxide into the reactor at a constant rate. Here, the reactor temperature was controlled not to exceed 115°C.

The reactor was stirred until all propylene oxide residues in the reactor were reacted, and after the reaction was completed, the reactor temperature was heated to 122°C. Next, 270 g of ethylene oxide was added to the reactor at a constant rate, and the reaction was carried out for 1 hour and 30 minutes at about 120°C. Here, the reactor temperature was controlled not to exceed 125°C.

After the reaction was completed, the reactor temperature was cooled to 90°C, 50 g of AMBOSOL and 5 g of diatomaceous earth was introduced into the reactor, and the reactor was stirred at about 100°C for 3 hours, thereby removing metal ions remaining in the product.

After confirming that residual metal ions were not detected in the product, the temperature of the reactor was lowered to 70°C, and then residual by-products were removed through a filter, thereby obtaining 3,000 g of a prepolymer.

Step (2) - Preparation of polyol composition

796 g of the prepolymer was fed into a pressurizable and heatable reactor. Next, the inside of the reactor was replaced with nitrogen and heated to 112°C, and then moisture inside the reactor was removed under vacuum and reduced pressure conditions.

0.14 g of double-metal cyanide was fed into the reactor, and then the reaction was carried out at about 110°C for about 6 hours and 30 minutes while adding 2,204 g of propylene oxide at a constant rate. Here, the reactor temperature was controlled not to exceed 115°C.

The stirring was maintained until all propylene oxide residues in the reactor were reacted. The temperature of the reactor was lowered to 90°C, and then 3,000 g of a polyol composition was obtained.

### Manufacturing Example 4-2

A polyol composition was obtained by the same process as in Manufacturing Example 4-1, except that 2,204 g of a mixture in which propylene oxide and ethylene oxide were mixed in a weight ratio of 6:4, instead of 2,204 g of propylene oxide of Step (2) of Manufacturing Example 4-1, was fed into a reactor.

### Manufacturing Example 4-3

A polyol composition was obtained by the same process as in Manufacturing Example 4-1, except that 2,204 g of a mixture in which propylene oxide and ethylene oxide were mixed in a weight ratio of 5:5, instead of 2,204 g of propylene oxide of Step (2) of Manufacturing Example 4-1, was fed into a reactor.

### Manufacturing Example 4-4

A polyol composition was obtained by the same process as in Manufacturing Example 4-1, except that 2,204 g of a mixture in which propylene oxide and ethylene oxide were mixed in a weight ratio of 4:6, instead of 2,204 g of propylene oxide of Step (2) of Manufacturing Example 4-1, was fed into a reactor.

### Manufacturing Example 4-5

A polyol composition was obtained by the same process as in Manufacturing Example 4-1, except that 25 g of potassium hydroxide, instead of 22 g of potassium hydroxide of Step (1) of Manufacturing Example 4-1, was fed into a reactor.

### Manufacturing Example 4-6

A polyol composition was obtained by the same process as in Manufacturing Example 4-1, except that 2,100 g of propylene oxide, instead of 1,904 g of propylene oxide of Step (1) of Manufacturing Example 4-1, was fed into a reactor.

### Manufacturing Example 4-7

A polyol composition was obtained by the same process as in Manufacturing Example 4-1, except that 300 g of ethylene oxide, instead of 270 g of ethylene oxide of Step (1) of Manufacturing Example 4-1, was fed into a reactor.

### Manufacturing Example 4-8

A polyol composition was obtained by the same process as in Manufacturing Example 4-1, except that 0.25 g of double-metal cyanide, instead of 0.14 g of double-metal cyanide of Step (2) of Manufacturing Example 4-1, was fed into a reactor.

### Manufacturing Example 4-9

A polyol composition was obtained by the same process as in Manufacturing Example 4-1, except that 0.10 g of double-metal cyanide, instead of 0.14 g of double-metal cyanide of Step (2) of Manufacturing Example 4-1, was fed into a reactor.

### Manufacturing Example 4-10

A polyol composition was obtained by the same process as in Manufacturing Example 4-1, except that 2,300 g of propylene oxide, instead of 2,204 g of propylene oxide of Step (2) of Manufacturing Example 4-1, was fed into a reactor.

### Comparative Manufacturing Example 4-1

796 g of the prepolymer and 9.8 g of the potassium hydroxide which were obtained in Step (1) of Manufacturing Example 4-1 were fed into a pressurizable and heatable reactor. Next, the inside of the reactor was replaced with nitrogen and heated to 112°C, and then moisture inside the reactor was removed under vacuum and reduced pressure conditions.

The reaction was carried out at about 110°C for about 9 hours and 30 minutes while feeding 2,204 g of propylene oxide to the reactor at a constant rate. Here, the reactor temperature was controlled not to exceed 115°C.

The reactor was stirred until all propylene oxide residues were reacted. After completion of the reaction, the reactor temperature was cooled to 90°C, 50 g of AMBOSOL and 5 g of diatomaceous earth were fed into the reactor, and the reactor was stirred at about 100°C for 3 hours to remove metal ions remaining in reactants.

After confirming that residual metal ions were not detected in the product, the temperature of the reactor was lowered to 70°C, and then residual by-products were removed through a filter, thereby obtaining 3,000 g of a polyol composition.

### Comparative Manufacturing Example 4-2

A polyol composition was obtained by the same process as in Comparative Manufacturing Example 4-1, except that 2,204 g of a mixture containing propylene oxide and ethylene oxide in a weight ratio of 6:4, instead of 2,204 g of propylene oxide of Comparative Manufacturing Example 4-1, was fed into a reactor.

### Comparative Manufacturing Example 4-3

796 g of isosorbide was fed into a pressurizable and heatable reactor. Next, the inside of the reactor was replaced with nitrogen and heated to 112°C, and then moisture inside the reactor was removed under vacuum and reduced pressure conditions.

A polymerization reaction was attempted at about 110°C for about 2 hours while adding 2,204 g of propylene oxide at a constant rate after introducing 0.14 g of double-metal cyanide into the reactor, but the catalyst of the double-metal cyanide was not activated so that the polymerization reaction with the isosorbide and the propylene oxide did not proceed.

**Comparative Manufacturing Example 4-4**

796 g of the prepolymer obtained in Step (1) of Manufacturing Example 4-1 was fed into a pressurizable and heatable reactor. Next, the inside of the reactor was replaced with nitrogen and heated to 112°C, and then moisture inside the reactor was removed under vacuum and reduced pressure conditions.

0.14 g of double-metal cyanide and 22 g of potassium hydroxide were fed into the reactor, and then the reaction was carried out at about 110°C for about 9 hours and 30 minutes while adding 2,204 g of propylene oxide at a constant rate. Here, the reactor temperature was controlled not to exceed 115°C.

The reactor was stirred until all propylene oxide residues were reacted. After completion of the reaction, the reactor temperature was cooled to 90°C, 50 g of AMBOSOL and 5 g of diatomaceous earth were fed into the reactor, and the reactor was stirred at about 100°C for 3 hours to remove metal ions remaining in reactants.

After confirming that residual metal ions were not detected in the product, the temperature of the reactor was lowered to 70°C, and then residual by-products were removed through a filter, thereby obtaining 3,000 g of a polyol composition.

**Fourth examples - Polyurethane foam preparation**

**Example 4-1**

30 g of the polyol composition prepared in Manufacturing Example 4-1 was fed into a plastic beaker. Next, 3.5 g of distilled water, 0.2 g of B-8629 (Evonik Co.) and 0.9 g of L-1501 (Momentive Co.) as a silicone foam stabilizer, 0.5 g of D-33LV (Air Products Co.) and 0.1 g of M-50 (Tosoh) as an amine catalyst, and 0.6 g of diethanolamine as a cross-linking agent were added to the beaker. Next, a mixture was obtained by mixing for 3 minutes at 4,000 rpm with a high-speed stirrer.

Next, 58 g of methylenediphenylisocyanate (CG-3701S, KUMHO Co.) was added to the mixture and foamed to produce polyurethane foam.

**Examples 4-2 to 4-10 and Comparative Examples 4-1 to 4-4**

Polyurethane foam was produced by the same process as in Example 4-1, except that 30 g of a polyol composition shown in Table 8 below was added instead of 30 g of the polyol composition prepared in Preparation Example 4-1.

**Fourth experimental examples**

**Experimental Example 4-1 - DOU measurement**

30 g of the polyol composition prepared in each of Manufacturing Examples 4-1 to 4-10 and Comparative Manufacturing Examples 4-1 to 4-4 was fed into a first flask of 250 ml. Separately, a second flask of 250 ml was prepared for a blank test. Next, 50 ml of mercuric acetate and a magnetic bar for removing impurities were fed into each of the first flask and the second flask, and the stoppers of the first flask and the second flask were sealed, followed by stirring for 30 minutes.

Next, 9 g of sodium bromide (NaBr) was fed into each of the first flask and the second flask, followed by stirring for 30 minutes. Next, 0.5 ml of a 1% phenolphthalein indicator was added to each of the first flask and the second flask, and titration was carried out with 0.1 N (normality) potassium hydroxide (KOH) until a pink color at an endpoint was maintained for 15 seconds when observed with the naked eye. A degree of unsaturation was calculated by Equation 1 below, and results are shown in Table 7 below.

[Equation 1]

$$\text{Degree of unsaturation (meq/g)} = (V_s \times V_b \times 0.1 \times F) / M$$

In Equation 1, $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

**Experimental Example 4-2 - Measurement of number average molecular weight**

2.75 g of the polyol composition prepared in each of Manufacturing Examples 4-1 to 4-10 and Comparative Manufacturing Examples 4-1 to 4-4 was introduced into each container containing a phthalic anhydride solution, and then reacted at 115°C for 30 minutes. Next, the pH was observed while titrating with a 0.5N sodium hydroxide (NaOH) solution, and the volume (ml) of sodium hydroxide (NaOH) required to reach the inflection point was measured. Separately, a blank test was conducted, and the volume (ml) of sodium hydroxide (NaOH) required to reach the pH inflection point was measured in the same manner as in the process. Next, the acid value (mgKOH/g) of the polyol composition was calculated based on the measured values. Next, the number average molecular weight of the polyol composition prepared in each of Manufacturing Examples 4-1 to 4-10 and Comparative Manufacturing Examples 4-1 to 4-4 was calculated using the acid value and Relational Expression 1 below. Results are shown in Table 7 below.

Number average molecular weight (g/mol) = (56,100 × number of equivalents)/measured acid value [Relational Expression 1]

**Experimental Example 4-3 - Reactivity evaluation**

When preparing the polyol composition of each of Manufacturing Examples 4-1 to 4-10 and Comparative Manufacturing Examples 4-1 to 4-4 using a catalyst, the reactivity was evaluated according to the following criteria. Results are shown in Table 7 below.

- ◎: Polymerization reaction proceeds smoothly.
- ◦: Polymerization reaction proceeds, but the polymerization reaction rate is slow.
- ×: The catalyst is not activated, so the polymerization reaction does not proceed.

[Table 7]

| | Step (1) Catalyst | Step (1) Alkylene oxide | Step (2) Catalyst | Step (2) Alkylene oxide | Reactivity | DOU (meq /g) | Number average molecular weight (g/mol) |
|---|---|---|---|---|---|---|---|
| Manufacturing Example 4-1 | KOH | PO[1)]+ EO[2)] | DMC[3)] | PO | ◎ | 0.004 | 2,000 |
| Manufacturing Example 4-2 | KOH | PO+EO | DMC | PO+EO | ◎ | 0.003 | 2,100 |
| Manufacturing Example 4-3 | KOH | PO+EO | DMC | PO+EO | ◎ | 0.003 | 2,100 |
| Manufacturing Example 4-4 | KOH | PO+EO | DMC | PO+EO | ◎ | 0.003 | 2,000 |
| Manufacturing Example 4-5 | KOH | PO+EO | DMC | PO | ◎ | 0.004 | 2,200 |
| Manufacturing Example 4-6 | KOH | PO+EO | DMC | PO | ◎ | 0.004 | 2,400 |
| Manufacturing Example 4-7 | KOH | PO+EO | DMC | PO | ◎ | 0.004 | 2,300 |
| Manufacturing Example 4-8 | KOH | PO+EO | DMC | PO | ◎ | 0.003 | 2,000 |
| Manufacturing Example 4-9 | KOH | PO+EO | DMC | PO | ◎ | 0.004 | 2,000 |
| Manufacturing Example 4-10 | KOH | PO+EO | DMC | PO | ◎ | 0.004 | 2,100 |

(continued)

| | Step (1) Catal yst | Step (1) Alkyle ne oxide | Step (2) Catalyst | Step (2) Alkyl ene oxide | Reacti vity | DOU (meq /g) | Number average molec ular weight (g/mol) |
|---|---|---|---|---|---|---|---|
| Comparat ive Manufact uring Example 4-1 | KOH | PO+E O | KOH | PO | ○ | 0.04 0 | 2,000 |
| Comparat ive Manufact uring Example 4-2 | KOH | PO+E O | KOH | PO+E O | ○ | 0.03 5 | 2,100 |
| Comparat ive Manufact uring Example 4-3 | DMC | N/A4) | | | × | N/A4) | |
| Comparat ive Manufact uring Example 4-4 | KOH | PO+E O | DMC+ KOH | PO | ○ | 0.02 5 | 2,000 |
| 1) PO: Propylene Oxide<br>2) EO: Ethylene Oxide<br>3) DMC: Double Metal Cyanide<br>4) N/A: The catalyst is not activated, so the polymerization reaction does not proceed. | | | | | | | |

**Experimental Example 4-4 - Evaluation of physical properties of polyurethane foam**

Each polyurethane foam produced in Examples 4-1 to 4-10 and Comparative Examples 4-1 to 4-4 was cut into 5 cm × 5 cm sizes to manufacture a sample. Next, the compressive hardness, elongation, compression set, and repeated compression set of the sample were measured using a Universal Testing Machine (UTM) according to ASTM D3574-86. Results are shown in Table 8 below.

[Table 2]

| | Polyol compositio n | DOU (meq/ g) | Hardness at 25 % compressi on1) (kgf/cm2) | Hardness at 50% compressi on2) (kgf/cm2) | Elongat ion (%) | Compres sion set (%) | Repeated compress ion set (%) |
|---|---|---|---|---|---|---|---|
| Example 4-1 | Manufactu ring Example 4-1 | 0.004 | 0.09 | 0.16 | 69 | 7 | 8 |
| Example 4-2 | Manufactu ring Example 4-2 | 0.003 | 0.08 | 0.15 | 68 | 8 | 10 |
| Example 4-3 | Manufactu ring Example 4-3 | 0.003 | 0.10 | 0.15 | 65 | 8 | 7 |
| Example 4-4 | Manufactu ring Example 4-4 | 0.003 | 0.08 | 0.16 | 67 | 8 | 8 |
| Example 4-5 | Manufactu ring Example 4-5 | 0.004 | 0.09 | 0.15 | 66 | 8 | 9 |
| Example 4-6 | Manufactu ring Example 4-6 | 0.004 | 0.09 | 0.15 | 68 | 8 | 10 |
| Example 4-7 | Manufactu ring Example 4-7 | 0.004 | 0.08 | 0.14 | 65 | 7 | 10 |
| Example 4-8 | Manufactu ring Example 4-8 | 0.003 | 0.10 | 0.15 | 62 | 9 | 8 |

(continued)

| | Polyol compositio n | DOU (meq/ g) | Hardness at 25 % compressi on[1] (kgf/cm2) | Hardness at 50% compressi on[2] (kgf/cm2) | Elongat ion (%) | Compres sion set (%) | Repeated compress ion set (%) |
|---|---|---|---|---|---|---|---|
| Example 4-9 | Manufactu ring Example 4-9 | 0.004 | 0.10 | 0.16 | 65 | 8 | 7 |
| Example 4-10 | Manufactu ring Example 4-10 | 0.004 | 0.09 | 0.16 | 64 | 8 | 7 |
| Compara tive Example 4-1 | Comparati ve Manufactu ring Example 4-1 | 0.040 | 0.05 | 0.09 | 48 | 20 | 21 |
| Compara tive Example 4-2 | Comparati ve Manufactu ring Example 4-2 | 0.035 | 0.05 | 0.08 | 47 | 18 | 19 |
| Compara tive Example 4-3 | Comparati ve Manufactu ring Example 4-3 | N/A[3] | | | | | |
| Compara tive Ex- ample 4-4 | Comparati ve Manufactu ring Example 4-4 | 0.025 | 0.06 | 0.09 | 50 | 17 | 20 |

1) Hardness at 25% compression: Repulsive force when sample is compressed by 25%
2) Hardness at 50% compression: Repulsive force when sample is compressed by 50%
3) N/A: The polymerization reaction did not proceed, so no sample was produced.

As shown in Tables 7 and 8, it was confirmed that, based on a number average molecular weight of about 2,000 g/mol to 2,400 g/mol, the polyurethane foams of Examples 4-1 to 4-10 produced from the polyol composition having an unsaturation degree of 0.02 meq/g or less exhibited significant improvement in mechanical properties such as hardness and elongation, compared to those of Comparative Examples 4-1 to 4-4. In addition, it was confirmed that the difference in the degrees of unsaturation may vary depending on the type of catalyst or the timing of catalyst introduction when manufacturing the polyol composition. Specifically, in the case of Comparative Manufacturing Example 3, it was confirmed that, since the double-metal cyanide catalyst, instead of a potassium hydroxide catalyst, was used in the prepolymer preparation process of Step (1), the catalyst was not activated so that the polymerization reaction did not proceed. In addition, it was confirmed that, when the potassium hydroxide catalyst, instead of a double-metal cyanide catalyst, was used or a combination of the double-metal cyanide catalyst and the potassium hydroxide catalyst was used in the polyol composition preparation process of Step (2), the DOU of the prepared polyol compositions exceeded 0.02 meq/g, and the physical properties such as hardness, elongation, compression set and repeated compression set of the polyurethane foams deteriorated.

**<Fifth manufacturing examples, fifth examples, fifth experimental examples>**

**Fifth manufacturing examples - Preparation of polyether polyol**

**Manufacturing Example 5-1**

Step (1) - Preparation of first polymer

Isosorbide and potassium hydroxide were fed in a weight ratio of 50:1 (isosorbide: potassium hydroxide) into a pressurizable and heatable batch reactor. Next, the inside of the reactor was replaced with nitrogen and heated to 112°C, and then moisture inside the reactor was removed for about 3 hours under vacuum and reduced pressure conditions.

The reaction was carried out at about 115°C for about 6 hours and 30 minutes while introducing 240 parts by weight of propylene oxide, relative to 100 parts by weight of isosorbide, into the reactor at a rate of about 4 g/min. Here, the temperature of the reactor was controlled not to exceed 115°C. The reactor was stirred until all propylene oxide residues were reacted, and after completion of the reaction, the reactor was heated to about 122°C.

Next, the reaction was carried out at about 120°C for about 1 hour and 30 minutes while introducing 34 parts by weight of ethylene oxide, relative to 100 parts by weight of the isosorbide, into the reactor at a rate of about 2 g/min. Here, the temperature of the reactor was controlled not to exceed 125°C.

After completion of the reaction, the reactor was cooled to about 90°C, AMBOSOL as a metal adsorbent, and diatomaceous earth as a filter aid were fed into the reactor, and the reactor was stirred at about 100°C for 3 hours to remove metal ions remaining in reactants.

Next, after confirming that no residual metal ions were detected, the temperature of the reactor was lowered to 70°C, and then residual by-products were filtered, thereby obtaining a first polymer.

Step (2) - Preparation of second polymer

The first polymer was fed into the reactor. Next, the inside of the reactor was replaced with nitrogen and heated to 112°C, and then moisture inside the reactor was removed under vacuum and reduced pressure conditions.

Next, the first polymer and the double-metal cyanide were fed in a weight ratio of 5,680:1 into the reactor.

Next, the reaction was carried out at about 115°C for about 6 hours and 30 minutes while introducing 270 parts by weight of propylene oxide, relative to 100 parts by weight of the first polymer, into the reactor at a rate of about 4 g/min. Here, the temperature of the reactor was controlled not to exceed 115°C. The stirring was maintained until all propylene oxide residues in the reactor were reacted. The temperature of the reactor was lowered to 90°C, and then a second polymer, polyether polyol, was obtained.

**Manufacturing Example 5-2**

A second polymer was obtained by the same process as in Manufacturing Example 5-1, except that 270 parts by weight of a mixture containing propylene oxide and ethylene oxide mixed in a weight ratio of 6:4, relative to 100 parts by weight of the first polymer, was introduced into the reactor, instead of introducing 270 parts by weight of propylene oxide, relative to 100 parts by weight of the first polymer, into the reactor as in Step (2) of Manufacturing Example 5-1.

**Manufacturing Example 5-3**

A second polymer was obtained by the same process as in Manufacturing Example 5-1, except that isosorbide and potassium hydroxide were introduced in a weight ratio of 70:1 (isosorbide: potassium hydroxide) into the reactor, instead of introducing isosorbide and potassium hydroxide in a weight ratio of 50:1 (isosorbide: potassium hydroxide) as in Step (1) of Manufacturing Example 5-1.

**Manufacturing Example 5-4**

A second polymer was obtained by the same process as in Manufacturing Example 5-1, except that 350 parts by weight of propylene oxide, relative to 100 parts by weight of the isosorbide, were introduced into the reactor, instead of introducing 240 parts by weight of propylene oxide, relative to 100 parts by weight of the isosorbide, into the reactor as in Step (1) of Manufacturing Example 5-1.

**Manufacturing Example 5-5**

A second polymer was obtained by the same process as in Manufacturing Example 5-1, except that 60 parts by weight of ethylene oxide, relative to 100 parts by weight of the isosorbide, was introduced into the reactor, instead of 34 parts by weight of ethylene oxide, relative to 100 parts by weight of the isosorbide, as in Step (1) of Manufacturing Example 5-1.

**Manufacturing Example 5-6**

A second polymer was obtained by the same process as in Manufacturing Example 5-1, except that moisture in the reactor was removed for about 1 hour, instead of removing moisture in the reactor for about 3 hours as in Step (1) of Manufacturing Example 5-1.

**Manufacturing Example 5-7**

A second polymer was obtained by the same process as in Manufacturing Example 5-1, except that the first polymer and the double-metal cyanide were fed in a weight ratio of 20,500:1 (the first polymer: the double-metal cyanide)

into the reactor, instead of introducing the first polymer and the double-metal cyanide in a weight ratio of 5,680:1 (the first polymer: the double-metal cyanide) into the reactor as in Step (2) of Manufacturing Example 5-1.

**Comparative Manufacturing Example 5-1**

Step (1) - Preparation of first polymer

Isosorbide and potassium hydroxide were introduced in a weight ratio of 50:1 (isosorbide: potassium hydroxide) into a pressurizable and heatable batch reactor. Next, the inside of the reactor was replaced with nitrogen and heated to 112°C, and then the moisture inside the reactor was removed for about 3 hours under vacuum and reduced pressure conditions.

The reaction was carried out at about 115°C for about 6 hours and 30 minutes while introducing 240 parts by weight of propylene oxide, relative to 100 parts by weight of the isosorbide, into the reactor at a rate of about 4 g/min. Here, the temperature of the reactor was controlled not to exceed 115°C. The reactor was stirred until all propylene oxide residues were reacted, and after completion of the reaction, the reactor was heated to about 122°C.

Next, the reaction was carried out at about 120°C for about 1 hour and 30 minutes while introducing 34 parts by weight of ethylene oxide, relative to 100 parts by weight of the isosorbide, into the reactor at a rate of about 2 g/min. Here, the temperature of the reactor was controlled not to exceed 125°C.

After completion of the reaction, the reactor was cooled to about 90°C, AMBOSOL as a metal adsorbent, and diatomaceous earth as a filter aid were fed into the reactor, and the reactor was stirred at about 100°C for 3 hours to remove metal ions remaining in reactants.

Next, after confirming that no residual metal ions were detected, and then the temperature of the reactor was lowered to 70°C, and then residual by-products were filtered, thereby obtaining a first polymer.

Step (2) - Preparation of second polymer

The first polymer and potassium hydroxide were fed into the reactor in a weight ratio of 100:1 (the first polymer: potassium hydroxide). Next, the inside of the reactor was replaced with nitrogen and heated to 112°C, and then moisture inside the reactor was removed under vacuum and reduced pressure conditions.

Next, the reaction was carried out at about 115°C for about 6 hours and 30 minutes while introducing 270 parts by weight of propylene oxide, relative to 100 parts by weight of the first polymer, into the reactor at a rate of about 4 g/min. Here, the temperature of the reactor was controlled not to exceed 115°C.

The stirring was maintained until all propylene oxide residues in the reactor were reacted. The temperature of the reactor was lowered to 90°C, and then AMBOSOL, as a metal adsorbent, and diatomaceous earth, as a filter aid, were fed into the reactor, and then the reactor was stirred at about 100°C for 3 hours to remove metal ions remaining in reactants.

Next, after confirming that no residual metal ions were detected, and then the temperature of the reactor was lowered to 70°C, and then residual by-products were filtered, thereby obtaining polyether polyol as a second polymer.

**Comparative Manufacturing Example 5-2**

A second polymer was obtained by the same process as in Comparative Manufacturing Example 5-1, except that 270 parts by weight of a mixture containing propylene oxide and ethylene oxide in a weight ratio of 6:4, relative to 100 parts by weight of the first polymer, was introduced into the reactor, instead of introducing 270 parts by weight of propylene oxide, relative to 100 parts by weight of the first polymer, into the reactor as in Comparative Manufacturing Example 5-1.

**Comparative Manufacturing Example 5-3**

Isosorbide was fed into a pressurizable and heatable batch reactor. Next, the inside of the reactor was replaced with nitrogen and heated to 112°C, and then moisture inside the reactor was removed under vacuum and reduced pressure conditions.

Next, 0.017 parts by weight of double-metal cyanide, relative to 100 parts by weight of the isosorbide, was fed into the reactor.

Next, the polymerization reaction was carried out at about 115°C for about 2 hours while introducing 270 parts by weight of propylene oxide, relative to 100 parts by weight of the isosorbide, into the reactor at a rate of about 4 g/min, but the catalyst of the double-metal cyanide was not activated so that the polymerization reaction with the isosorbide and the propylene oxide did not proceed.

**Comparative Manufacturing Example 5-4**

A second polymer was obtained by the same process as in Comparative Manufacturing Example 5-1, except that isosorbide and potassium hydroxide were introduced into the reactor in a weight ratio of 20:1 (isosorbide: potassium hydroxide), instead of introducing isosorbide and potassium hydroxide in a weight ratio of 50:1 (isosorbide: potassium hydroxide) into the reactor as in Step (1) of Comparative Manufacturing Example 5-1.

**Comparative Manufacturing Example 5-5**

Step (1) - Preparation of first polymer

Isosorbide and potassium hydroxide were fed into a pressurizable and heatable batch reactor in a weight ratio of 50:1 (isosorbide: potassium hydroxide). Next, the inside of the reactor was replaced with nitrogen and heated to 112°C, and then moisture in the reactor was removed for about 1 hour under vacuum and reduced pressure conditions.

The reaction was carried out at about 115°C for about 6 hours and 30 minutes while introducing 270 parts by weight of a mixture containing propylene oxide and ethylene oxide in a weight ratio of 6:4, relative to 100 parts by weight of the isosorbide, into the reactor at a rate of about 4 g/min. Here, the temperature of the reactor was controlled not to exceed 115°C.

After completion of the reaction, the reactor was cooled to about 90°C, AMBOSOL, as a metal adsorbent, and diatomaceous earth, as a filter aid, were fed into the reactor, and the reactor was stirred at about 100°C for 3 hours to remove metal ions remaining in reactants.

Next, after confirming that no residual metal ions were detected, and then the temperature of the reactor was lowered to 70°C, and then residual by-products were filtered, thereby obtaining a first polymer.

Step (2) - Preparation of second polymer

The first polymer and potassium hydroxide were fed into the reactor in a weight ratio of 100:1 (the first polymer: potassium hydroxide). Next, the inside of the reactor was replaced with nitrogen and heated to 112°C, and then moisture inside the reactor was removed under vacuum and reduced pressure conditions.

Next, the reaction was carried out at about 115°C for about 6 hours and 30 minutes while introducing 270 parts by weight of propylene oxide, relative to 100 parts by weight of the first polymer, into the reactor at a rate of about 4 g/min. Here, the temperature of the reactor was controlled not to exceed 115°C.

The stirring was maintained until all propylene oxide residues in the reactor were reacted. The temperature of the reactor was lowered to 90°C, and then AMBOSOL, a metal adsorbent and diatomaceous earth, as a filter aid, were fed into the reactor, and the reactor was stirred at about 100°C for 3 hours to remove metal ions remaining in reactants.

Next, after confirming that no residual metal ions were detected, and then the temperature of the reactor was lowered to 70°C, and then residual by-products were filtered, thereby obtaining polyether polyol as a second polymer.

**Comparative Manufacturing Example 5-6**

A second polymer was obtained by the same process as in Comparative Manufacturing Example 5-1, except that 250 parts by weight of ethylene oxide, relative to 100 parts by weight of the isosorbide, was introduced into the reactor, instead of introducing 34 parts by weight of ethylene oxide, relative to 100 parts by weight of the isosorbide, into the reactor as in Step (1) of Comparative Manufacturing Example 5-1.

The catalysts, reactants and reaction conditions used in Manufacturing Examples 5-1 to 5-7 and Comparative Manufacturing Examples 5-1 to 5-6 are shown in Table 9 below.

[Table 9]

| | Step (1) | | | | | Step (2) | | |
|---|---|---|---|---|---|---|---|---|
| | Cataly st | Weight ratio of isosorbid e: catalyst a | AO1) type | Weig ht ratio of PO:E O | Moistur e remova 1 time (h) | Cataly st | Weight ratio of first polyme r: catalyst | AO type |
| Manufacturi ng Example 5-1 | KOH | 50:1 | PO2), EO3) | 7.06:1 | 3 | DMC4) | 5,680:1 | PO |

(continued)

| | Step (1) | | | | | Step (2) | | |
|---|---|---|---|---|---|---|---|---|
| | Cataly st | Weight ratio of isosorbid e: catalyst a | AO[1] type | Weig ht ratio of PO:E O | Moistur e remova 1 time (h) | Cataly st | Weight ratio of first polyme r: catalyst | AO type |
| Manufacturi ng Example 5-2 | KOH | 50:1 | PO, EO | 7.06:1 | 3 | DMC | 5,680:1 | PO+E O mixtur e |
| Manufacturi ng Example 5-3 | KOH | 70:1 | PO, EO | 7.06:1 | 3 | DMC | 5,680:1 | PO |
| Manufacturi ng Example 5-4 | KOH | 50:1 | PO, EO | 10.3:1 | 3 | DMC | 5,680:1 | PO |
| Manufacturi ng Example 5-5 | KOH | 50:1 | PO, EO | 4:1 | 3 | DMC | 5,680:1 | PO |
| Manufacturi ng Example 5-6 | KOH | 50:1 | PO, EO | 7.06:1 | 1 | DMC | 5,680:1 | PO |
| Manufacturi ng Example 5-7 | KOH | 50:1 | PO, EO | 7.06:1 | 3 | DMC | 20,500: 1 | PO |
| Comparative Manufacturi ng Example 5-1 | KOH | 50:1 | PO, EO | 7.06:1 | 3 | KOH | 100:1 | PO |
| Comparative Manufacturi ng Example 5-2 | KOH | 50:1 | PO, EO | 7.06:1 | 3 | KOH | 100:1 | PO+E O mixtur e |
| Comparative Manufacturi ng Example 5-3 | DMC | N/A[5] | | | | | | |
| Comparative Manufacturi ng Example 5-4 | KOH | 20:1 | PO, EO | 7.06:1 | 3 | KOH | 100:1 | PO |
| Comparative Manufacturi ng Example 5-5 | KOH | 50:1 | PO+E O mixtur e | 1.5:1 | 1 | KOH | 100:1 | PO |
| Comparative Manufacturi ng Example 5-6 | KOH | 50:1 | PO, EO | 1:1.04 | 3 | KOH | 100:1 | PO |
| 1) AO: Alkylene Oxide<br>2) PO: Propylene Oxide<br>3) EO: Ethylene Oxide<br>4) DMC: Double Metal Cyanide<br>5) N/A: The catalyst is not activated, so the polymerization reaction does not proceed. | | | | | | | | |

## Fifth examples - Preparation of polyurethane foam

### Example 5-1

30 g of the polyether polyol prepared in Manufacturing Example 5-1 was fed into a plastic beaker. Next, 3.5 g of distilled water, 0.2 g of B-8629 (Evonik Co.) and 0.9 g of L-1501 (Momentive Co.) as a silicone foam stabilizer, 0.5 g of D-33LV (Air Products Co.) and 0.1 g of M-50 (Tosoh) as an amine catalyst, and 0.6 g of diethanolamine as a cross-linking agent were added to the beaker. Next, a mixture was obtained by mixing for 3 minutes at 4,000 rpm with a high-speed

stirrer.

Next, 58 g of methylenediphenylisocyanate (CG-3701S, KUMHO Co.) was added to the mixture and foamed to produce polyurethane foam.

**Examples 5-2 to 5-7 and Comparative Examples 5-1 to 5-6**

Polyurethane foam was produced by the same process as in Example 5-1, except that 30 g of polyether polyol shown in Table 11 below was fed into a plastic beaker, instead of 30 g of polyether polyol prepared in Manufacturing Example 5-1.

**Fifth experimental examples**

**Experimental Example 5-1 - Measurement of residual moisture content**

After the dehydration process of Step (1) of each of Manufacturing Examples 5-1 to 5-7 and Comparative Manufacturing Examples 5-1 to 5-6, the residual moisture content relative to the total weight of the dehydrated composition was measured by the Karl Fischer coulometric titration method, and results are shown in Table 10 below. Results are shown in Table 10 below.

**Experimental Example 5-2 - DOU measurement**

30 g of the polyether polyol prepared in each of Manufacturing Examples 5-1 to 5-7 and Comparative Manufacturing Examples 5-1 to 5-6 was fed into a first flask of 250 ml. Separately, a second flask of 250 ml was prepared for a blank test. Next, 50 ml of mercuric acetate and a magnetic bar for removing impurities were fed into each of the first flask and the second flask, and the stoppers of the first flask and the second flask were sealed, followed by stirring for 30 minutes.

Next, 9 g of sodium bromide (NaBr) was fed into each of the first flask and the second flask, followed by stirring for 30 minutes. Next, 0.5 ml of a 1% phenolphthalein indicator was added to each of the first flask and the second flask, and titration was carried out with 0.1 N (normality) potassium hydroxide (KOH) until a pink color at an endpoint was maintained for 15 seconds when observed with the naked eye so as to measure DOU. Results are shown in Table 10 below.

**Experimental Example 5-3 - Reactivity evaluation**

When preparing the polyether polyol of each of Manufacturing Examples 5-1 to 5-7 and Comparative Manufacturing Examples 5-1 to 5-6 using a catalyst, the reactivity was evaluated according to the following criteria. Results are shown in Table 10 below.

- ◎: Polymerization reaction proceeds smoothly.
- ◦: Polymerization reaction proceeds, but the polymerization reaction rate is slow.
- ×: The catalyst is not activated, so the polymerization reaction does not proceed.

**Experimental Example 5-4 - Measurement of number average molecular weight**

2.75 g of the polyether polyol prepared in each of Manufacturing Examples 5-1 to 5-7 and Comparative Manufacturing Examples 5-1 to 5-6 was introduced into each container containing a phthalic anhydride solution, and then reacted at 115°C for 30 minutes. Next, the pH was observed while titrating with a 0.5N sodium hydroxide (NaOH) solution, and the volume (ml) of sodium hydroxide (NaOH) required to reach the inflection point was measured. Separately, a blank test was conducted, and the volume (ml) of sodium hydroxide (NaOH) required to reach the pH inflection point was measured in the same manner as in the process. Next, the acid value (mgKOH/g) of the polyol composition was calculated based on the measured values. Next, the number average molecular weight of the polyether polyol prepared in each of Manufacturing Examples 5-1 to 5-7 and Comparative Manufacturing Examples 5-1 to 5-6 was calculated using the acid value and Relational Expression 1 below. Results are shown in Table 10 below.

$$\text{Number average molecular weight (g/mol)} = (56{,}100 \times \text{number of equivalents})/\text{measured acid value} \qquad \text{[Relational Expression 1]}$$

[Table 10]

| | Residual moisture content (PPM) | DOU (meq/g) | Reactivity | Number average molecular weight (g/mol) |
|---|---|---|---|---|
| Manufacturing Example 5-1 | 220 | 0.004 | ◎ | 2,000 |
| Manufacturing Example 5-2 | 230 | 0.003 | ◎ | 2,100 |
| Manufacturing Example 5-3 | 280 | 0.003 | ◎ | 2,000 |
| Manufacturing Example 5-4 | 220 | 0.004 | ◎ | 2,200 |
| Manufacturing Example 5-5 | 220 | 0.004 | ◎ | 2,100 |
| Manufacturing Example 5-6 | 1,180 | 0.003 | ◎ | 2,000 |
| Manufacturing Example 5-7 | 220 | 0.004 | ◎ | 2,000 |
| Comparative Manufacturing Example 5-1 | 220 | 0.038 | ○ | 2,100 |
| Comparative Manufacturing Example 5-2 | 230 | 0.040 | ○ | 2,000 |
| Comparative Manufacturing Example 5-3 | N/A1) | | × | N/A2) |
| Comparative Manufacturing Example 5-4 | 270 | 0.041 | ○ | 2,100 |
| Comparative Manufacturing Example 5-5 | 1,320 | 0.038 | ○ | 2,000 |
| Comparative Manufacturing Example 5-6 | 230 | 0.040 | ○ | 2,200 |
| 1),2) N/A: Not measured | | | | |

**Experimental Example 5-5 - Evaluation of physical properties of polyurethane foam**

Each polyurethane foam produced in Examples 5-1 to 5-7 and Comparative Examples 5-1 to 5-6 was cut into 5 cm × 5 cm sizes to manufacture a sample. Next, the compressive hardness, elongation, compression set, and repeated compression set of the sample were measured using a Universal Testing Machine (UTM) according to ASTM D3574-86, and results are shown in Table 11 below.

**Experimental Example 5-6 - Appearance evaluation**

The appearance of the polyurethane foam produced in each of Examples 5-1 to 5-7 and Comparative Examples 5-1 to 5-6 was evaluated according to the following criteria, and results are shown in Table 11 below.

- Satisfactory: When observed with the naked eye, the entire surface of the polyurethane foam is smooth.
- Poor: When observed with the naked eye, roughness occurs on at least part of the entire surface of the polyurethane foam

**Experimental Example 5-7 - Color evaluation**

To evaluate the color of the polyurethane foam produced in each of Examples 5-1 to 5-7 and Comparative Examples 5-1 to 5-6, a yellowness was measured using MiniScan XE Plus (HUNTERLAB Co.) according to ASTM E313-96. Results are shown in Table 11 below. The larger the measurement value, the closer it is to yellow, and the smaller the measurement value, the clearer and more transparent it is.

[Table 11]

| | Polyether polyol | Hardness at 25% compression1) (kgf/cm2 ) | Hardness at 50% compression2) (kgf/cm2 ) | Elongation (%) | Compression set (%) | Repeated compression set (%) | Appearance evaluation | Color evaluation (yellow index) |
|---|---|---|---|---|---|---|---|---|
| Example 5-1 | Manufacturing Example 5-1 | 0.09 | 0.16 | 69 | 7 | 8 | Satisfactory | 10.3 |
| Example 5-2 | Manufacturing Example 5-2 | 0.08 | 0.15 | 68 | 8 | 10 | Satisfactory | 11.5 |
| Example 5-3 | Manufacturing Example 5-3 | 0.09 | 0.16 | 67 | 8 | 11 | Satisfactory | 10.4 |
| Example 5-4 | Manufacturing Example 5-4 | 0.09 | 0.16 | 69 | 7 | 10 | Satisfactory | 10.9 |
| Example 5-5 | Manufacturing Example 5-5 | 0.08 | 0.16 | 67 | 9 | 11 | Satisfactory | 9.2 |
| Example 5-6 | Manufacturing Example 5-6 | 0.06 | 0.13 | 62 | 12 | 13 | Satisfactory | 10.5 |
| Example 5-7 | Manufacturing Example 5-7 | 0.06 | 0.13 | 63 | 11 | 14 | Satisfactory | 10.2 |
| Comparative Example 5-1 | Comparative Manufacturing Example 5-1 | 0.03 | 0.08 | 48 | 20 | 21 | Satisfactory | 15.2 |
| Comparative Example 5-2 | Comparative Manufacturing Example 5-2 | 0.03 | 0.08 | 47 | 18 | 19 | Satisfactory | 15.3 |
| Comparative Example 5-3 | Comparative Manufacturing Example 5-3 | N/A3) | | | | | | |
| Comparative Example 5-4 | Comparative Manufacturing Example 5-4 | 0.03 | 0.07 | 42 | 20 | 21 | Satisfactory | 18.3 |
| Comparative Example 5-5 | Comparative Manufacturing Example 5-5 | 0.03 | 0.07 | 38 | 23 | 20 | Poor | 38.2 |

(continued)

| | Polyethe r polyol | Hardnes s at 25% compres sion1) (kgf/cm2 ) | Hardnes s at 50% compres sion2) (kgf/cm2 ) | Elong ation (%) | Compre ssion set (%) | Repeate d compre ssion set (%) | Appear ance evaluat ion | Color evalua tion (yello w index) |
|---|---|---|---|---|---|---|---|---|
| Compar ative Ex- ampl e 5-6 | Compara tive Manufac turing Example 5-6 | 0.03 | 0.08 | 37 | 21 | 19 | Poor | 45.3 |
| 1) Hardness at 25% compression: Repulsive force when sample is compressed by 25%<br>2) Hardness at 50% compression: Repulsive force when sample is compressed by 50%<br>3) N/A: The polymerization reaction did not proceed, so no sample was produced. | | | | | | | | |

As shown in Tables 9 to 11, it was confirmed that the polyurethane foams of Examples 5-1 to 5-7 containing the polyether polyol prepared according to the preparation method of the present invention exhibited significant improvement in mechanical properties such as hardness, elongation, compression set and repeated compression set, compared to the polyurethane foams of Comparative Example 5-1, 5-2, 5-4 to 5-6. In addition, it was confirmed that the polyurethane foam of Examples 5-1 to 5-7 had excellent appearance, compared to those of Comparative Examples 5-5 and 5-6.

It was confirmed that the difference in mechanical properties of the polyurethane foams may vary depending on the type of catalyst and the timing of catalyst injection during the production of polyether polyol. Specifically, in Comparative Manufacturing Example 3, the polymerization reaction did not proceed due to deactivation of the catalyst because the double-metal cyanide catalyst, instead of an alkali catalyst, was used in the first polymer manufacturing process of Step (1). In addition, it was confirmed that, when an alkali catalyst was used instead of a double-metal cyanide catalyst in the process of Step (2) of preparing the second polymer, i.e., polyether polyol, the polyether polyol exhibited high DOU, and the physical properties such as hardness, elongation, compression set and repeated compression set of the polyurethane foam deteriorated. In addition, it was confirmed that the appearance of the polyurethane foam may vary depending on the content ratios of propylene oxide and ethylene oxide during the production of polyether polyol.

**<Sixth manufacturing examples, sixth examples, and sixth experimental examples>**

**Sixth manufacturing examples - Preparation of polyether polyol**

**Manufacturing Example 6-1**

Step (1) - Preparation of prepolymer

798 g of isosorbide and 21 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out for 6 hours at a temperature of about 115°C while introducing 1,900 g of propylene oxide into the reactor at a constant rate. Here, the reactor temperature was controlled not to exceed 115°C.

The reactor was stirred until all propylene oxide residues in the reactor were reacted, and after the reaction was completed, the reactor temperature was heated to 122°C. Next, 275 g of ethylene oxide was added to the reactor at a constant rate, and the reaction was carried out for 1 hour and 30 minutes at about 120°C. Here, the reactor temperature was controlled not to exceed 125°C.

After the reaction was completed, the reactor temperature was cooled to 90°C, 50 g of AMBOSOL and 5 g of diatomaceous earth was introduced into the reactor, and the reactor was stirred at about 100°C for 3 hours, thereby removing metal ions remaining in the product.

After confirming that residual metal ions were not detected in the product, the temperature of the reactor was lowered to 70°C, and then residual by-products were removed through a filter, thereby obtaining 3,000 g of a prepolymer.

Step (2) - Preparation of polyether polyol

795 g of the prepolymer was fed into a pressurizable and heatable reactor. Next, the inside of the reactor was

replaced with nitrogen and heated to 112°C, and then moisture inside the reactor was removed under vacuum and reduced pressure conditions.

After feeding 0.14 g of double-metal cyanide into the reactor, the reaction was carried out at about 110°C for about 7 hours while introducing 2,200 g of a mixture containing propylene oxide and ethylene oxide in a weight ratio of 6:4 into the reactor. Here, the reactor temperature was controlled not to exceed 115°C.

The reactor was continuously stirred until the mixture remaining in the reactor was completely reacted. The temperature of the reactor was lowered to 90°C, and then 3,000 g of polyether polyol was obtained.

**Manufacturing Example 6-2**

Polyether polyol was obtained by the same process as in Manufacturing Example 6-1, except that a mixture containing propylene oxide and ethylene oxide in a weight ratio of 5.5:4.5 was introduced into a reactor, instead of introducing a mixture containing propylene oxide and ethylene oxide in a weight ratio of 6:4 into a reactor as in Step (2) of Manufacturing Example 6-1.

**Manufacturing Example 6-3**

Polyether polyol was obtained by the same process as in Manufacturing Example 6-1, except that a mixture containing propylene oxide and ethylene oxide in a weight ratio of 5:5 was introduced into a reactor, instead of introducing a mixture containing propylene oxide and ethylene oxide in a weight ratio of 6:4 into a reactor as in Step (2) of Manufacturing Example 6-1.

**Manufacturing Example 6-4**

Polyether polyol was obtained by the same process as in Manufacturing Example 6-1, except that a mixture containing propylene oxide and ethylene oxide in a weight ratio of 4.5:5.5 was introduced into a reactor, instead of introducing a mixture containing propylene oxide and ethylene oxide in a weight ratio of 6:4 into a reactor as in Step (2) of Manufacturing Example 6-1.

**Manufacturing Example 6-5**

Polyether polyol was obtained by the same process as in Manufacturing Example 6-1, except that a mixture containing propylene oxide and ethylene oxide in a weight ratio of 4:6 was fed into a reactor, instead of introducing a mixture containing propylene oxide and ethylene oxide in a weight ratio of 6:4 into a reactor as in Step (2) of Manufacturing Example 6-1.

**Manufacturing Example 6-6**

Polyether polyol was obtained by the same process as in Manufacturing Example 6-1, except that 0.16 g of double-metal cyanide was introduced into a reactor instead of introducing 0.14 g of double-metal cyanide into a reactor as in Step (2) of Manufacturing Example 6-1.

**Manufacturing Example 6-7**

Polyether polyol was obtained by the same process as in Manufacturing Example 6-1, except that 0.12 g of double-metal cyanide was introduced into a reactor, instead of introducing 0.14 g of double-metal cyanide into a reactor as in Step (2) of Manufacturing Example 6-1.

**Comparative Manufacturing Example 6-1**

796 g of the prepolymer and 9.8 g of the potassium hydroxide which were obtained in Step (1) of Manufacturing Example 6-1 were fed into a pressurizable and heatable reactor. Next, the inside of the reactor was replaced with nitrogen and heated to 112°C, and then moisture inside the reactor was removed under vacuum and reduced pressure conditions.

The reaction was carried out at about 110°C for about 9 hours and 30 minutes while introducing 2,204 g of a mixture containing propylene oxide and ethylene oxide in a weight ratio of 6:4 into the reactor. Here, the reactor temperature was controlled not to exceed 115°C.

The reactor was stirred until the mixture remaining in the reactor was completely reacted. After completion of the reaction, the reactor temperature was cooled to 90°C, 50 g of AMBOSOL and 5 g of diatomaceous earth were fed into the

reactor, and the reactor was stirred at about 100°C for 3 hours to remove residual metal ions.

After confirming that no residual metal ions were detected, and then the temperature of the reactor was lowered to 70°C, and then residual by-products were removed through a filter, thereby obtaining 3,000 g of polyether polyol.

**Comparative Manufacturing Example 6-2**

Polyether polyol was obtained by the same process as in Comparative Manufacturing Example 6-1, except that a mixture containing propylene oxide and ethylene oxide in a weight ratio of 5:5 was introduced into a reactor, instead of introducing a mixture of propylene oxide and ethylene oxide mixed in a weight ratio of 6:4 into a reactor as in Comparative Manufacturing Example 6-1.

**Comparative Manufacturing Example 6-3**

Polyether polyol was obtained by the same process as in Comparative Manufacturing Example 6-1, except that a mixture containing propylene oxide and ethylene oxide in a weight ratio of 30:1 was introduced into a reactor, instead of introducing a mixture of propylene oxide and ethylene oxide mixed in a weight ratio of 6:4 into a reactor as in Manufacturing Example 6-1.

**Comparative Manufacturing Example 6-4**

795 g of the prepolymer obtained in Step (1) of Manufacturing Example 6-1 was fed into a pressurizable and heatable reactor. Next, the inside of the reactor was replaced with nitrogen and heated to 112°C, and then moisture inside the reactor was removed under vacuum and reduced pressure conditions.

A polymerization reaction was attempted at about 110°C for about 2 hours while adding 2,200 g of ethylene oxide at a constant rate after introducing 0.14 g of double-metal cyanide into the reactor, but the catalyst of the double-metal cyanide was not activated so that the polymerization reaction with the prepolymer and ethylene oxide did not proceed.

**Comparative Manufacturing Example 6-5**

796 g of the prepolymer, which was obtained in Step (1) of Manufacturing Example 6-1, and 9.8 g of potassium hydroxide were fed into a pressurizable and heatable reactor. Next, the inside of the reactor was replaced with nitrogen and heated to 112°C, and then moisture inside the reactor was removed under vacuum and reduced pressure conditions.

The reaction was carried out at about 110°C for about 9 hours and 30 minutes while introducing 2,204 g of a mixture containing propylene oxide and ethylene oxide in a weight ratio of 6:4 into the reactor. Here, the reactor temperature was controlled not to exceed 115°C.

The reactor was stirred until the mixture remaining in the reactor was completely reacted. The reactor was cooled to 90°C, and then residual by-products were removed through a filter, thereby obtaining 3,000 g of polyether polyol.

**Comparative Manufacturing Example 6-6**

A polyether polyol was obtained in the same manner as in Comparative Manufacturing Example 6-5, except that a mixture containing propylene oxide and ethylene oxide in a weight ratio of 1:30 was introduced into a reactor, instead of introducing a mixture containing propylene oxide and ethylene oxide in a weight ratio of 6:4 into a reactor as in Comparative Manufacturing Example 6-5.

<u>**Sixth examples - Preparation of polyurethane foam**</u>

**Example 6-1**

30 g of the polyether polyol prepared in Manufacturing Example 6-1 was fed into a plastic beaker. Next, 3.5 g of distilled water, 0.2 g of B-8629 (Evonik Co.) and 0.9 g of L-1501 (Momentive Co.) as a silicone foam stabilizer, 0.5 g of D-33LV (Air Products Co.) and 0.1 g of M-50 (Tosoh) as an amine catalyst, and 0.6 g of diethanolamine as a cross-linking agent were added to the beaker. Next, a mixture was obtained by mixing for 3 minutes at 4,000 rpm with a high-speed stirrer.

Next, 58 g of methylenediphenylisocyanate (CG-3701S, KUMHO Co.) was added to the mixture and foamed to produce polyurethane foam.

**Examples 6-2 to 6-7 and Comparative Examples 6-1 to 6-6**

Polyurethane foam was produced by the same process as in Example 6-1, except that 30 g of polyether polyol shown in Table 13 below was added instead of 30 g of the polyether polyol prepared in Preparation Example 6-1.

**Sixth experimental examples**

**Experimental Example 6-1 - Measurement of primary alcohol content**

After confirming the polyether polyol prepared in each of Manufacturing Examples 6-1 to 6-7 and Comparative Manufacturing Examples 6-1 to 6-6 by $^{13}C$ NMR spectrum, the peak at about 61 ppm appearing in the $^{13}C$ NMR spectrum was analyzed to calculate the content, and results are shown in Table 12 below. In addition, the $^{13}C$ NMR spectrum of the polyether polyol prepared in Manufacturing Example 6-1 is illustrated in FIG. 10, and the $^{13}C$ NMR spectrum of the polyether polyol prepared in Comparative Manufacturing Example 6-1 is illustrated in FIG. 11.

**Experimental Example 6-2 - Measurement of number average molecular weight**

2.75 g of the polyether polyol prepared in each of Manufacturing Examples 6-1 to 6-7 and Comparative Manufacturing Examples 6-1 to 6-6 was introduced into each container containing a phthalic anhydride solution, and then reacted at 115°C for 30 minutes. Next, the pH was observed while titrating with a 0.5N sodium hydroxide (NaOH) solution, and the volume (ml) of sodium hydroxide (NaOH) required to reach the inflection point was measured. Separately, a blank test was conducted, and the volume (ml) of sodium hydroxide (NaOH) required to reach the pH inflection point was measured in the same manner as in the process. Next, the acid value (mgKOH/g) of the polyether polyol was calculated based on the measured values. Next, the number average molecular weight of the polyether polyol prepared in each of Manufacturing Examples 6-1 to 6-7 and Comparative Manufacturing Examples 6-1 to 6-6 was calculated using the acid value and Relational Expression 1 below. Results are shown in Table 12 below.

Number average molecular weight (g/mol) = (56,100 × number of equivalents)/measured acid value [Relational Expression 1]

**Experimental Example 6-3 - Viscosity measurement**

The viscosity of the polyether polyol prepared in each of Manufacturing Examples 6-1 to 6-7 and Comparative Manufacturing Examples 6-1 to 6-6 was measured at 25 °C using DV-III manufactured by Brookfield Co., and results are shown in Table 12 below.

**Experimental Example 6-4 - Storage stability evaluation**

The polyether polyol prepared in each of Manufacturing Examples 6-1 to 6-7 and Comparative Manufacturing Examples 6-1 to 6-6 was fed into a 450 ml sample bottle, and then stored at -3°C for 1 hour. After 1 hour, the storage stability of the polyether polyol was evaluated according to the following criteria, and results are shown in Table 12 below.

- ◦: No gelling phenomenon occurs
- ×: Gelling phenomenon occurs

**Experimental Example 6-5 - Reactivity evaluation**

The reactivity of the polyether polyols of Manufacturing Examples 6-1 to 6-7 and Comparative Manufacturing Examples 6-1 to 6-6 prepared using a catalyst was evaluated according to the following criteria, and results are shown in Table 12 below.

- ◎: Polymerization reaction proceeds smoothly.
- o: Polymerization reaction proceeds, but the polymerization reaction rate is slow.
- ×: The catalyst is not activated, so the polymerization reaction does not proceed.

**Experimental Example 6-6 - Measurement of residual metal content**

A residual metal content in the polyether polyol prepared in each of Manufacturing Examples 6-1 to 6-7 and

Comparative Manufacturing Examples 6-1 to 6-6 was measured using atomic absorption spectrometry, and results are shown in Table 12 below.

[Table 12]

| | Conte nt of primar y alcoho 1 (mol %) | Number average molecular weight (g/mol) | Viscosi ty (cPs) | Storag e stabili ty | Reactivi ty | Conte nt of residu al metal 1) (PPM ) |
|---|---|---|---|---|---|---|
| Manufacturi ng Example 6-1 | 47 | 2,000 | 400 | ○ | ◎ | < 1 |
| Manufacturi ng Example 6-2 | 52 | 2,100 | 420 | ○ | ◎ | < 1 |
| Manufacturi ng Example 6-3 | 56 | 2,100 | 440 | ○ | ◎ | < 1 |
| Manufacturi ng Example 6-4 | 62 | 2,000 | 450 | ○ | ◎ | < 1 |
| Manufacturi ng Example 6-5 | 65 | 2,200 | 470 | ○ | ◎ | < 1 |
| Manufacturi ng Example 6-6 | 49 | 2,400 | 410 | ○ | ◎ | < 1 |
| Manufacturi ng Example 6-7 | 45 | 2,300 | 395 | ○ | ◎ | < 1 |
| Comparativ e Manufacturi ng Example 6-1 | 0 | 2,000 | 340 | ○ | ○ | < 1 |
| Comparativ e Manufacturi ng Example 6-2 | 0 | 2,100 | 350 | ○ | ○ | < 1 |
| Comparativ e Manufacturi ng Example 6-3 | 8 | 2,000 | 380 | ○ | ◎ | < 1 |
| Comparativ e Manufacturi ng Example 6-4 | N/A2) | | | | × | N/A3) |
| Comparativ e Manufacturi ng Example 6-5 | 0 | 2,100 | 350 | ○ | ○ | 9,500 |
| Comparativ e Manufacturi ng Example 6-6 | 93 | 2,000 | 1,110 | × | ○ | 9,400 |
| 1) Content of residual metal: Content of potassium based on the total weight of polyether polyol.<br>2),3) N/A: Not measured. | | | | | | |

**Experimental Example 6-7 - Evaluation of physical properties of polyurethane foam**

Each polyurethane foam produced in Examples 6-1 to 6-7 and Comparative Examples 6-1 to 6-6 was cut into 5 cm × 5 cm sizes to manufacture a sample. Next, the compressive hardness, elongation, compression set, and repeated compression set of the sample were measured using a Universal Testing Machine (UTM) according to ASTM D3574-86. Results are shown in Table 13 below.

[Table 13]

| | Polyether polyol | Conte nt of prima ry alcoh ol (mol %) | Hardness at 25% compressi on1) (kgf/cm2) | Hardness at 50% compressi on2) (kgf/cm2) | Elongat ion (%) | Compres sion set (%) | Repeated compress ion set (%) |
|---|---|---|---|---|---|---|---|
| Example 6-1 | Manufactu ring Example 6-1 | 47 | 0.09 | 0.15 | 67 | 7 | 8 |
| Example 6-2 | Manufactu ring Example 6-2 | 52 | 0.09 | 0.15 | 68 | 8 | 9 |
| Example 6-3 | Manufactu ring Example 6-3 | 56 | 0.10 | 0.16 | 69 | 8 | 9 |
| Example 6-4 | Manufactu ring Example 6-4 | 62 | 0.10 | 0.16 | 69 | 8 | 10 |
| Example 6-5 | Manufactu ring Example 6-5 | 65 | 0.10 | 0.16 | 69 | 8 | 10 |
| Example 6-6 | Manufactu ring Example 6-6 | 49 | 0.09 | 0.15 | 67 | 8 | 9 |
| Example 6-7 | Manufactu ring Example 6-7 | 45 | 0.09 | 0.14 | 66 | 7 | 9 |
| Compara tive Example 6-1 | Comparati ve Manufactu ring Example 6-1 | 0 | 0.05 | 0.09 | 48 | 20 | 21 |
| Compara tive Example 6-2 | Comparati ve Manufactu ring Example 6-2 | 0 | 0.05 | 0.08 | 47 | 18 | 19 |
| Compara tive Example 6-3 | Comparati ve Manufactu ring Example 6-3 | 8 | 0.06 | 0.09 | 49 | 17 | 18 |
| Compara tive Example 6-4 | Comparati ve Manufactu ring Example 6-4 | N/A3) | | | | | |
| Compara tive Ex-ample 6-5 | Comparati ve Manufactu ring Example 6-5 | 0 | 0.04 | 0.07 | 45 | 23 | 22 |
| Compara tive Example 6-6 | Comparati ve Manufactu ring Example 6-6 | 93 | 0.06 | 0.10 | 51 | 17 | 17 |
| 1) Hardness at 25% compression: Repulsive force when sample is compressed by 25% | | | | | | | |

(continued)

| | Polyether polyol | Conte nt of prima ry alcoh ol (mol %) | Hardness at 25% compressi on1) (kgf/cm2) | Hardness at 50% compressi on2) (kgf/cm2) | Elongat ion (%) | Compres sion set (%) | Repeated compress ion set (%) |
|---|---|---|---|---|---|---|---|
| 2) Hardness at 50% compression: Repulsive force when sample is compressed by 50%<br>3) N/A: The polymerization reaction did not proceed, so no sample was produced. | | | | | | | |

As shown in Tables 12 and 13, it was confirmed that the polyurethane foams of Examples 6-1 to 6-7 produced from the polyether polyol in which the content of primary alcohol was 10 mol% to 90 mol% exhibited significant improvement in mechanical properties such as hardness and elongation, compared to the comparative examples.

Specifically, it was confirmed that, as the content of primary alcohol in the polyether polyol of Comparative Examples 6-1 to 6-3 was less than 10 mol%, reactivity with isocyanate was decreased so that the physical properties of the produced polyurethane foam were decreased. In addition, it was confirmed that, in the case of Comparative Example 6-4, the polymerization reaction did not proceed due to low reactivity with ethylene oxide even if the double-metal cyanide catalyst was used. Further, it was confirmed that, in the case of Comparative Examples 6-5 and 6-6, the physical properties of the produced polyurethane foams were decreased due to a high content of a residual catalyst even if the potassium hydroxide catalyst having high reactivity with ethylene oxide was used.

[Industrial Applicability]

Embodiments can be applied to a polyol composition having excellent reactivity with isocyanate and allowing excellent hardness and appearance quality of polyurethane foam manufactured therefrom, a method of preparing the polyol composition, a composition for preparing polyurethane including the polyol composition, and a battery module including the polyol composition.

## Claims

**1.** A polyol composition, comprising a compound represented by Formula 1 below:

[Formula 1]

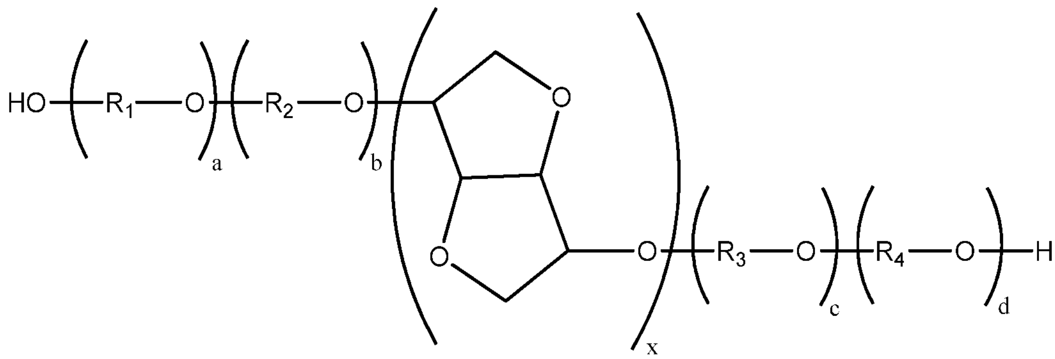

where $R_1$ and $R_4$ are each independently a substituted or unsubstituted linear alkylene group having 2 to 10 carbon atoms,
$R_2$ and $R_3$ are each independently a substituted or unsubstituted branched alkylene group having 3 to 10 carbon atoms,
x is an integer of 1 to 10,
a and d are each independently an integer of 1 to 6,
b and c are each independently an integer of 0 to 30, and
b+c is an integer of 1 to 60.

**2.** The polyol composition according to claim 1, wherein the compound represented by Formula 1 comprises a unit

derived from at least one 1,4:3,6-dianhydrohexitol.

**3.** The polyol composition according to claim 1, wherein $R_1$ and $R_4$ are each independently a substituted or unsubstituted ethylene group.

**4.** The polyol composition according to claim 1, wherein $R_2$ and $R_3$ are each independently a substituted or unsubstituted propylene group.

**5.** The polyol composition according to claim 1, wherein a ratio of (a+d):(b+c) is 1:1.5 to 1:6.

**6.** The polyol composition according to claim 1, wherein the compound represented by Formula 1 is a compound represented by Formula 2 below:

[Formula 2]

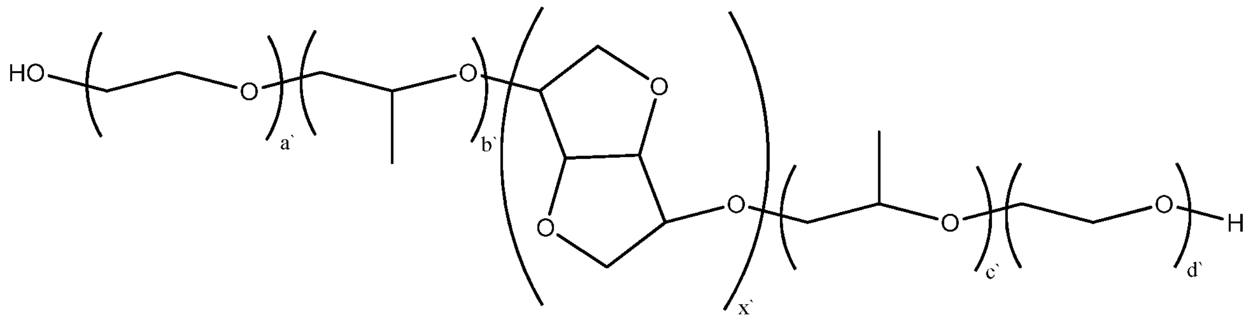

where x' is an integer of 1 to 5,
a' and d' are each independently an integer of 1 to 3, and
b' and c' are each independently an integer of 1 to 18.

**7.** The polyol composition according to claim 1, wherein the polyol composition has an acid value of 0.0005 mgKOH/g to 0.0100 mgKOH/g.

**8.** The polyol composition according to claim 1, wherein the polyol composition has a number average molecular weight (Mn) of 300 g/mol to 12,000 g/mol.

**9.** The polyol composition according to claim 1, wherein the polyol composition has a polydispersity index (PDI) of 1.0 to 1.3.

**10.** A polyol composition, comprising;

a first unit derived from at least one 1,4:3,6-dianhydrohexitol; and
a second unit derived from alkylene oxide,
wherein a degree of unsaturation according to a measurement method below is 0.02 meq/g or less:
<Measurement method>

1) A first flask containing 30 g of the polyol composition and a second flask without the polyol composition are prepared, and 50 ml of mercuric acetate is fed into each of the first flask and the second flask, followed by stirring for 30 minutes.
2) 9 g of sodium bromide (NaBr) is added to each of the first flask and the second flask, followed by stirring for 30 minutes.
3) 0.5 ml of a 1% phenolphthalein indicator is added to each of the first flask and the second flask, followed by titrating with 0.1 N potassium hydroxide (KOH).
4) A degree of unsaturation is calculated according to Equation 1 below:

[Equation 1]

$$\text{Degree of unsaturation (meq/g)} = (V_s \times V_b \times 0.1 \times F) / M$$

where $V_s$ denotes the amount (ml) of 0.1 N potassium hydroxide (KOH) fed into the first flask, $V_b$ denotes the amount (ml) of 0.1 N potassium hydroxide (KOH) fed into the second flask, F denotes the factor of the 0.1 N potassium hydroxide (KOH), and M denotes the weight (g) of the polyol composition fed into the first flask.

**11.** The polyol composition according to claim 10, wherein the 1,4:3,6-dianhydrohexitol comprises isosorbide.

**12.** The polyol composition according to claim 10, wherein the second unit derived from alkylene oxide comprises a substituted or unsubstituted linear alkylene group having 2 to 10 carbon atoms.

**13.** The polyol composition according to claim 10, wherein the polyol composition comprises a compound represented by Formula 3 below:

[Formula 3]

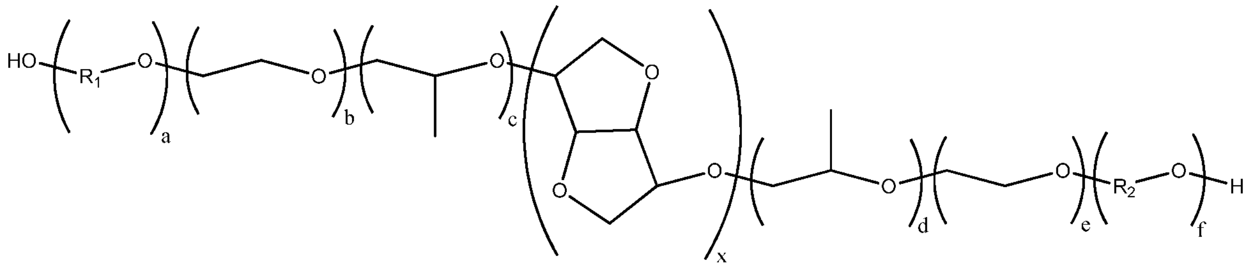

where $R_1$ and $R_2$ are each independently a substituted or unsubstituted alkylene group having 2 to 10 carbon atoms,
a and f are each independently an integer of 1 to 60,
b and e are each independently an integer of 1 to 6,
c and d are each independently an integer of 1 to 30, and
x is an integer of 1 to 5.

**14.** The polyol composition according to claim 13, wherein $R_1$ and $R_2$ in Formula 3 are each independently a substituted or unsubstituted branched alkylene group having 3 to 10 carbon atoms.

**15.** The polyol composition according to claim 13, wherein $R_1$ and $R_2$ in Formula 3 are each independently a polymer where a substituted or unsubstituted linear alkylene group having 2 to 10 carbon atoms, and a substituted or unsubstituted branched alkylene group having 3 to 10 carbon atoms are randomly polymerized.

【FIG. 1】

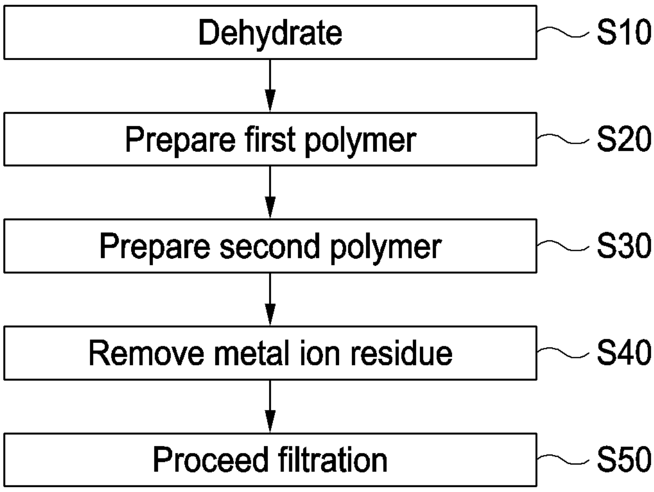
Dehydrate
S10
Prepare first polymer
S20
Prepare second polymer
S30
Remove metal ion residue
S40
Proceed filtration
S50

【FIG. 2】

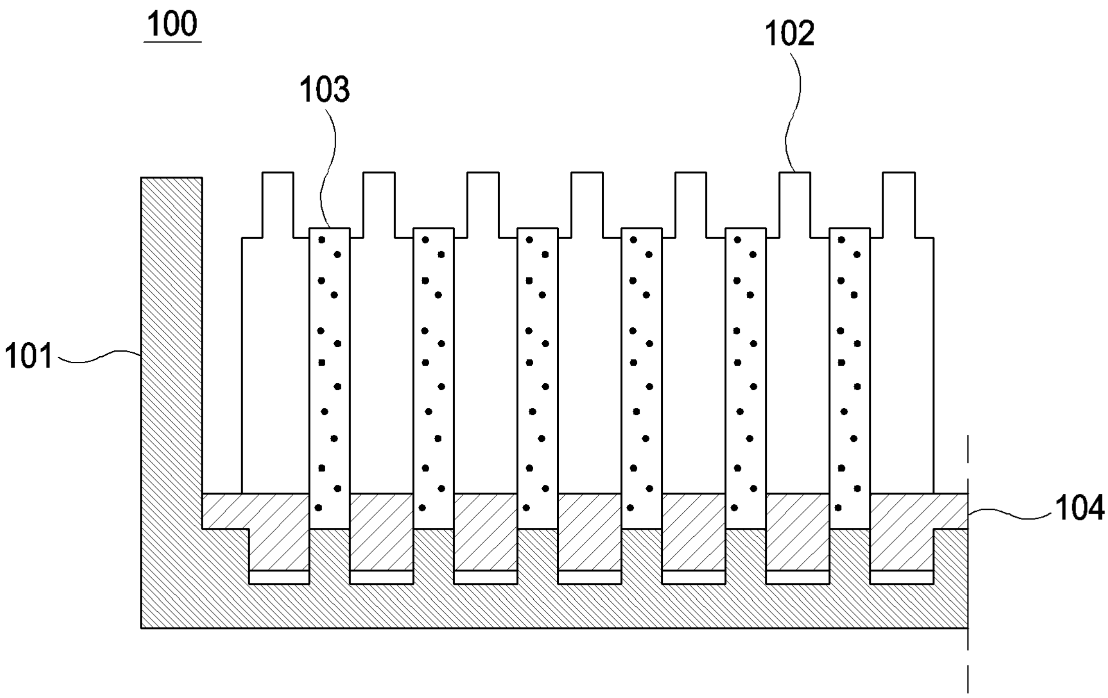
100
102
103
101
104

【FIG. 3】

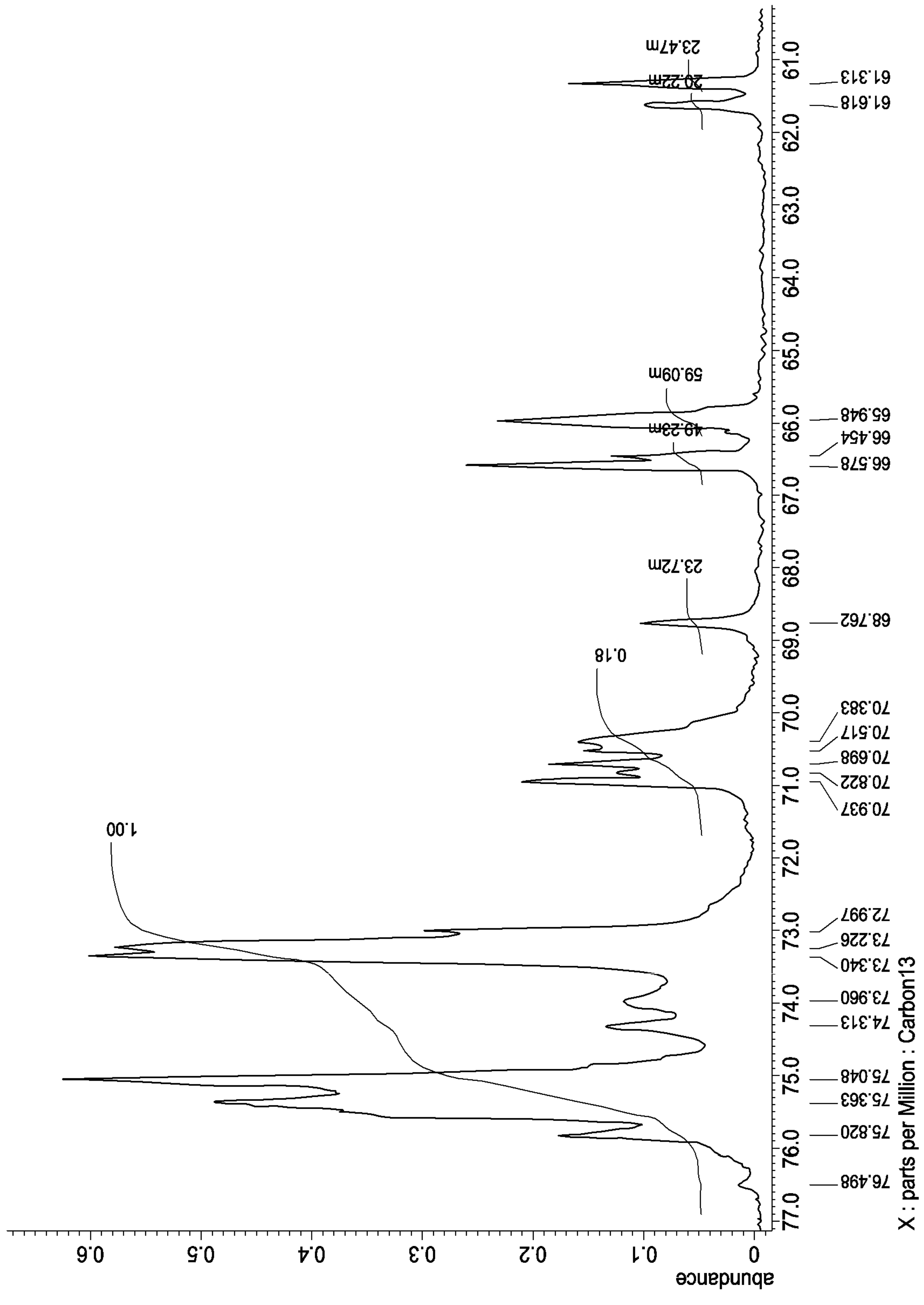
X : parts per Million : Carbon13
abundance
61.313
61.618
65.948
66.454
66.578
68.762
70.383
70.517
70.698
70.822
70.937
72.997
73.226
73.340
73.960
74.313
75.048
75.363
75.820
76.498
23.47m
20.22m
59.09m
49.23m
23.72m
0.18
1.00

【FIG. 4】

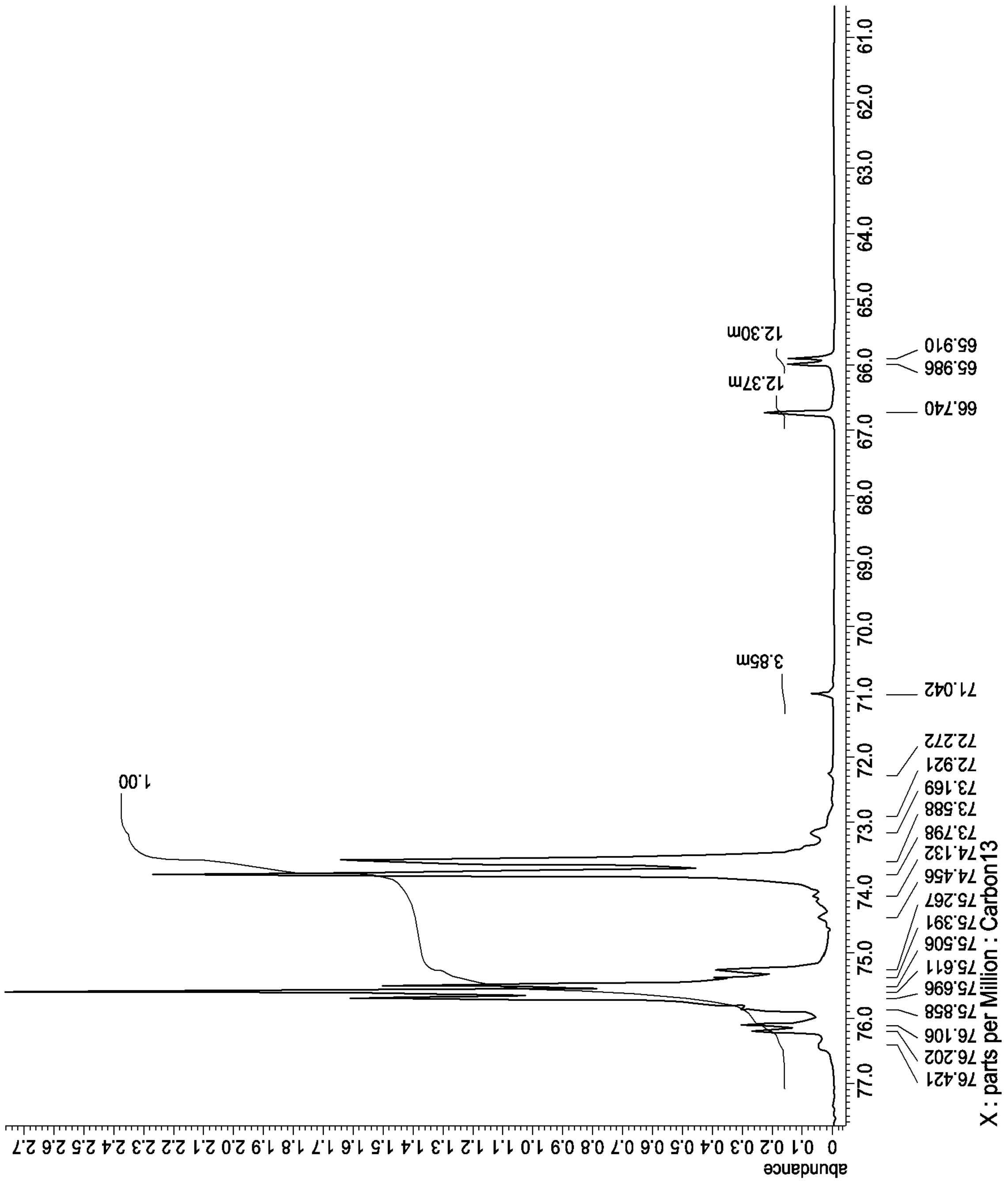

X : parts per Million : Carbon13
abundance
61.0
62.0
63.0
64.0
65.0
66.0
67.0
68.0
69.0
70.0
71.0
72.0
73.0
74.0
75.0
76.0
77.0
65.910
65.986
66.740
71.042
72.272
72.921
73.169
73.588
73.798
74.132
74.456
75.267
75.391
75.506
75.611
75.696
75.858
76.106
76.202
76.421
12.30m
12.37m
3.85m
1.00
0 0.1 0.2 0.3 0.4 0.5 0.6 0.7 0.8 0.9 1.0 1.1 1.2 1.3 1.4 1.5 1.6 1.7 1.8 1.9 2.0 2.1 2.2 2.3 2.4 2.5 2.6 2.7

【FIG. 5】

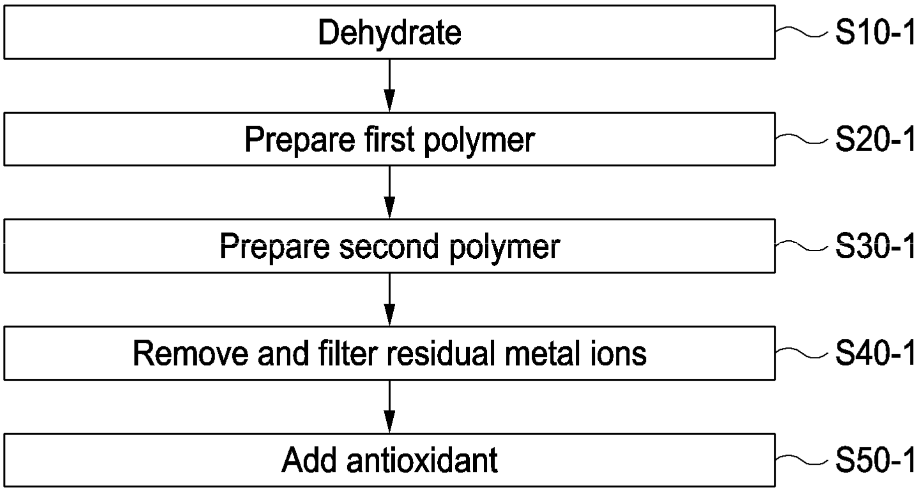


【FIG. 6】

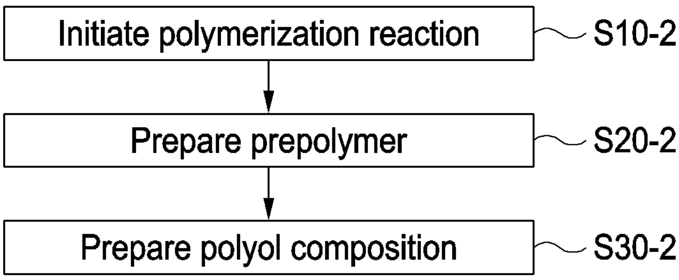


【FIG. 7】

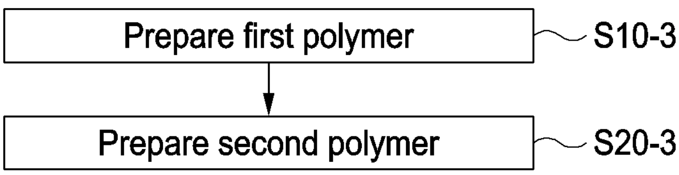

【FIG. 8】

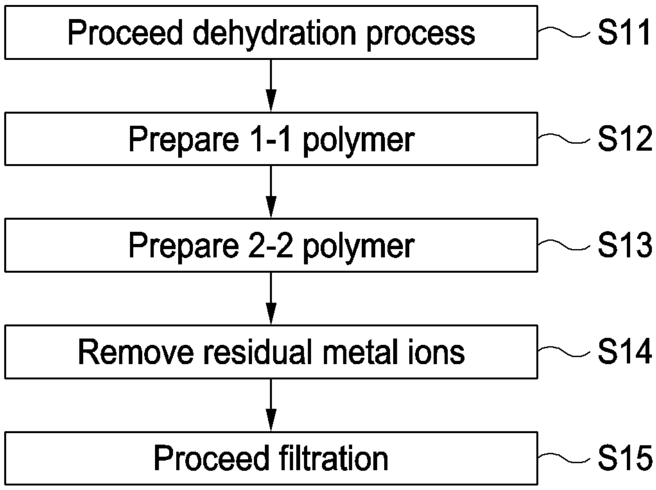
Proceed dehydration process
S11
Prepare 1-1 polymer
S12
Prepare 2-2 polymer
S13
Remove residual metal ions
S14
Proceed filtration
S15

【FIG. 9】

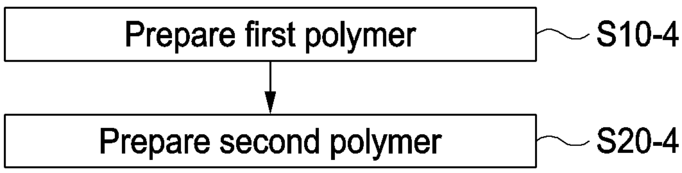
Prepare first polymer
S10-4
Prepare second polymer
S20-4

【FIG. 10】

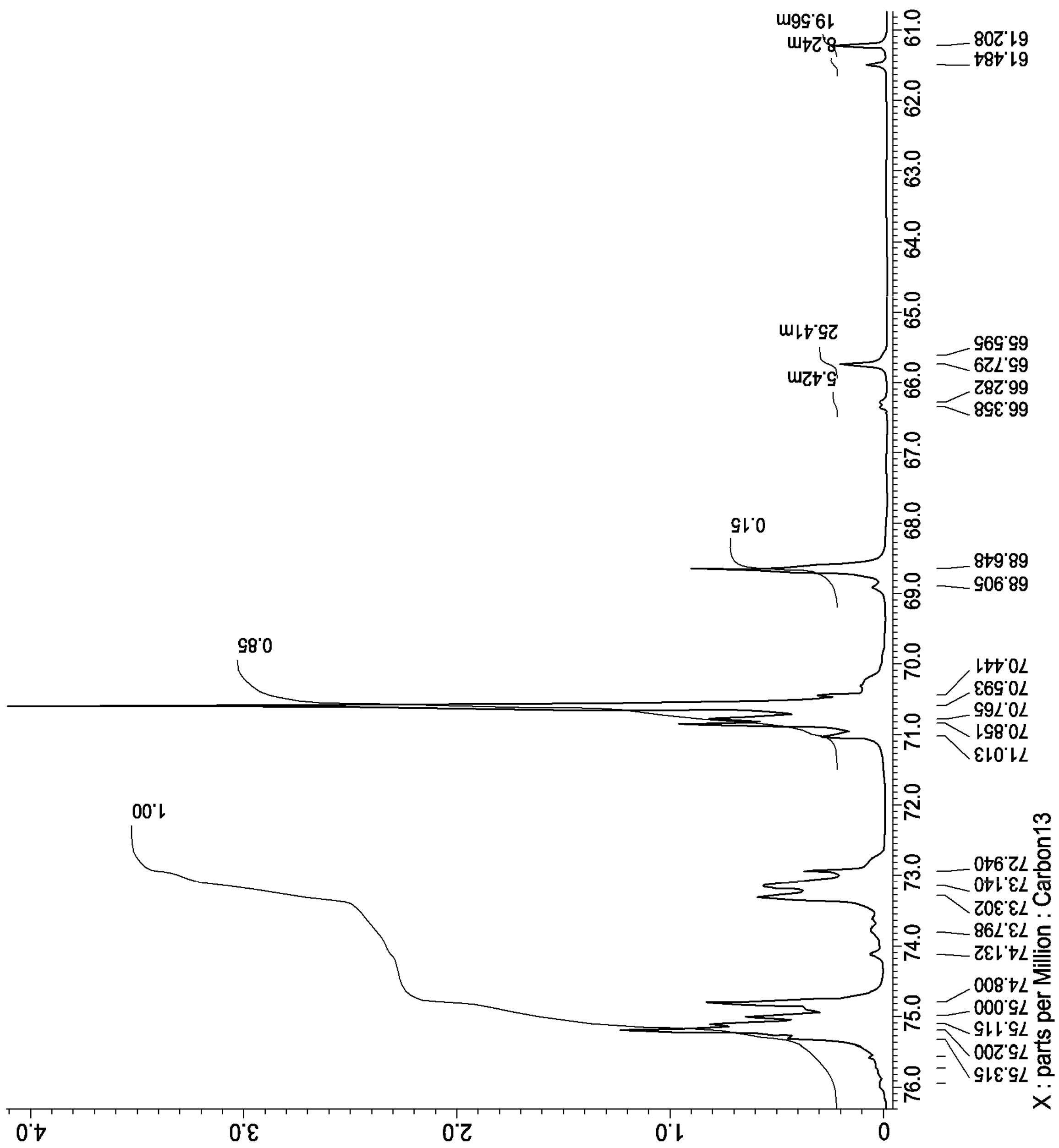

19.56m
8.24m
25.41m
5.42m
0.15
0.85
1.00
61.208
61.484
65.595
65.729
66.282
66.358
68.648
68.905
70.441
70.593
70.765
70.851
71.013
72.940
73.140
73.302
73.798
74.132
74.800
75.000
75.115
75.200
75.315
X : parts per Million : Carbon13
abundance

【FIG. 11】

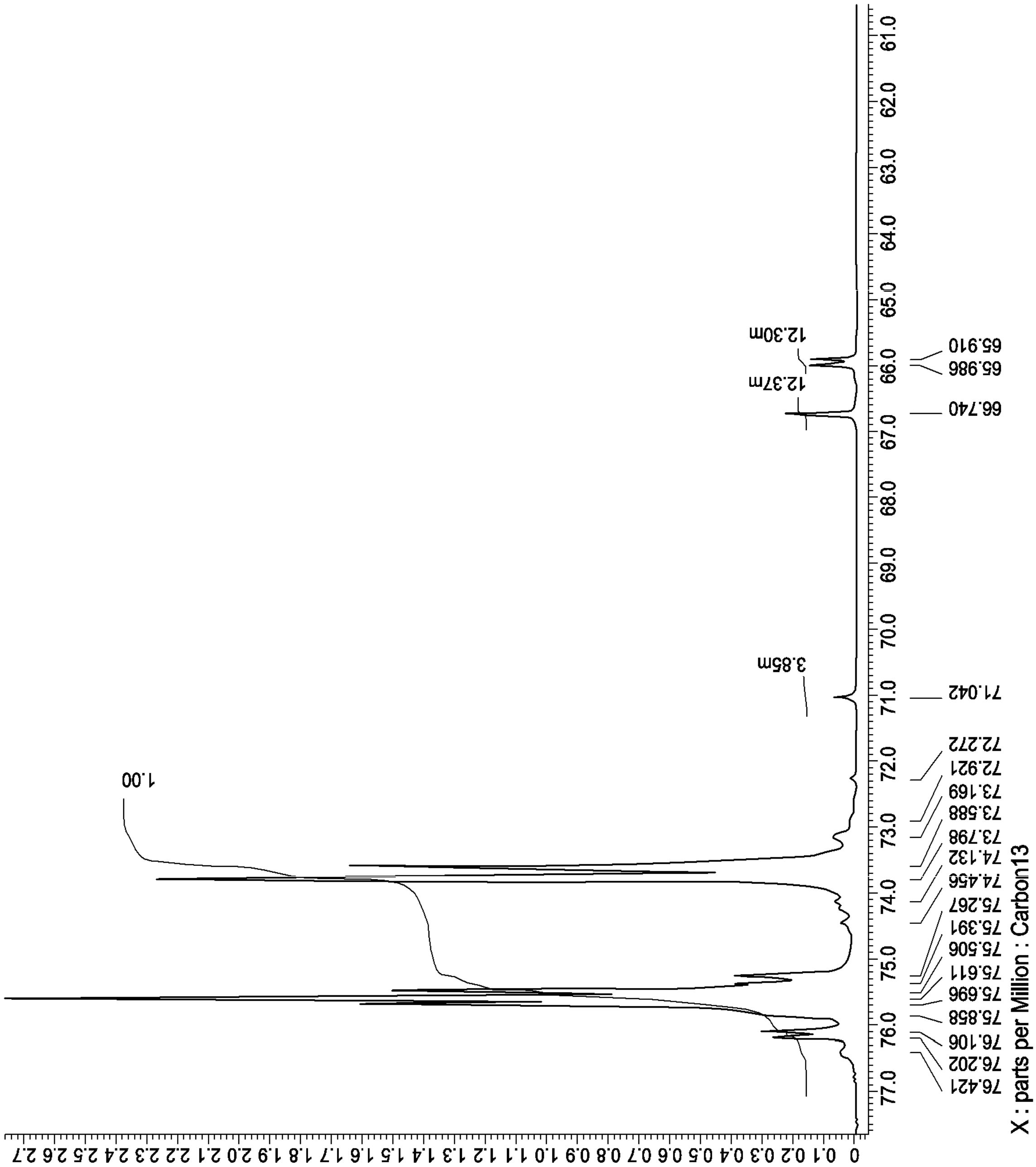
X : parts per Million : Carbon13
65.910
65.986
66.740
71.042
72.272
72.921
73.169
73.588
73.798
74.132
74.456
75.267
75.391
75.506
75.611
75.696
75.858
76.106
76.202
76.421
12.30m
12.37m
3.85m
1.00

## INTERNATIONAL SEARCH REPORT

International application No.
**PCT/KR2023/010766**

### A. CLASSIFICATION OF SUBJECT MATTER

**C08G 18/48**(2006.01)i; **C08G 65/26**(2006.01)i; **H01M 8/2475**(2016.01)i; **C08G 65/30**(2006.01)i; C08G 101/00(2006.01)n

According to International Patent Classification (IPC) or to both national classification and IPC

### B. FIELDS SEARCHED

Minimum documentation searched (classification system followed by classification symbols)

C08G 18/48(2006.01); C07C 41/03(2006.01); C07D 493/04(2006.01); C08G 18/10(2006.01); C08G 18/44(2006.01); C08G 18/66(2006.01); C08G 18/76(2006.01); C08G 65/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 1,4:3,6-디안히드로헥시톨(1,4:3,6-dianhydrohexitol), 폴리올(polyol), 불포화도(degree of unsaturation), 폴리우레탄(polyurethane)

### C. DOCUMENTS CONSIDERED TO BE RELEVANT

| Category* | Citation of document, with indication, where appropriate, of the relevant passages | Relevant to claim No. |
|---|---|---|
| X<br>Y | CN 107226904 A (NANJING TECH UNIVERSITY) 03 October 2017 (2017-10-03)<br>See abstract; claim 1; and paragraphs [0009]-[0010] and [0023]. | 1-9<br>10-15 |
| Y | US 10544158 B1 (COVESTRO LLC) 28 January 2020 (2020-01-28)<br>See claims 1 and 9-10; and paragraphs [0017], [0023] and [0027]. | 10-15 |
| A | JP 2015-209387 A (SANYO CHEM. IND. LTD.) 24 November 2015 (2015-11-24)<br>See entire document. | 1-15 |
| A | KR 10-2020-0139298 A (SAMYANG CORPORATION) 14 December 2020 (2020-12-14)<br>See entire document. | 1-15 |
| A | WO 2018-236192 A1 (SAMYANG CORPORATION) 27 December 2018 (2018-12-27)<br>See entire document. | 1-15 |

☑ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 November 2023** | **09 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.
**PCT/KR2023/010766**

**C. DOCUMENTS CONSIDERED TO BE RELEVANT**

| Category* | Citation of document, with indication, where appropriate, of the relevant passages | Relevant to claim No. |
|---|---|---|
| PX | CN 115677977 A (SHANDONG INOV NEW MATERIAL CO., LTD.) 03 February 2023 (2023-02-03) See claims 1 and 5; and paragraphs [0006]-[0007] and [0023]. | 1-15 |

Form PCT/ISA/210 (second sheet) (July 2022)

**INTERNATIONAL SEARCH REPORT**
**Information on patent family members**

International application No.
**PCT/KR2023/010766**

| Patent document cited in search report | | | Publication date (day/month/year) | Patent family member(s) | | | Publication date (day/month/year) |
|---|---|---|---|---|---|---|---|
| CN | 107226904 | A | 03 October 2017 | None | | | |
| US | 10544158 | B1 | 28 January 2020 | EP | 3708602 | A1 | 16 September 2020 |
| | | | | EP | 3708602 | B1 | 11 January 2023 |
| JP | 2015-209387 | A | 24 November 2015 | None | | | |
| KR | 10-2020-0139298 | A | 14 December 2020 | KR | 10-2199925 | B1 | 11 January 2021 |
| WO | 2018-236192 | A1 | 27 December 2018 | CN | 110799561 | A | 14 February 2020 |
| | | | | CN | 110799561 | B | 11 February 2022 |
| | | | | EP | 3643732 | A1 | 29 April 2020 |
| | | | | EP | 3643732 | A4 | 24 March 2021 |
| | | | | EP | 3981815 | A1 | 13 April 2022 |
| | | | | JP | 2020-524732 | A | 20 August 2020 |
| | | | | JP | 2021-098865 | A | 01 July 2021 |
| | | | | JP | 7008087 | B2 | 10 February 2022 |
| | | | | JP | 7161557 | B2 | 26 October 2022 |
| | | | | US | 11649316 | B2 | 16 May 2023 |
| | | | | US | 2021-0147609 | A1 | 20 May 2021 |
| CN | 115677977 | A | 03 February 2023 | CN | 115677977 | B | 28 April 2023 |